(19) Europäisches Patentamt
European Patent Office
Office européen des brevets

(11) **EP 3 179 420 A1**

(12) **EUROPEAN PATENT APPLICATION**
published in accordance with Art. 153(4) EPC

(43) Date of publication:
**14.06.2017 Bulletin 2017/24**

(21) Application number: **15829451.2**

(22) Date of filing: **04.08.2015**

(51) Int Cl.:
*G06Q 10/06* (2012.01)          *G06Q 50/30* (2012.01)
*G08G 1/00* (2006.01)

(86) International application number:
**PCT/CN2015/086075**

(87) International publication number:
**WO 2016/019857 (11.02.2016 Gazette 2016/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority:
04.08.2014 CN 201410379713
13.08.2014 CN 201410397679
19.08.2014 CN 201410409108
20.08.2014 CN 201410413040
22.08.2014 CN 201410418423
25.08.2014 CN 201410421805
29.08.2014 CN 201410437102
27.11.2014 CN 201410705608
15.01.2015 CN 201510020526
08.04.2015 CN 201510163063

(71) Applicant: **Beijing Didi Infinity Technology and
Development Co., Ltd.
Beijing 100193 (CN)**

(72) Inventors:
• **HU, Zhilin**
**Beijing 100193 (CN)**
• **LIU, Zhangxun**
**Beijing 100193 (CN)**
• **FENG, Pengcheng**
**Beijing 100193 (CN)**
• **CUI, Wei**
**Beijing 100193 (CN)**
• **WANG, Wei**
**Beijing 100193 (CN)**
• **ZHANG, Lingyu**
**Beijing 100193 (CN)**
• **LIU, Ying**
**Beijing 100193 (CN)**
• **LUO, Wen**
**Beijing 100193 (CN)**
• **HU, Tao**
**Beijing 100193 (CN)**

(74) Representative: **Gosnall, Toby
Barker Brettell LLP
100 Hagley Road
Edgbaston
Birmingham
B16 8QQ (GB)**

(54) **SERVICE DISTRIBUTION SYSTEM AND METHOD**

(57)    A service distribution system and method are provided. The system comprises: a receiving module configured to receive information relating to service provision from a service provider and information relating to a service request from a service user, a storage module configured to store the information relating to the service provision and the service request, and a processing module configured to process the information relating to the service provision and the service request to obtain a feature result. If the feature result satisfies at least one criterion, the information relating to the service request is determined to be sent to the service provider. Alternatively, if the feature result does not satisfy the at least one criterion, the information relating to the service request is not be sent to the service provider. The information relating to the service request may include at least two geographic locations.

EP 3 179 420 A1

FIG. 1

**Description**

**CROSS-REFERENCE TO RELATED APPLICATIONS**

The application claims priority to Chinese Patent Application No. 201410379713.3, filed on August 4, 2014; Chinese Patent Application No. 201410397679.2, filed on August 13, 2014; Chinese Patent Application No. 201410409108.6, filed on August 19, 2014; Chinese Patent Application No. 201410413040.9, filed on August 20, 2014; Chinese Patent Application No. 201410418423.5, filed on August 22, 2014; Chinese Patent Application No. 201410421805.3, filed on August 25, 2014; Chinese Patent Application No.201410437102.X, filed on August 29, 2014; Chinese Patent Application No. 201410705608.4, filed on November 27, 2014; Chinese Patent Application No. 201510020526.0, filed on January 15, 2015; Chinese Patent Application No. 201510163063.3, filed on April 8, 2015; the entire contents of each of which are hereby incorporated by reference.

**TECHNICAL FIELD**

The present disclosure generally relates to the field of services, and more particularly, to a method and system for distributing orders to service providers.

**BACKGROUND**

Due to the popularity of smart devices, particularly smart positioning devices, smart navigation devices and smartphones can bring great convenience to people. Meanwhile, the new big data system and cloud computing system also bring great new changes to people's lifestyles.

Big data refers to datasets that are too large or complex to be adequately processed by traditional data processing applications. With the rapid development of communication technology and with the positioning services being implemented on personal terminals and becoming more intelligent, people are generating a plenty of privatized and personalized information. The information may include current locations, service demands, current activities, historical locations, historical service types, historical activities, or the like. Since the information is multi-dimensional, complex in structure, and involves a great amount of data, the information constitutes big data that is impossible to be processed using traditional manual processing methods.

The development and applications of the above technologies bring new revolutions to the field of service and give rise to new service types. For example, with the development of cities, people have become accustomed to transportation services based on mobile smart devices. For another example, demands for food or goods delivery services based on positioning information are common in daily life. In some scenarios, due to problems such as ambiguity of service types, imbalance of request information, provision information between service users and service providers, unsmooth communications between service users and service providers, or the like, the promptness and accuracy of collecting and acquiring service request information by the service providers may be negatively affected. Thus, appropriate service request information may not be assigned to the service provider.

**SUMMARY**

In one aspect of the present disclosure, a system configured to distribute orders is provided. The system may include a receiving module, a storage module, and a processing module. The receiving module may be configured to receive information relating to service provision from a service provider and information relating to a service request from a service user. The information relating to the service provision may include current information relating to the service provider. The storage module may be configured to store the information relating to the service provision and information relating to the service request received by the receiving module. The processing module may be configured to process the information relating to the service provision and information relating to the service request stored in the storage module to obtain a feature result. In some embodiments, in response to determining that the feature result satisfies at least one criterion, the information relating to the service request may be determined to be sent to the service provider. Alternatively, in response to determining that the feature result does not satisfy any of the at least one criterion, the information relating to the service request may be determined not to be sent to the service provider. The information relating to the service request may include two geographic locations. The geographic location may include a departure location and a destination.

In some embodiments, the order distribution system may further include an output module. The output module may be configured to provide the service provider with the information relating to the service request when the information relating to the service request is determined to be sent to the service provider.

In some embodiments, the current information relating to the service provider in the order distribution system may include positioning and motion information relating to the service provider.

In some embodiments, the positioning and motion information relating to the service provider in the order distribution system may include location information relating to the service provider.

In some embodiments, the positioning and motion information relating to the service provider in the order distribution system may include speed information relating to the service provider.

In some embodiments, the speed information relating to the service provider in the order distribution system may include a direction of motion of the service provider.

In some embodiments, the receiving module in the order distribution system may be further configured to receive information from an information source.

In some embodiments, the at least one criterion in the order distribution system may be selected from at least one of: a parameter that indicates a response to the service request by the service provider; a parameter that indicates an activity of the service provider; a range of services provided by the service provider; at least two distances between a location of a resident place of the service provider to the at least two geographic locations. Each of the at least two distances may be a distance between the location of a resident place of the service provider and one of the at least two geographic locations; or an angle between the direction of motion of the service provider and the vector formed by the at least two geographic locations.

In some embodiments, the processing module may further be configured to assign a score to the information relating to the service request.

In some embodiments, the output module may further be configured to send the score to the service provider after the service provider completes the service request.

In another aspect of the present disclosure, a method for distributing orders is provided. The method may include the following steps: receiving information relating to service provision from a service provider and information relating to a service request from a service user; storing the information relating to service provision and the information relating to the service request; and processing the information relating to service provision and the information relating to service request in order to obtain a feature result. In some embodiments, the information relating to the service provision may include current information relating to the service provider. In some embodiments, in response to determining that the feature result satisfies at least one criterion, the information relating to service request may be determined to be sent to the service provider. Alternatively, in response to determining that the feature result does not satisfy any criterion, the information relating to service request may be determined not to be sent to the service provider. The information relating to the service request may include two geographic locations including a departure location and a destination.

## BRIEF DESCRIPTION OF THE DRAWINGS

The present disclosure is further described in terms of schematic embodiments. These schematic embodiments are described in detail with reference to the drawings. The drawings are not to scale. These embodiments are non-limiting schematic embodiments, in which like reference numerals represent similar structures throughout the several views of the drawings, and wherein:

FIG. 1 is a schematic block diagram illustrating a service distribution system for service providers according to some embodiments of the present disclosure.

FIG. 2 is a schematic block diagram illustrating a receiving module according to one embodiment of the present disclosure.

FIG. 3 is a schematic block diagram illustrating a processing module according to one embodiment of the present disclosure.

FIG. 4 is a schematic block diagram illustrating a criteria storage unit according to one embodiment of the present disclosure.

FIG. 5a is a flow chart illustrating an example of a process for implementing a service distribution system according to some embodiments of the present disclosure.

FIG. 5b is a flow chart illustrating an example of a process for implementing a service distribution system based on external information according to some embodiments of the present disclosure.

FIG. 6 is a flow chart illustrating an example of a process for acquiring resident place information of a service provider according to some embodiments of the present disclosure.

FIG. 7 is a flow chart illustrating an example of a process for determining a resident place of a driver by the processing module 130 according to some embodiments of the present disclosure.

FIG. 8 is a schematic diagram illustrating an example of noise elimination of candidate resident places by the processing module 130 according to some embodiments of the present disclosure.

FIG. 9 is a flow chart illustrating an example of a process for acquiring a busy period of a service provider 30y according to some embodiments of the present disclosure.

FIG. 10 is a flow chart illustrating an example of a process for pre-processing address information according to some embodiments of the present disclosure.

FIG. 11 is a flow chart illustrating an example of a process for adapting the address information of a point of interest (POI) according to some embodiments of the present disclosure.

FIG. 12 is a flow chart illustrating an example of a process for abbreviating address information according to some embodiments of the present disclosure.

FIG. 13 is a flow chart illustrating an example of a process for obtaining an order by auction according to some embodiments of the present disclosure.

FIG. 14 is a flow chart illustrating an example of a process of scoring according to some embodiments of the present disclosure.

FIG. 15 is a flow chart illustrating an example of a process for determining a drive-out hitchhiking by the processing module according to some embodiments of the present disclosure.

FIG. 16 is a flow chart illustrating an example of a process for determining a drive-in hitchhiking by the processing module 130 according to some embodiments of the present disclosure.

FIG. 17a is a flow chart illustrating an example of a process for determining the activity of a driver by the processing module 130 according to some embodiments of the present disclosure.

FIG. 18 is a flow chart illustrating an example of a process for determining a road obstacle by the processing module130 according to some embodiments of the present disclosure.

FIG. 19 is a schematic diagram illustrating an example of a process for determining whether two road sections have intersections according to some embodiments of the present disclosure.

FIG. 20 is a schematic diagram of determining whether two road sections have intersections according to some embodiments of the present disclosure.

FIG. 21 is a schematic diagram of determining whether two road sections have intersections according to some embodiments of the present disclosure.

FIG. 22 is a flow chart illustrating an example of a process for determining a similar route order according to some embodiments of the present disclosure.

FIG. 23 is a schematic diagram illustrating a driving direction of a driver and a direction of an order according to some embodiments of the present disclosure.

FIG. 24 is a flow chart illustrating an example of a process for determining and displaying a similar route order by the processing module 130 according to some embodiments of the present disclosure.

FIG. 25 is a flow chart illustrating a method of processing an order by the processing module 130 according to some embodiments of the present disclosure.

FIG. 26 is a flow chart illustrating a method of processing orders according to some embodiments of the present disclosure.

FIG. 27 is a flow chart illustrating an example of a process for generating a vector representative of an order snatching probability according to some embodiments of the present disclosure.

FIG. 28 is a flow chart illustrating an example of a process for determining a target restaurant according to some embodiments of the present disclosure.

FIG. 29 is a flow chart illustrating an example of a process for determining a target courier according to some embodiments of the present disclosure.

## DETAILED DESCRIPTION

In order to illustrate the technical solutions related to the embodiments of the present disclosure, brief introduction of the drawings referred to in the description of the embodiments is provided below. Obviously, drawings described below are only some examples or embodiments of the present disclosure. Those having ordinary skills in the art, without further creative efforts, may apply the present disclosure to other similar scenarios according to these drawings. It should be understood that the exemplary embodiments are provided merely for better comprehension and application of the present disclosure by those skilled in the art, and not intended to limit the scope of the present disclosure.

Some modules of the system may be referred to in various ways according to some embodiments of the present disclosure. However, any amount of different modules may be used and operated in a client terminal and/or a server. These modules are intended to be illustrative, not intended to limit the scope of the present disclosure. Different modules may be used in different aspects of the system and method.

According to some embodiments of the present disclosure, flow charts are used to illustrate the operations performed by the system. It is to be expressly understood, the operations above or below may or may not be implemented in order. Conversely, the operations may be performed in inverted order, or simultaneously. Besides, one or more other operations may be added to the flow charts, or one or more operations may be omitted from the flow chart.

The term "service," "order," and "service order" in the present disclosure are used interchangeably to refer to a specific task or assignment fulfilled or performed by an individual or an entity for other individuals or entities. The task or assignment may be an object (e.g., food, beverages, etc.) or an activity (e.g., haircut, hitchhiking, house cleaning, beauty therapy, clothes cleaning, etc.). The term "user" and "service user" may be used interchangeably to refer to an individual or an entity that requests or orders a particular service. Also, the term "supplier," "provider" and "service provider" may be used interchangeably to refer to an individual or an entity that can provide service to a "user" or a "service user." For example, a citizen can order fresh fruits from a fruit retailer online. Herein, the system may communicate with both the citizen and the fruit retailer simultaneously. The system may obtain information relating to the service request and the service provision to assign the service. In some embodiments, the service types take taxi service or other transportation service as examples. Herein, the driver of a taxi, a taxi company, an individual that possesses a vehicle, or other individuals or entities that provide similar vehicle services may be considered as the service provider. An individual that requests for a taxi or a vehicle service may be considered as the service user. In some embodiments, the service types takes food delivery service as examples. Herein, an individual, a store, a restaurant, or the like that can provide food or beverages may be considered as the service provider. An individual, a group, or the like that requests for a food order or a beverage order may be considered as the service user. However, it may be understood that the examples are not intended to limit the scope of service, service user, service provider, or the like in the present disclosure. Any tangible or intangible service between an individual or an entity and another individual or another entity may not depart the scope of the term "service" of the present disclosure.

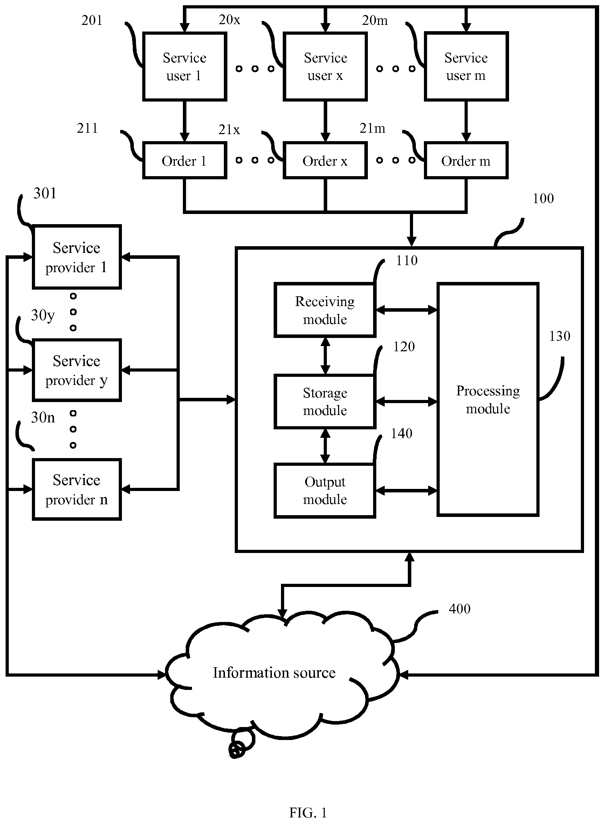

The components and structure of system 100 described in the present disclosure may be introduced from the angle of different modules according to FIG. 1.

FIG. 1 is a schematic block diagram illustrating a service distribution system 100 for service providers according to some embodiments of the present disclosure. The system 100 may include a receiving module110, a storage module 120, a processing module 130, and an output module 140. Modules in the system 100 may be connected via one or more wired and/or wireless communication links. Each of the modules may be local or remote, and may connect with other modules through a network. The corresponding relationship between modules may be one-to-one, one-to-many (e.g., a processing module 130 may connect with multiple receiving modules 110), or many-to-many (e.g., multiple receiving modules 110 exchange information with multiple storage modules).

In some embodiments, one or more of the storage module 120 and the output module 140 may be omitted from system 100 to implement various applications. For example, for service distribution systems which only depend on real-time information, the storage module 120 may be omitted without affecting the operation of the whole system. As another example, for service distribution systems that perform information calculation and processing only in background, the output module 140 may be omitted. The examples described above are merely for the purposes of illustration. A person with ordinary skill in the art may improve and modify the configurations of the storage module 120 and output module 140. However, those improvements and modifications may not depart from the spirit and scope of the present disclosure.

The system 100 may obtain information from one or more service users (201-20m). The system 100 may also obtain information from one or more service providers (301-30n) at the same time. More particularly, for example, the information from the service user may include but is not limited to the order information (211-21m) relating to the service user. In addition, the system may obtain information from information source 400.

The service user (201-20m) may refer to any user that can request a specific service at particular location(s) and/or time(s). The service provider (301-30m) may refer to any service provider that can provide a specific service at particular location(s) and/or time(s). For example, the service user (201-20m) may be an individual that requests a vehicle service, an individual that requests a fruit, an individual that requests a meal, an individual or an entity that requests goods transportation, or the like. The service provider (301-30m) may be a taxi driver, a chauffeur, a fruit retailer, a food service provider, a courier, or the like.

The information source 400 may include any source that can provide information to the system 100. The information source 400 may be used to store information relating to a service. The information may include geographic information, weather conditions, traffic information, legal and regulatory information, news events, life information, life guide information, reviews for service providers, profile information of service providers, profile information of service users, or the like. The information source 400 may be implemented using a single central server, multiple servers connected through the Internet, multiple personal devices, etc. In some embodiments in which the information source is implemented using multiple personal devices, the personal devices can generate content (e.g., also referred to as "user-generated content") to implement the information source. For example, the personal devices can generate user-generated content by uploading text, voice, image and video frame to a cloud server. As such, an information source may be generated by the multiple personal devices and the cloud server.

More particularly, for example, for a transportation service, the information source 400 may be a municipal services system including map information and city service information, a real-time traffic broadcasting system, a weather broadcasting system, a news network, databases including historical ordering information, or the like. The information source 400 may be a physical device, such as common speed measuring systems and sensors, including a vehicle speedometer, a radar speedometer, a temperature and humidity sensor, etc. The information source 400 may be a source acquiring news, real-time road information, etc. For example, the information source may be a network information source, which may include but is not limited to Internet news group based on Usenet, servers on the Internet, weather information servers, road condition information servers, or the like. More particularly, for example, for food delivery services, the information source 400 may be a system that stores information of numerous food service providers in a certain region, a municipal services system including map information and city service information, a real-time traffic broadcasting system, a weather broadcasting system, a news network, servers including historical food ordering information. The examples described herein is not intended to limit the scope of an information source or type of services that can be used in various embodiments of the present disclosure. Instead, the present disclosure may be suitable for other types of services. Any device or network which can provide information relating to the services may be designated as an information source.

The receiving module 110 may obtain information from the service user (201-20m), the service provider (301-30m), and the information source 400. The receiving module 110 may also send the information to the processing module 130. The information may be acquired via one or more wired or wireless connections. The information may be acquired by acquiring or inquiring information from service users and service providers. The information may also be acquired from the information source 400, through a subscription or push notifications.

The information acquired or inquired from service users and service providers may include but is not limited to information relating to the service users, information relating to the service providers or information relating to the service. The information relating to the service may include but is not limited to service types, service provision methods, service payment methods, tips or rewards or a service time limit. The service types may include taxi service, personal car service, car sharing, express delivery, food delivery, goods delivery, parking, advertisement, laundry, maintenance, entertainment, performances, etc. The service provision methods may include door-to-door service, delivery, providing authorized use of objects (including rental devices and/or equipment), etc. The service payment methods may include cash transaction, online payment, wire transfer, etc. The service time limit may include real-time services, reservation services, etc.

The information acquired through the subscription or the push notifications from the information source may include but is not limited to profile information, physiology information, historical relevant information, information relating to historical service provision, historical service requesting information, schedule information or other information of the service users and/or the service providers. The profile information of service users and/or service providers may include age, gender, nationality, current address, ethnic group, religious belief, educational attainment, work experience, marital status, emotional states, language proficiencies, professional skills, political tendencies, hobbies, favorite music/TV shows/movies/books, etc. The physiology information of service users and/or service providers may include height, weight, waistline, bustline, hipline, BMI index, vital capacity, eyesight, whether the service provider or service user is color weakness/color blindness, medical history, family history of genetic disease, etc. The historical relevant information of the service users and/or the service providers may include driver license information, driving records (e.g., driving while intoxicated), criminal records, credit records, etc. The information relating to historical service provision information of the service provider may include time and place of historical services, service frequency, service types, service reviews, and service results. The historical service requesting information of service user may include time and place of historical services, the frequency of receiving services, content of received service, the result of received service, and service suggestions or reviews. The schedule information may include flight schedules, train schedules, public transportation schedules, ship schedules, other transportation schedules, etc. The other information may include environmental parameters, road conditions, weather conditions, natural disaster, geographic or geological information, information relating to food and beverage, cultural or ethnic information, belief information, social activities and other emergencies. The environmental parameters may include temperature, humidity, air pressure, altitude, UV intensity, wind speed and direction, etc. The road conditions may include road types, width, throughput, traffic flow, road congestion, whether there is an accident or construction, whether a road is slippery or frozen, etc. The weather conditions may include precipitation probability, heliometric index, UV intensity, air quality index, fine particulate matter/PM2.5, inhalable particles/PM10, forest fireproofing grade, visibility, rain, snow, fog, haze, hail, etc. The natural disasters may include geological disaster index, typhoon, tornado, debris flow, landslide, earthquake, volcanic eruption, tsunami, etc. The geographic or geological information may include time zone, climatic zone, monsoon zone, geologic zone, seismic zone, volcanos, soil type, etc. The information relating to food and beverage may include nutrient, calories, source or origin, processing methods, etc. The cultural or ethnic information may include cultural circles, customs, ethnic groups, etc. The belief information may include mainstream religious belief and main religious venues. The social activities may include strike, sports event, holiday parade, rally, demonstrations, riot, etc.

The storage module 120 may be configured to store criteria that are used by the processing module 130 to perform operations or judgments on the information obtained by the receiving module 110. The storage module 120 may be further configured to output the criteria to the processing module 130. The storage module 120 may include one or more storing devices of any kind. The information stored in the one or more storing devices may be accessed by the processing module 130. The storing devices may include but are not limited to common types of storage devices such as solid-state storage device (e.g., solid state disk, hybrid hard disk, etc.), mechanical hard disk, USB flash memory, memory stick, memory card (example.g.CF, SD, etc.), other drivers (e.g.CD, DVD, HD DVD, Blu-ray, etc.), random access memory (RAM), and read-only memory (ROM). The RAM may include but is not limited to dekatron, selectron, delay line memory, Williams tubes, dynamic random access memory (DRAM), static random access memory (SRAM), thyristor random access memory (T-RAM), zero capacitor random access memory (Z-RAM), etc. The ROM may include but is not limited to bubble memory, twistor memory, film memory, plated wire memory, magnetic-core memory, drum memory, CD-ROM, hard disks, tapes, non-volatile random access memory (NVRAM), phase-change memory, magneto-resistive random access memory, ferroelectric random access memory, non-volatile SRAM, flash memory, electrically erasable programmable read-only memory, erasable programmable read-only memory, programmable read-only memory, mask ROM, floating gate random access memory, Nano random access memory, racetrack memory, resistive random access memory, programmable metallization unit, etc. The storage devices mentioned above are described merely for illustration purposes, and are not intended to limit the scope of the types of the storage devices that can be used in various embodiments of the present disclosure.

In some embodiments, the storage module 120 may be used to buffer information relating to bidirectional interactions between the receiving module 110 and the processing module 130. The storage module 120 may also be used to store historical information relating to orders and other information used in processing module 130, such as historical road conditions and historical weather data.

The processing module 130 may obtain information from the receiving module 110 and process the information to obtain one or more determination results. The process performed by the processing module 130 may be a logic operation, (e.g., an "AND" operation, an "OR" operation, a "NOT" operation, etc.), a numeric operation, etc. The processing module 130 may include one or more processors (e.g., hardware processors). The processors may include any processor such as a programmable logic device (PLD), an application special integrated circuit (ASIC), a microprocessor, a system-on-a-chip (SoC), etc.

The output module 140 may be configured to obtain the decision-making results from the processing module 130 and output the determination results (e.g., by pushing the results to the service providers, outputting the results to a third party, etc.). For example, one or more servers of an information service provider may store the decision-making results and may publish the results. The determination results may or may not be published periodically. The servers may also provide the determination results when the service provider acquires and/or inquire about the results. The method determination results may be outputted and/or pushed via one or more wireless or wired communication connections.

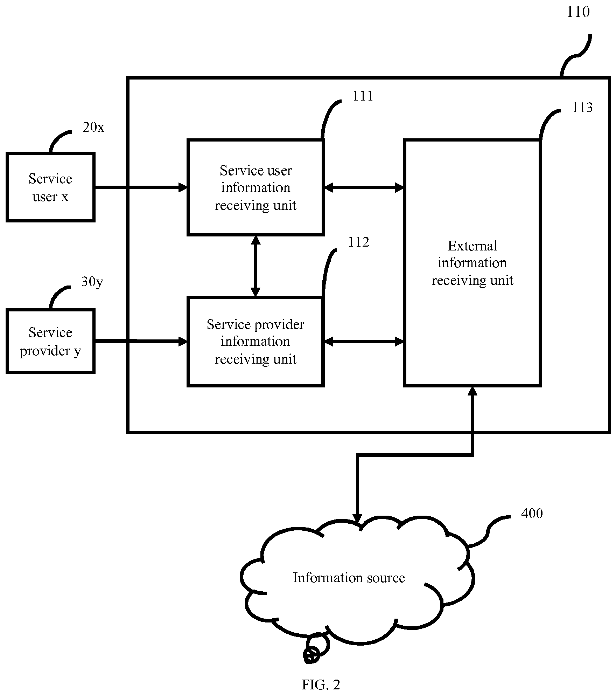

FIG. 2 is a schematic block diagram illustrating the receiving module 110 according to one embodiment of the present disclosure. In some embodiments, the receiving module 110 may include a service user information receiving unit 111, a service provider information receiving unit 112, and an external information receiving unit 113. Any two of these units may communicate with each other bidirectionally. The service user information receiving unit 111 may receive information from the service user 20x. The service provider information receiving unit 112 may receive information from the service provider 30y. The external information receiving unit 113 may receive information from the information source 400.

Communication between the service user information receiving unit 111 and the service user 20x, communication between the service provider information receiving unit 112 and the service provider 30y, and communication between the external information receiving unit 113 and the information source 400 may be based on the same or different types of communication modes. The types of communication modes can be wired or wireless. Herein, wireless communication may include but is not limited to IEEE 802.11 series standards, IEEE 802.15 series standards, 1st-generation mobile communication technology (1G), 2nd-generation mobile communication technology (2G), general packet radio service (GPRS), 3rd-generation mobile communication technology (3G), 4th-generation mobile communication technology (4G), satellite communication technology (e.g., GPS technology, etc.) and other technologies utilizing ISM Band (e.g. 2.4GHz, etc.). The IEEE 802.15 series standards may include Bluetooth™ technology, Zigbee technology, etc. The 2G technology may include FDMA, TDMA, SDMA, CDMA, SSMA, etc. The 3G technology may include CDMA2000, WCDMA, TD-SCDMA, WiMAX, etc. The 4G technology may include TD-LTE, FDD-LTE, etc. Wireless communication may include free-space optical communication technology, acoustic communication technology, or electromagnetic induction communication technology. The free-space optical communication technology may include visible light communication, infrared ray communication, etc. The acoustic communication technology may include sonic wave communication, ultrasonic wave communication, etc. The electromagnetic induction communication technology may include near field communication, etc. The above examples are merely for the purposes of illustration. Media for wireless communication may include other types, such as Z-wave technology, other chargeable civilian radio frequency band, military radio frequency band, etc. The media of wired communication may include metal cable, optical cable, hybrid cable, etc. For example, the cables may include coaxial cable, telecommunication cable, flexible cable, spiral cable, non-metallic sheathed cable, metallic sheathed cable, multi-core cable, twisted pair cable, ribbon cable, shielded cable, duplex cable, parallel dual-core wire and twisted pair wire.

Information acquired by the service user information receiving unit 111 from the service user 20x, information acquired by the service provider information receiving unit 112 from the service provider 30y, and information acquired by the external information receiving unit 113 from the information source 400 are described above and will not be further described.

While the receiving module 110 is divided into three units as described above, this is merely illustrative. It would be obvious for a person of ordinary skill in the art that any two or all of the three sub-units can be integrated into one component. For example, the service user information receiving unit 111 and the service provider information receiving unit 112 can be integrated into one component that may be configured to collect real-time information generated by the service users and/or the service providers. Additionally or alternatively, the external information receiving module 113 can be implemented on another electronic component that may be configured to receive external information and historical service information. All other improvements and modifications recognized by a person of ordinary skill in the art are within the scope of protection of the present disclosure.

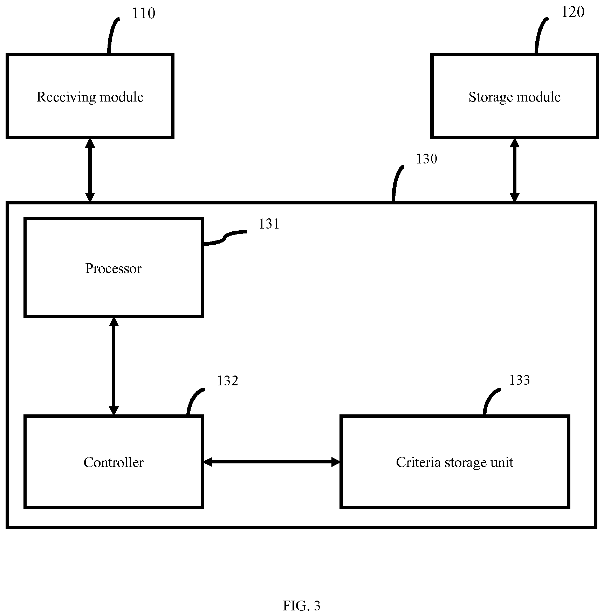

FIG. 3 is a schematic block diagram illustrating the processing module 130 according to one embodiment of the present disclosure. In some embodiments, the processing module 130 may include a processor 131, a controller 132, and a criteria storage unit 133. In some embodiments, communications between two or more components of the processing module 130 can be bidirectional. For example, the processor 131 may communicate bidirectionally with the controller 132 and the criteria storage unit 133 may communicate bidirectionally with the controller 132. The processing module 130 may communicate bidirectionally with the receiving module 110 and the storage module 120. The processor 131 may be configured to perform a decision-making with respect to a particular order and output at least one decision-making result based on criteria information stored in the criteria storage unit 133 and information received from the receiving module 110 and/or the storage module 120. The controller 132 may be configured to control the processor 131 and the criteria storage unit 133 to ensure that the processor performs the decision-making correctly. The criteria storage unit 133 may be configured to store criteria information relating to judging conditions. The criteria information may be used to perform the decision-making process. The criteria information can be acquired from a local device, the receiving module 110, the information source 400, etc. When a service order initiated by a service user and information from a particular service provider are determined to satisfy a particular criterion, the system may determine to distribute the order to the service provider. Alternatively, the system may determine that the order is not to be distributed to the service provider in response to determining that the service provider does not satisfy a criterion or criteria. The criteria storage unit 133 will be further described in more detail below.

The processor, the controller, and the criteria storage unit are described above with respect to their general functions. In some implementations, a hardware device (e.g., ASIC, a microprocessor or any other device or equipment which is capable of processing information and performing logical judgement) can be configured to perform one or more of the functions of the processor, the controller, and/or the criteria storage unit, without departing from the scope of protection of the present disclosure.

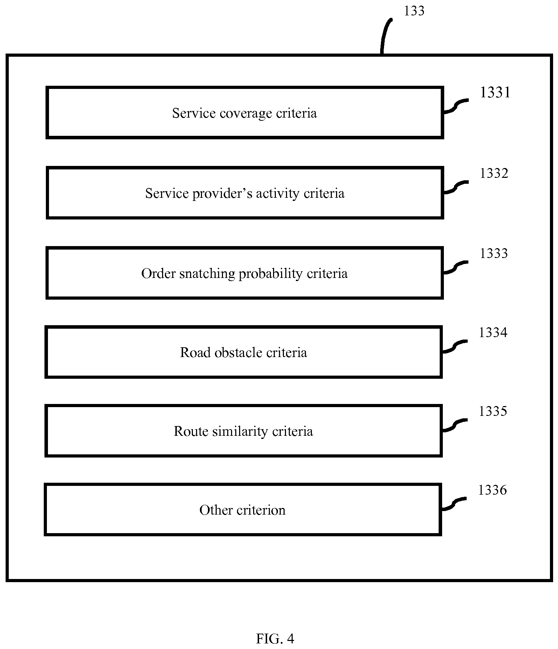

FIG. 4 is a schematic block diagram illustrating the criteria storage unit 133 according to one embodiment of the present disclosure. In some embodiments, the criteria storage unit 133 may include service coverage criteria 1331, service provider's activity criteria 1332, order snatching probability criteria 1333, road obstacle criteria 1334, route similarity criteria 1335, and other criterion 1336. The above criteria may correspond to the respective judgments, such as service coverage decision-making, service provider's activity decision-making, order snatching probability decision-making, road obstacle decision-making, route similarity decision-making and other decision-making. The decision-making may be performed by the controller 132.

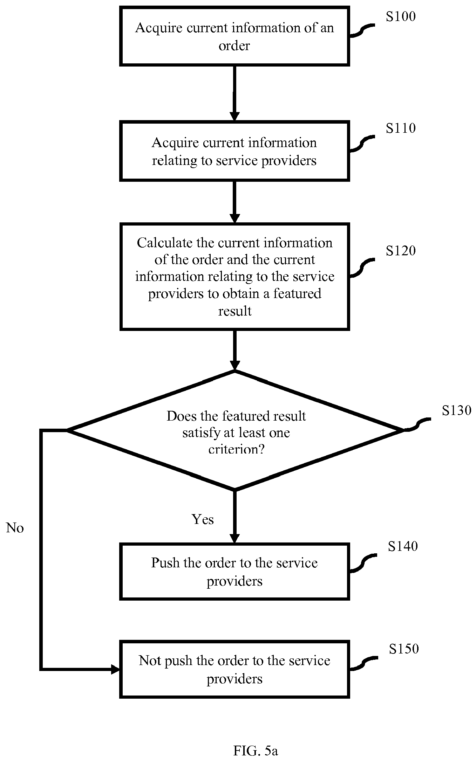

FIG. 5a is a flow chart illustrating an example of a process for implementing a service distribution system. In some embodiments, in step S100, the receiving module 110 may obtain order information from the service user 20x. In step S110, the receiving module 110 may obtain current information relating to a service provider (e.g., a driver) from the service provider 30y. In step S120, the processing module 130 may calculate and/or analyze the current order information and/or the current information relating to the service provider (e.g., the driver) to obtain a feature result. In step S130, the processing module 130 may determine whether the feature result satisfies at least one of preset criteria stored in the criteria storage unit 133. In some embodiments, in response to determining that the feature result satisfies one or more criteria stored in the criteria storage unit 133, the system may proceed to step S140 and may distribute the order to the service provider 30y. Alternatively, in response to determining that the feature result does not satisfy a criterion stored in the criteria storage unit 133, the system may proceed to step S150 and may determine that the order is not to be distributed to the service provider 30y.

The determination may be made in step S130 based on multiple criteria. The multiple criteria may be used for the determination based on one or more parallel processing methods, serial processing methods, and/or any processing method. For example, in some embodiments in which the determination is made based on a parallel processing method, the system may conclude the process and may determine that the order is not to be distributed to the service provider in response to determining that the feature result does not satisfy at least one of the criteria. As another example, in some embodiments in which the determination is made based on parallel processing, the system may distribute the order to the service provider and may conclude the process in response to determining that the feature result satisfies at least one of the multiple criteria.

In some embodiments, the determination may be made in step S130 using an integrated decision-making process that involves scoring based on multiple criteria. For example, the system can assign different weights to different criteria and can calculate an integrated score based on the weighted criteria. In some embodiments, the integrated score may be compared with a preset threshold to obtain a decision-making result.

The determination may be made by selecting one or more decision-making results determined by the system using an optimization method. For example, the system can identify multiple service providers as candidate service providers. The system may further choose one or more criteria to make the determination. The system can filter the candidate service providers based on the chosen criteria until one or more optimized service providers are selected.

More particularly, for example, the feature result may be generated according to service requesting information and information from the service user and the service provider. The generated feature result may be compared with criteria stored in the criteria storage unit 133 by the processing module. The comparison may be made, for example, by comparing a characteristic value in the feature result with a threshold in the criteria, determining whether the characteristic value is in a range of values in the criteria, ranking and/or rating the characteristic value based on a ranking rule/rating rule in the criteria and comparing with a threshold rank and/or a threshold score, determining whether the feature result triggers a certain event defined by the criteria, determining whether the feature result satisfies a certain mode in the criteria, etc.

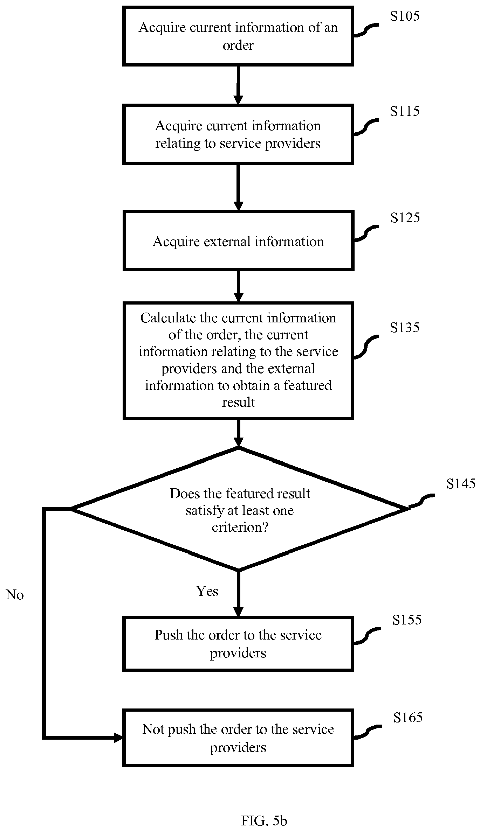

FIG. 5b is a flow chart illustrating an example of a process for implementing a service distribution system based on external information according to some embodiments of the present disclosure. In some embodiments, in step S105, the receiving module 110 may obtain order information from the service user 20x. In step S115, the receiving module 110 may obtain current information relating to the service provider 30y from the service provider 30y. In step S125, the receiving module 110 may obtain information from the external information source 400. In step S135, the processing module 130 may calculate and analyze the current order information, the current information relating to service provider 30y, and the external information to obtain a feature result. In step S145, the processing module 130 may determine whether the feature result satisfies at least one of the preset criteria stored in the criteria storage module 133. In some embodiments, in response to determining that the feature result satisfies one or more criteria stored in the criteria storage module 133, the system may proceed to step S155, assigning the order to the service provider 30y. Alternatively, in response to determining that the feature result does not satisfy any criterion stored in the criteria storage module 133, the system may proceed to step S165 and does not assign the order to the service provider 30y.

The service distribution system may obtain sufficient information relating to the service user and match the information relating to the service user with the information relating to the service provider.

The information relating to the service user may include positioning and motion information, a current physical/health status, a current mental status, preferences for service providers, preferences for service type or content, or the like of the service user.

Herein, the positioning and the motion information may include but is not limited to a current location, a current motion status, a current direction of motion, a current speed, a current activity status, or the like. The current physical/health status may include but is not limited to "hunger," "fullness," "illness," a blood pressure, a pulse, a heart rhythm, a body temperature, an electrocardiogram, a brainwave, a respiratory rate, a blood sugar level, a blood oxygen saturation, or the like. The preference for a service provider may include but is not limited to an expectation on or a preference for the service provider's personal information, work experience, skills, beliefs or political tendencies. The preference for service type or content may include but is not limited to payment method, home delivery service, delivery speed, promptness of pickup, or the like.

The information relating to the service provider may include positioning and motion information, current physical/health status, current mental status, operating information, preference for service user, or the like of the service provider.

The positioning and motion information may include but is not limited to a current location, a current motion status, a current direction of motion, a current speed, a current activity status, or the like. The current physical/ health status may include but is not limited to "hunger," "fullness," "illness," a blood pressure, a pulse, a heart rhythm, a body temperature, an electrocardiogram, a brainwave, a respiratory rate, a blood sugar level, a blood oxygen saturation, or the like. The operating information may include but is not limited to a current operating status, current service types, business hours, service coverage, a resident place, customer, a service mode, etc. The preference for a service user may include but is not limited to a preference for the service user's personal information, cultural/educational/professional information, skills, or the like.

One or more pieces of the information relating to the service user or the service provider may be used in the process of matching.

Mining of Information Relating to Service User

More particularly, for example, the information relating to the service user may include positioning and motion information, a current physical/health status, a current mental status, a preference for service provider, a preference for service type or content, or the like of the service user.

Herein, the positioning and the motion information may include but are not limited to a current location, a current motion status, a current direction of motion, a current speed, a current activity status, or the like. The current physical/health status may include but is not limited to "hunger," "fullness," "illness," a blood pressure, a pulse, a heart rhythm, a body temperature, an electrocardiogram, a brainwave, a respiratory rate, a blood sugar level, a blood oxygen saturation, or the like. The preference for a service provider may include but is not limited to an expectation on or a preference for the service provider's personal information, work experience, skills, beliefs or political tendencies. The preference for service type or content may include but is not limited to payment method, home delivery service, delivery speed, promptness of pickup, or the like.

The information described above may be collected by multiple smart devices or special measuring devices. For example, the information relating to location or motion may be collected by a device that is capable of positioning. The information relating to health and physiology may be collected by a smart wearable device with multiple sensors or medical devices. The information relating to mental status, the expectation on the service provider, and expectation on service type or content may be collected by the service user's input of the information using a smart device in the form of text, voice, image, or other types.

Mining of Service Preference of Service User

Generally, when requesting a service, a service user may have preferences for service provider(s), service content, or service type(s). Sometimes, the service content does not have to be unique. Instead, the service content may be substituted. However, the service user may still have some personal preferences for the homogeneous service that only differs in types. Thus, mining these preferences may help achieve a service distribution system that is more efficient, more targeted and more personalized.

For example, preferences of a service user that requests for a transportation service may include but are not limited to requirements or preferences for a service provider's (a driver's) personal information, work experience, skills, beliefs or political tendencies. Herein, the personal information may include but is not limited to gender, age, marital status, emotional state, educational attainment, or the like. The work experience may include but is not limited to a driver's driving experience, types of driver license, performance in driving test, types of vehicle driven, driving records (e.g., records of accidents, records of traffic violations, etc.), passenger reviews, or the like. The skills may include but are not limited to hobbies, language proficiencies, sports specialty, or the like. The belief and political tendencies may include but are not limited to a driver's religious belief, political tendencies, party information, social groups participated, or the like. Additionally or alternatively, a service user that requests the transportation service may have some requirements or preferences for service content or type. The requirements or preferences may include but are not limited to requirements or preferences for vehicle performance or content of the transportation service. The requirements or preferences for vehicle performance may include but are not limited to a vehicle's brand, type, maximum speed, acceleration time, fuel consumption, horsepower, maximum acceleration, displacement, emission standard, or the like. The requirements or preferences for content of the transportation service may include but are not limited to requirements for pickup by a driver, transportation service experience, etc. Preferably, a service user's preferences for a service provider may include the service provider's work experience and skills. The work experience and skills may include a service provider's driving experience and language proficiencies. For example, a Brazilian visitor in Berlin may prefer a driver having basic listening and speaking skills in Portuguese.

As another example, preferences of a service user that requests for a food delivery service may include but are not limited to preferences for a service provider (restaurant and/or delivery personnel) or food. Herein, the preferences for the service provider (restaurant and/or delivery personnel) may include but are not limited to preferences for restaurant operating experience, delivery speed, work experience or peer reviews of the delivery personnel, etc. The restaurant operating experience may include but is not limited to an opening time, a scope of business, sanitary conditions, health violations, customer reviews, etc. Herein, the preferences for food may include but are not limited to requirements on types of cuisine, preferences for flavors, preferences for nutritional values of food, requirements or preferences for food safety levels, etc. The flavors may include "sour," "sweet," "bitter," "salty," "fresh," etc. The nutritional values of food may include but are not limited to calories, indexes of main nutrients such as carbohydrates, fat, protein, minerals, vitamins, etc. The food safety levels may include genetically modified food, organic food, green food, etc.

As another example, preferences of a service user that requests for a laundry service may include preferences for service providers and/or service types. Herein, the service user's preferences for the service provider may include but are not limited to the service provider's work information, customer reviews, or the like. The work information relating to the service provider may include business hours, work experience or professional qualifications. Herein, the preferences for service types may include but are not limited to methods of washing clothes (e.g., hand wash, dry clean, machine wash, etc.), methods of drying clothes (e.g., centrifuge dewatering, tumble dry, air dry, etc.), or the like.

The examples above are described merely for illustration purposes and not intended to limit the meanings of preference in the present disclosure. Any information relating to a service user's tendency for service may not depart the scope of preference in the present disclosure.

The preferences of a service user may be mined from the service user's historical service information. The historical service information may include the service provider's personal information, work experience, skills, beliefs, political tendencies, or the like. The historical service information may also include specific information relating to a service type or content. All the information may be obtained and analyzed by the processing module 130.

For example, historical service information relating to transportation services may include but is not limited to a service provider's (e.g., a driver's) personal information, work experience, skills, beliefs or political tendencies. Herein, the personal information may include but is not limited to gender, age, marital status, emotional state, educational attainment, or the like. The work experience may include but is not limited to a driver's driving experience, types of driver licenses, performance in driving test, types of driven vehicles, driving records (e.g., records of accidents, records of traffic violations, etc.), passenger reviews, or the like. The skills may include but are not limited to hobbies, language proficiencies, sports specialties, or the like. The belief and political tendencies may include but are not limited to the driver's religious belief, political tendencies, party information, social groups participated, or the like. Additionally or alternatively, the historical transportation service may include information relating to service content or type. The information may include but is not limited to vehicle performance and content of the transportation service. The vehicle performance may include but is not limited to vehicle's brand, type, a maximum speed, acceleration time, fuel consumption, horsepower, maximum acceleration, displacement, emission standard, or the like. The content of the transportation service may include but is not limited to information relating to pickup, transportation service experience, or the like.

As another example, historical service information relating to food delivery services may include but is not limited to information relating to a service provider (restaurant and/or delivery personnel) and food. Herein, the information relating to the service provider (restaurant and/or delivery personnel) may include but is not limited to restaurant operating experience, delivery speed, work experience, or peer reviews of the delivery personnel. The restaurant operating experience may include but is not limited to an opening time, a scope of a business, sanitary conditions, health violations or customer reviews. Herein, the information relating to food may include but is not limited to types, flavors, nutritional values of food, food safety levels, etc. The flavors may include "sour," "sweet," "bitter," "salty," "fresh," etc. The nutritional values of food may include but are not limited to calories, indexes of main nutrients such as carbohydrates, fat, protein, minerals, vitamins, etc. The food safety levels may include genetically modified food, organic food, green food, etc.

As another example, historical service information relating to the laundry service may include but is not limited to information relating to service providers and information relating to service types. Herein, information relating to a service provider may include but is not limited to the service provider's work information, customer reviews, or the like. The work information relating to the service provider may include business hours, work experience or professional qualification. Herein, the information of service type may include but is not limited to methods of washing clothes (e.g., hand wash, dry clean, machine wash, etc.) and methods of drying clothes (e.g., centrifuge dewatering, tumble dry, air dry, etc.).

For example, possible preferences of an individual for food types, flavors, price, delivery speed, or the like, may be mined from the historical information relating to food ordering of the individual. More particularly, for example, preferences of an individual for food types, flavors, a price, delivery speed may be obtained by collecting food ordering records of the individual in a particular time period, calculating the total number of the historical food orders, and performing a statistical analysis of information related to food types, flavors, a price and delivery speed in each of the food ordering records. The particular time period may be one year, half year, or one month.

Although preferences of individuals may be obviously different, there are some group features. In some embodiments, possible preferences of a service user may be predicted by classifying and analyzing the service user's demography information, profile information, etc.

For example, possible preferences of a current service user may be predicted according to mainstream or common preferences of the same group of people in the data of historical service orders. The groups may be classified based on a variety of parameters or properties. The parameters or properties may include but are not limited to personal information, cultural/educational/professional information, physical information, belief and political tendencies, or the like. Herein, the personal information may include age, gender, nationality, hometown or current address. The cultural/educational/professional information may include educational attainment, alma maters, cultural circle, occupation, or employer. The physical information may include health condition, figure, blood type, height, or weight. The belief and political tendencies may include religious belief or political tendencies.

In some embodiments, possible preferences of the current service user may be predicted according to personal information. Herein, the personal information may include age, gender, nationality, or hometown.

In some embodiments, possible preferences of the current service user may be predicted according to cultural, educational, or professional information. The cultural/educational/professional information may include educational attainment, degree, attended/graduated high school, attended/graduated university, major, cultural circle, occupation, industry, professional level, employer, working years, or the like.

In some embodiments, possible preferences of the current service user may be predicted according to physical information. The physical information may include health conditions, height, weight, figure, eyesight, blood type, or the like.

In some embodiments, possible preferences of the current service user may be predicted according to beliefs or political tendencies. The beliefs or political tendencies may include religion, religious sect, religious years, duties, political partisans, advocated political camp.

One or more of the above information may be combined to determine or predict possible preferences of the current service user. For example, the personal information and the cultural/educational/professional information may be combined to predict the preferences accurately.

For example, in some embodiments in which the main food types in food orders of Chinese overseas students in New York are found to be Sichuan cuisine and Cantonese cuisine by mining information relating to historical service orders, the service distribution system 100 may preferentially push an order of a service user to restaurants which provide Sichuan cuisine and/or Cantonese cuisine in New York City in response to determining that the service user is from Chongqing (a city of China) and is a Ph.D. candidate at the City University of New York after analyzing the service user's personal information from the receiving module.

Mining of Information Relating to Service Provider

More particularly, for example, information relating to a service provider may include the service provider's positioning and motion information, a current physical/health status, a current mental status, operating information, preferences for a service user, or the like.

Herein, the positioning and motion information may include but is not limited to a current location, a current motion status, a current direction of motion, a current speed, a current activity status, or the like. The current physical/health status may include but is not limited to "hunger," "fullness," "illness," a blood pressure, a pulse, a heart rhythm, a body temperature, an electrocardiogram, a brainwave, a respiratory rate, a blood sugar level, a blood oxygen saturation, or the like. The operating information may include but is not limited to current operating status, current service types, business hours, service coverage, resident place, customer, or service mode. The preferences for a service user may include but are not limited to preferences for the service user's personal information, cultural/educational/professional information, skills, or the like.

Preferably, information from the service provider may include real-time information relating to the service provider. The real-time information relating to the service provider may further include a current location, a current motion status, a current speed, and/or a current operating status.

Preferably, information from the service provider may include current physical status of the service provider. The current physical status of the service provider may further include a current heart rhythm, a blood pressure, a body temperature, an electrocardiogram, a brainwave, a blood sugar level, a blood oxygen saturation, or the like.

The above information may be collected by various smart devices or special measuring devices. For example, the information related to location or motion may be collected by a device that is capable of positioning. The information related to health and physiology may be collected by a smart wearable device with multiple sensors or medical devices. The information related to a mental status, a current operating status, and preferences for the service user may be collected by the service provider's inputting the information into a smart device in the form of text, voice, images, or other types. The information related to mental status, current operating status, and preferences for the service user may also be acquired by analyzing historical data.

Preferably, information relating to the service provider, such as a current location, a current motion status or a current speed, may be collected by a positioning device that is capable of providing geolocation information. The positioning device may further include but is not limited to a smartphone, a tablet computer, a vehicle GPS, a navigator, or the like. The positioning device may further obtain information relating to a current location, a current motion status and a current speed using a positioning technique. The positioning technique may be one of a global positioning system (GPS) technology, a global navigation satellite system (GLONASS) technology, a BeiDou navigation system technology, a Galileo positioning system (Galileo) technology, a quasi-zenith satellite system (QZSS) technology, a base station positioning technology, a Wi-Fi positioning technology, various positioning and speed measuring systems integrated in the vehicle, or the like.

Preferably, a physical status of the service provider may be collected by a device with built-in sensors. The built-in sensors of the device may include but are not limited to one or more photoelectric sensors, blood pressure sensors, electrocardio signal sensors, body temperature sensors, heat flux sensors, pulse wave sensors, bioelectricity sensors, three-dimensional motion sensors, or the like. The device may further include but is not limited to a smart wearable device, an electrocardiogram device, or electroencephalography. The smart wearable device may further include but is not limited to a smartwatch, a smart wristband, a smart helmet, smart clothes, smart glasses, or a health patch.

Determination of Service Coverage and Resident Place (Likely Geographic Locations)

A service coverage of a service provider may be an important feature of the service provider. Generally, the service coverage may refer to a geographic area in which the service provider is willing to provide services. Service providers in different industries may have different service coverages. For example, a taxi driver may regard main districts of a particular city as being his or her service coverage. A food service provider that provides take-out services may provide delivery service only in a few blocks. Correspondingly, the few blocks may constitute the service coverage of the food service provider.

A resident place and/or a likely geographic location may also be important features for location-related services. The resident place may refer to a location in which a person or an entity frequently appears, or has stayed for a long time. For example, a resident place of a driver may be a home address or a lunch place of the driver. The resident place for a food service provider or a housekeeping service provider may be a business place of the provider or the individual.

The service coverage and/or the resident place of the service provider may be acquired by mining historical service information. In some embodiments in which the historical service information includes location information relating to the service, the service distribution system 100 may obtain information relating to the service coverage and/or resident place of the service provider by collecting the location information in the various historical service information. The historical service information may include location information relating to services, such as a departure location and/or a destination of a transportation service, a departure location and/or a destination of a food delivery service, a home address, a business site, and/or a service place of a housekeeping service provider, or the like.

The method and process of mining resident place information will be described in more detail in the following embodiments.

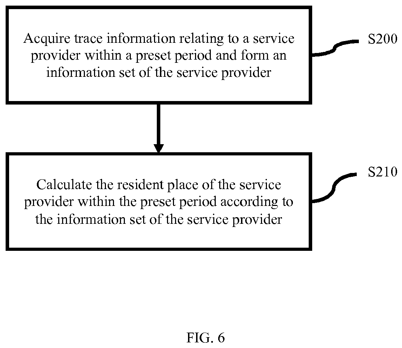

FIG. 6 is a flow chart illustrating an example of a process for acquiring resident place information of a service provider according to some embodiments of the present disclosure.

In some embodiments, resident place information of a service provider may include information provided by the service provider 30y. For example, home address information of the service provider, work address information of the service provider, and resident place information of the service provider may be recorded in an account of the service provider linked to the system. The resident place information of the service provider may also be acquired by a computing device that mines and analyzes the service provider's historical locations.

In some embodiments, mining of the resident place information may be based on historical locations and trajectories of the service provider 30y. More particularly, for example, the mining of the resident place information may include the following steps:

In step S200, locus information of a service provider 30y within a preset period may be acquired. The acquired information may form an information set of the service provider 30y.

The preset period may be a week, a month, a quarter, half a year, a year, or a longer or shorter period. The specific period may be any suitable period of time. Generally, a longer period may result in a more accurate calculation. However, a longer period may require much larger computational load and storage space.

In step S210, a resident place of the service provider 30y within the preset period may be calculated according to the formed information set.

The information set of the service provider 30y may be an information set about a variety of parameters of the service provider 30y. The parameter may include but is not limited to an identification (ID) of the service provider, a time of the report (e.g., a timestamp), a location of the service provider 30y (e.g., longitude and latitude coordinates), and optionally, dwell time at the corresponding location. Other parameters may also be included in the information set. For example, the activities performed by the service provider 30y at the corresponding location may be included in the set.

In some embodiments, the dwell time of the service provider 30y at a location does not have to be provided to the system explicitly. However, the system may calculate the dwell time according to a variety of information records about the driver.

Based on the information set of the service provider 30y, the calculation of the resident place of the service provider 30y may include acquiring some candidate places first. Then the candidate places may be analyzed to acquire a final resident place.

One or more clustering algorithms may be used to acquire the candidate resident places and the final resident place. The clustering algorithm(s) may customize a particular distance and a particular time period. Then longitude and latitude information within a particular distance and a particular time period may be classified into a resident density region of a service provider automatically according to the longitude-latitude information and the dwell time in the information set of the service provider 30y.

For example, a Dbscan algorithm may be used to calculate the resident place of the service provider 30y. However, it should be understood that algorithms used to calculate the resident place of the service provider 30y may not be limited to a Dbscan algorithm. The algorithms may also include: a partitioning method such as K-means, K-medoids, CLARA (Clustering LARge Application), CLARANS (Clustering Large Application based upon RANdomized Search), FCM, etc.; a hierarchical method such as BIRCH (Balanced Iterative Reducing And Clustering using Hierarchies), binary-positive method, rough clustering of Sequential data (RCOSD), etc.; a density-based method such as OPTICS (Ordering Points To Identify The Clustering Structure), etc.; a network-based method such as STING (Statistical Information Grid), CLIQUE (Clustering In QUEst) ,Wave-Cluster, etc.; and a model-based method, such as Cobweb, CLASSIT, etc.

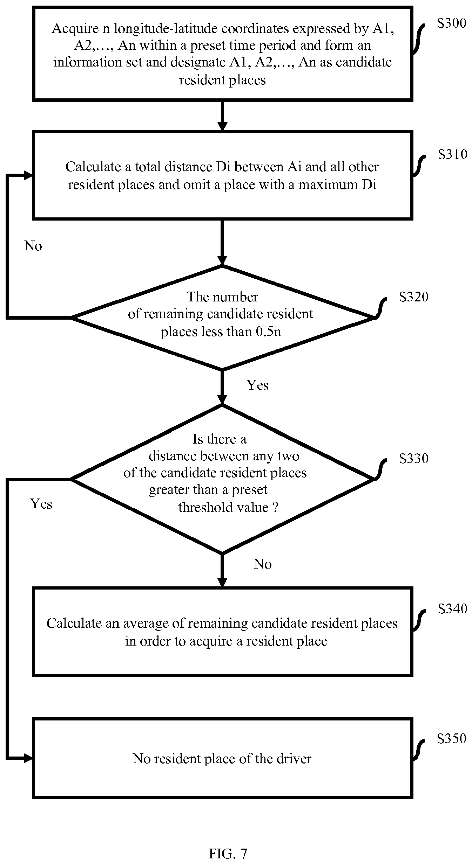

FIG. 7 is a flow chart illustrating an example of a process for determining a resident place of a driver by the processing module 130 for a transportation service according to some embodiments of the present disclosure. In step S300, a time period T may be predetermined. Locus information of a driver within the preset time period T may be acquired. The acquired information may form an information set of the driver. The information set of the driver may include one or more pairs of longitude-latitude coordinates. Each pair of longitude-latitude coordinates may be designated as a candidate resident place of the driver. The candidate resident places may be expressed as A1, A2, ..., An.

In some embodiments, a smart device does not have to acquire the location of the driver and upload the location data at any time. Instead, the acquisition and the uploading operations may be performed only when the driver turns on or turns off the positioning function of the smart device. In this case, the candidate resident place may be the first and/or the last location uploaded every day by the smart device of the driver. For example, if a driver turns on the positioning function of the smart device when the driver leaves home and turns off it when he comes back, the first location and the last location may be the same, i.e., the home address. Generally, two candidate resident places may be recorded every day. However, some drivers may in a day turn off the positioning function during a particular time period and then turn on it. Therefore, four candidate resident places may be recorded in the day. The number of recorded candidate resident places may be based on the number of uploaded longitude and latitude information when the driver turns on or turns off the positioning function of the smart device. In this way, the calculated resident place may normally be the home address of the driver since the driver generally turns on or turns off the positioning function of the smart device when leaving or returning home.

In some embodiments, the smart device may acquire the location of the driver and upload the location data at intervals. The interval may be a preset time period or a random time period. The candidate resident place may not necessarily be the longitude and latitude information uploaded when the driver turns on or turns off the positioning function. However, any place uploaded automatically at intervals may be designated as the candidate resident places. Then candidate resident places with dwell time greater than a threshold value may be reserved, since the reserved candidate resident place may be a location at which the driver takes lunch or other locations. The methods of setting a resident place may be any suitable method.

In step S310, a total distance between a particular candidate resident place and all other candidate resident places may be calculated. A candidate resident place with the longest total distance may be omitted. In response to determining that the number of remaining candidate resident places is less than 0.5n, step S330 may be performed. Alternatively, in response to determining that the number of remaining candidate resident places is no less than 0.5n, step S310 may be repeated.

In step S330, a distance between any two of the candidate resident places may be compared with a preset threshold value. In response to determining that the distance between any two of the candidate resident places is greater than the threshold value, it may be determined that there is no resident place of the driver and step S350 may be performed. Alternatively, in response to determining that the distance between any two of the candidate resident places is not greater than the threshold value, step S340 may be performed.

Step S300 through step S330 are steps for calculating the resident density region. Step S320 and S330 may be considered as a method of noise elimination. Total distances between a candidate resident place and all other candidate resident places may be calculated for each candidate resident place. A resident place with the longest total distance may be omitted as a noise point, since it is the furthest from the possible central point. This noise elimination method may be performed iteratively in order to reserve points that are closer to the resident place of the driver. If the distance between any two of the remaining candidate resident places is no more than a defined threshold value, the iteration may end. The threshold value may range from one kilometer to five kilometers. Therefore, if there are N (natural number) candidate resident places, 1/4 to 3/4 of the candidate resident places may be filtered out as noise points by the iterative method.

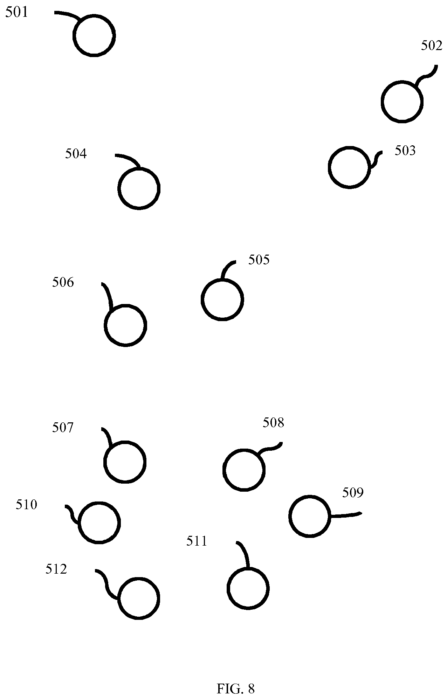

FIG. 8 is a schematic diagram illustrating an example of noise elimination of candidate resident places by the processing module 130 according to some embodiments of the present disclosure. The points that are closer to the top of the diagram may be filtered out earlier. For example, the six points, 501, 502, 503, 504, 505 and 506 may be omitted as noise points in sequence.

Back to FIG. 7, in step S340, the resident place may be calculated based on the remaining candidate resident places.

The method of calculating the resident place may include acquiring an average of the longitude-latitude values of the candidate resident places. The average may be calculated by calculating an arithmetic average or a geometric average.

In step S300, the candidate resident places may be configured based on the dwell time at the candidate resident places;

Before step S340, the candidate resident places may be further selected by setting a threshold time, e.g., 20 minutes. In response to determining that the dwell time of the driver at a particular candidate resident place is less than 20 minutes, the candidate resident place may be omitted.

More particularly, for example, candidate resident places in which the driver stays less than a threshold time may be first omitted. Then the remaining candidate resident places may be used to calculate the resident place by the geometric average method.

The threshold time used to determine the resident place may vary with drivers and vehicles. For example, the threshold time may be 15 minutes, 30 minutes or longer. A reasonable determination of the resident place may require a thorough consideration of a variety of factors. The factors may include but are not limited to personal information of a driver, vehicle conditions, time, locations, road conditions, etc. For example, a dwell time less than five minutes at a location may be caused by a traffic congestion. Therefore, the location may not be considered as a candidate resident place.

After acquiring information relating to the resident place, the acquired information may be used in a decision-making process for distributing service orders. For example, the resident place information of the service provider 30y and the location information relating to the service order may be combined and provided to the processing module 130 for the decision-making process. If the location information of a service order is in the vicinity of the resident place of a service provider, the service order may be distributed to the service provider 30y. In this way, it is more convenient for the service provider 30y to perform the order. More details are described in the decision-making process of hitchhiking.

The above embodiments illustrate how to acquire the resident place information of a driver. However, it should be noted that the service provider from which resident place information can be mined may not be limited to drivers. Any other service providers may also have resident places or likely geographic locations, such as a company providing food service, a courier providing delivering service, a messenger, a businessman or a company providing laundry service, a company providing housekeeping service, etc. Correspondingly, their resident place information may be acquired by the service distribution system 100 by similar methods or processes.

Determination of Opening Time and Busy Period

The system may acquire historical service information from the information source 400. The system may further acquire information about an opening time and a busy period of a service provider 30y by data mining of the historical service information.

An opening time, or referred to as service period, may refer to a time period during which a service provider 30y can provide or perform a service. Within the time period, the service provider 30y may respond to the request of a service user 20x and perform the related service content.

A busy period may refer to a time period during which the frequency or load of executing a service order by a service provider 30y reaches a threshold value and other potential service requests are almost impossible to be responded to within the opening time of the service provider 30y. For example, a restaurant operates from 7:00 to 23:00. However, only some time periods such as 7:30 to 9:00 in the morning, 11:00 to 13:00 at noon, 17:00 to 18:30 and 20:00 to 22:00 may be busy periods. Correspondingly, the four time periods may constitute the busy period of the restaurant.

The service provider 30y may generally be equipped with specific computers or servers for managing service orders. The specific computer or server may be used to store data of historical service orders. The service distribution system 100 may acquire information relating to the opening time and the busy period of a particular service provider by various methods based on data of the historical service orders. Herein, the historical service orders may be acquired from the information source 400. The method may include big data mining method, model analysis method, etc.

More particularly, for example, historical service orders information relating to a particular service provider within a particular time period may be collected. The time period may be divided into multiple sub-periods according to a particular time interval. Then the number of service orders within each sub-period may be collected and compared to determine the opening time and the busy period of a service provider.

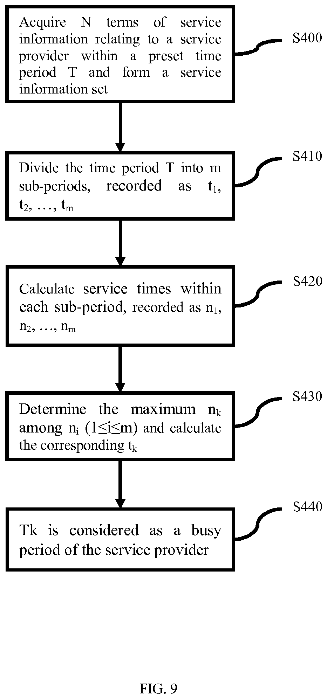

FIG. 9 is a flow chart illustrating an example of a process for acquiring a busy period of a service provider 30y according to some embodiments of the present disclosure.

Firstly, in step S400, the service distribution system 100 may retrieve all historical service information within a preset time period T of a service provider. The information may count up to N items and form a service information set.

In step S410, the time period T may be divided into m sub-periods. The sub-periods may be recorded as $t_1$, $t_2$, ..., $t_m$.

In step S420, service times within each sub-period may be counted. The counting results may be recorded as

$n_1, n_2, ..., n_m$.

In step S430, the maximum $n_k$ among $n_i$ may be determined by comparing different $n_i$ ($1 \leq i \leq m$). The corresponding $t_k$ may also be found.

Finally, in step S440, $t_k$ may be considered as a busy period of the service provider 30y.

It should be noted that the preset time period T may vary with service content and the whole operating status of the service industry. The preset time period T may be a week, a month, a quarter, a year, etc. Similarly, the length of the divided sub-periods may be half an hour, an hour, two hours, three hours, twelve hours, a day, a week, etc. Generally, the length of a sub-period is less than the length of the whole time period. The sub-periods $t_1, t_2, ..., t_m$ are not necessarily divided evenly. Lengths of different sub-periods may be same or different. For example, the time period from 7:00 to 9:00 may be divided into six sub-periods: 7:00-7:30, 7:30-7:45, 7:45-8:00, 8:00-8:15, 8:15-8:30 and 8:30-9:00.

Preferably, a day may be set as the time period T and half an hour may be set as the length of the sub-period for a transportation service. The business status of the driver in every half an hour within a day may be analyzed and the busiest period may be calculated. Alternatively, a week may be set as the time period T and a day may be set as the length of the sub-period. The business status of the driver in each day within a week may be analyzed and the busiest day may be calculated.

Preferably, a year may be set as the time period T and a quarter may be set as the length of the sub-period for a laundry service. The business status of the laundry service provider in each quarter within a year may be analyzed and the busiest quarter may be calculated. Alternatively, a year may be set as the time period T and a month may be set as the length of the sub-period. The business status of the laundry service provider in each month within a year may be analyzed and the busiest month may be calculated.

Additionally or alternatively, despite that the period with the most service orders is designated as the busy period, the standard is not unique. For example, sub-periods in which the number of service orders ranks the top three or the top five may be designated as busy periods.

Mining of Features of Service Provided by a Service Provider

Generally, there are some features in the aspect of the types or content of service provided by the service provider 30y. For example, service features of transportation service providers may include but are not limited to a high average speed, a low temperature of air conditioning inside the vehicle, punctuality, etc. Service features of home delivery service providers may include but are not limited to food type, flavors (e.g. "sour," "sweet," "bitter," "salty," "fresh," etc.), food processing methods, degree of freshness, an average delivery speed or home delivery methods. Features of laundry service providers may include but are not limited to methods of washing clothes (e.g., hand wash, dry clean and machine wash), methods of drying clothes (e.g., centrifuge dewatering, tumble dry and air dry), an average time for washing clothes, clothes delivery speed, etc.

The above examples are merely for the purpose of illustration and not intended to limit the meaning of preference in the present disclosure. Any information related to service features of service providers are within the scope of preference in the present disclosure.

Service features of a service provider may be mined by processing historical service information. As such, service providers may be recommended or assigned more suitable service orders.

Features of the service content of a service provider may be mined based on historical service information relating to the service provider. For example, information about the main food types, flavors, food price, home delivery speed, etc. of a food service provider may be acquired according to the historical home delivery service information relating to the food service provider. More particularly, for example, the historical records of home delivery service within a particular time period (e.g., a year, half a year, or a month) may be collected. The total number of the historical home delivery service may be calculated. Moreover, a statistical analysis may be performed on food types, flavors, food price, home delivery speed and customers' reviews included in each of the historical records of home delivery service. As such, food types, flavors, food price and home delivery speed that the service provider most possibly provides may be acquired.

Acquisition of Activity of the Service Provider

The user experience of the service provider 30y when providing a service may be different from the user experience of the service user 20x when enjoying the service. The user experience of the service provider 30y may rely on the number of service orders, the possibility of receiving a service order, or the number of received service orders. A service provider with relatively bad user experience may have difficulty in receiving service orders. Thus, the revenue and activity of the service provider may be relatively low. Accordingly, service providers with relatively bad user experience previously can be retained by determining the activity of service providers and taking some targeted and tactic measures on non-active service providers. This may be necessary to improve the operation efficiency of the whole service distribution system 100.

The activity of the service provider 30y may be acquired based on the historical service information.

The service distribution system 100 may receive information from the service provider 30y. The service distribution system 100 may also receive historical information and statistical information about the service provider 30y. Herein, the historical information and statistical information may include historical online time, historical order snatching performance, historical order receiving performance, historical service information, etc.

Based on received information, the service distribution system 100 may determine whether a service provider is active or inactive according to the historical online time and the historical order snatching performance of the service provider 30y within a time period. Herein, the service provider 30y may be a delivery personnel in service of delivering food, a driver of a taxi or a private car in service of transportation, a home server in service of home cosmetic service, etc.

The historical online time and the historical order snatching performance of the service provider 30y may be obtained by a service application installed by the service provider 30y. The service application may include but is not limited to a transportation service application installed on a personal smart terminal, a food order system installed on a computer, or other various service applications installed on a user terminal.

In some embodiments, the service distribution system 100 may add the service provider 30y to the list of non-active service providers in response to determining that the service provider 30y has performance within the most recent time period such as shorter online time, lower online frequency, no response to a service request, long response time, high frequency of uncompleted services, etc.

Estimation of Order Snatching Probability of Service Provider

Service records and order snatching logs of the service provider 30y may be stored in the server as a section of the historical data of the service provider 30y. Order snatching probability of the service provider 30y in each selection of the presented orders may be precisely estimated using models. These models may be trained by methods of machine learning and data mining based on the multiple historical data. The estimated order snatching probability of the service provider 30y may be used in allocating orders by the service distribution system 100 in post-processing.

The service distribution system 100 may receive the current/historical/statistical information from the receiving module 110. Historical information and statistical information may include historical online time, historical order snatching performance and information related to the historical order. Based on the received information, the service distribution system 100 may determine the order snatching probability of the service provider 30y in each selection of the presented orders according to the online time and order snatching performance of the service provider 30y within a particular time period. Herein, the service provider 30y may be a delivery personnel in service of delivering food, a delivery personnel in service of delivering local goods, a home server in service of home cosmetic service, etc.

The order processing method may be implemented in the following steps: acquiring at least one feature of historical orders and responses of service providers associated with historical orders (whether the service providers snatch the order or not, or whether the service providers successfully snatch the order); assigning weight to at least one feature according to the responses of service providers associated with the historical orders; acquiring features of the current order; and selecting a current order that is to be presented to the service provider from the current orders based on the weight corresponding to the features of the current order. In a service scenario like food delivery service, the feature may include the distance of food delivery, the price of delivered food, distribution fee, etc.

In some embodiments, machine learning models may be the logistic regression model that is widely applied in the second classification. In some embodiments, machine learning models may be the support vector machine model. In some embodiments, other machine learning models may be used according to test results.

The current order may refer to orders to be presented or being presented to the service provider. For example, the current order may not have been presented to service providers, or the current order may be presented to some service providers but have not been presented to other service providers. The current order may be obtained from an online server. For example, in scenarios of vehicle service, methods of obtaining orders may include directly receiving an order that is sent from a user in a request for a taxi or receiving an order that is re-transmitted by other intermediate organizations (e.g., an Internet server, etc.).

After acquiring the current order, one or more service providers associated with the current order may be selected as candidate service providers from multiple service providers. The candidate service providers may be presented the current order. For example, service providers within a particular range of the location where the current order is sent out may be selected as candidate service providers. The candidate service providers may also be selected according to other factors, e.g., the driving direction of the service provider, etc. Additionally or alternatively, the candidate service providers may be further filtered.

It is noted that multiple current orders may be associated with a single service provider after obtaining the multiple current orders. For example, the service provider locates within a particular range of the locations where the multiple current orders are sent out. As such, a superior order may be selected from the multiple current orders and presented to the service provider. Features of the current order may include a distance between a service provider and the location where the current order is sent out. Features of the current order may include a distance between a service provider and the location where a passenger waits for a taxi. Features of the current order may include the destination requested in the current order, type of the destination (e.g., airport, hospital, or school) in the current orders, or road conditions in the surrounding of the destination. Features of the current order may include times that the current order has been presented. Features of the current order and the service providers may include an extra fee that the passenger is willing to pay or time that the passenger is willing to wait. Features of the current order and the service providers may include the number of passengers. Features of the current order and the service providers may include whether there is some large luggage or the like. Additionally or alternatively, features of the current order may be directly determined based on the content of the current order. Alternatively, features of the current order may be indirectly determined by further processing the content of the current order by the server. For the features of the current order, weights corresponding to the current order may be used. For example, the weights assigned to the features of the current order in the training session may be used.

For a type of transportation service, transportation service distance (distance from the service provider to the current location of the service user) may be designated as a feature of the service order. By analyzing the response degree of a service provider to service orders at different distances and training the service distribution system 100, the degree of reply of the service provider 30y to a real-time service order may be estimated. The method may include: acquiring a distance between the departure location and the destination of the current order; acquiring the order snatching probability of the service provider for a historical order; sending the current order to the service provider 30y based on the order snatching probability. Herein, the distance between the departure location and the destination of the historical order may relate to the distance between the departure location and the destination of the current order.

As such, orders with low order snatching probability may be determined not to be sent to the service provider. In other words, orders with no value or low value to the service provider 30y may be not sent to the service provider. Thus, orders with high value to the service provider 30y may be ensured to be quickly and accurately sent to the service provider 30y.

As described above, the service provider 30y may drive conventional vehicle, ship, or aircraft. The service provider 30y may also be transportation tools used to carry passengers/goods in unmanned driving.

According to some embodiments of the present disclosure, locations of the departure location of the current order and the service provider 30y may be, respectively, acquired at first. Moreover, a distance between the departure location of the current order and the service provider 30y may then be calculated. Herein, the departure location of the current order may be obtained from the information mentioned above relating to the order. The location of the service provider 30y may be determined through the positioning information from the positioning system in the device of the service provider 30y and/or from the base station. Additionally or alternatively, the distance between the departure location of the current order and the service provider 30y may be a straight-line distance between them, or an actual driving distance that is calculated by the navigator according to the route information, the road condition, and the road administration information. Moreover, the order snatching probability of the service provider 30y for the historical order may then be acquired. Herein, the distance between the departure location of the historical order and the service provider 30y may relate to the distance between the departure location of the current order and the service provider 30y. In some embodiments in which there are multiple historical orders and the distance between the departure location of each of the multiple historical orders and the service provider 30y is associated with the distance between the departure location of the current order and the service provider 30y, either the order snatching probability for each of the multiple historical orders or the average order snatching probability of all the historical orders may be obtained.

According to some embodiments of the present disclosure, relativity of the distance between the departure location of the historical order and the service provider 30y and the distance between the departure location of the current order and the service provider 30y may be described as follows.

The distance between the departure location of the historical order and the service provider 30y may be equal to the distance between the departure location of the current order and the service provider 30y.

In this embodiment, since the distance between the departure location of the historical order and the service provider 30y is equal to the distance between the departure location of the current order and the service provider 30y, the order snatching probability of the service provider for the historical order may be, to a great extent, equal to the order snatching probability of the service provider for the current order. In other words, if the order snatching probability of the service provider for the historical order is low, the order snatching probability of the service provider for the current order may also be, to a large degree, relatively low. As such, the current order may have little or even no value to the service provider 30y, and sending the current order may exert a negative effect on sending orders with high value to the service provider 30y. Thus, orders with high value to the service provider 30y may be ensured to be quickly and accurately sent to the service provider 30y through avoiding of sending current orders with low order snatching probability to the service provider 30y.

The distance between the departure location of the historical order and the service provider 30y and the distance between the departure location of the current order and the service provider 30y may belong to the same distance interval. The distance interval is preset according to the distance between the departure location of each historical order and the service provider 30y. For example, 0-100 meter is designated as the first distance interval and indicated by P1; 100-200 meter is designated as the second distance interval and indicated as P2; 200-300 meter is designated as the third distance interval and indicated as P3; and the like.

In this embodiment, since the distance between the departure location of the historical order and the service provider 30y and the distance between the departure location of the current order and the service provider 30y belongs to the same distance interval, the order snatching probability of the service provider for the historical order may be, to a great extent, similar to the order snatching probability of the service provider for the current order. In other words, if the order snatching probability of the service provider for the historical order is low, the order snatching probability of the service provider for the current order may also be, to a large degree, relatively low. As such, the current order may have little or even no value to the service provider 30y, and sending the current order may exert a negative effect on sending orders with high value to the service provider 30y. Thus, orders with high value to the service provider 30y may be ensured to be quickly and accurately sent to the service provider 30y through avoiding of sending current orders with low order snatching probability to the service provider 30y.

Pre-processing of Inputted Information

Before assigning service information based on information relating to the service provider 30y and the service user 20x, it is necessary to pre-process information inputted into the system.

Generally, in order distribution system 100, the inputted information may be difficult to be formatted in a consistent manner since input modes may be different for information from the service provider 30y, the service user 20x and the external world. For example, the information input modes may include text input, voice input, image input, etc. The inputted information may also be difficult to be recognized since the inputted information may be uncertain or irregular. For example, handwriting in hand input, dialect or accent in voice input, or image elements in image input may be difficult to be recognized. Thus, to facilitate operations by the processing module 130 such as calculating, determining, matching, or the like on the inputted information in the further processing of the service distribution system 100, it may be necessary to pre-process the inputted information. Methods of pre-processing may include recognizing and extracting feature information, converting the formats of information, etc.

Pre-processing of the inputted information may include pre-processing the inputted text information. The text information may generally include address information, identification information, order request information, or the like inputted by the service user 20x. After receiving the information inputted by the service user 20x, the service distribution system 100 may need to recognize the inputted information, extract featured information and convert the format of the information. For example, in some embodiments in which geographic location information is rather significant, the location expressed or indicated by the service user 20x may be difficult to be understood by the service provider 30y due to the fact that the means of expression or comprehension of the service provider 30y and the service user 20x regarding to the same location are different. As such, the service request may be difficult to be accepted or implemented by the service provider 30y.

The service distribution system 100 may adapt or convert a piece of address information (also referred to as a "geographic point of interest" or a "point of interest" (POI)) that is inputted by the service user 20x and/or the service provider 30y into a POI that is comprehensible to the order-implemented service provider 30y (or referred to as order-accepting person). As such, information broadcasted to the order-accepting person may be shortened. Unknown places (e.g., unknown small residential areas) may be made clearer. And a concise and straightforward description of a location may be provided. The processing module 130 may pre-process the inputted address information.

More particularly, for example, the service distribution system 100 may convert the inputted poi (e.g., Schwarzman Mansion of the public library of New York) in text format into a text containing a representative display name (e.g., Stephen A. Schwarzman Mansion, Main Hall of the public library of New York) and a detailed address (e.g., 42 Street/The 5th Avenue, New York) that is stored in the address database of the cloud server. As such, the converted address information may be used as inputted information of an address adaptation module.

Pre-processing of the inputted information may also include pre-processing the inputted voice information. The voice information may generally include voice inputted by the service user 20x through smart devices. The content of the voice may include service requirements, identification information of the service user 20x, etc. After receiving the inputted voice information of the service user 20x, the processing module 130 may need to recognize the inputted information, extract featured information and convert the format of the information. For example, in food delivery service, the take-out user (the service user 20x) may notify the delivery personnel of a restaurant (the service provider 30y) about information relating to the home delivery time, home delivery location and types of cuisine by voice. However, voice information may have problems such as tone, accent, pause, stammer, etc. The problems may probably lead to the fact that the home delivery personnel (the service provider 30y) cannot hear or understand the voice information clearly or correctly. The processing module 130 may recognize the voice information of the take-out user (the service user 20x) and extract the featured information.

More particularly, for example, information contained in the voice information may be separated and recognized by voice recognition devices. This may help output the inputted voice information in the form of corresponding text information and pre-process the outputted text information. The process to convert voice information into text information is generally referred to as speech-to-text (or abbreviated as STT). The process of STT may basically include two parts: pre-processing of voice information and character recognition of voice frequency. The voice recognition devices may pre-process the voice frequency using operations that are familiar to those of ordinary skill in the art, such as finite Fourier transform, wavelet Fourier transform, discrete Fourier transform, convolution, wavelet analysis, wave filtering, noise elimination, etc. After pre-processing, the processing module 130 may process information of the voice frequency and output text information. The processing methods may include but are not limited to pattern recognition, pattern comparison, pronunciation searching in dictionaries or decoding. Finally, after outputting the text information, the processing module 130 may organize the text information into text that conforms to grammar rules, in combination with language models, grammar rules, historical data of voice recognition and present modes of voice recognition.

Pre-processing of the inputted information may also include pre-processing the inputted image information. The image information may generally include photographs, video frames, quick response codes, or the like shot or inputted by the service user 20x through smart devices. The image information may include service requirement information, personal information, address information, identification information of the service user 20x, etc. After receiving the image information inputted by the service user 20x, the processing module 130 may need to recognize the inputted image information, extract featured information and convert the format of the information. For example, in home laundry service, the laundry service user (the service user 20x) may notify the laundry-fetch personnel (the service provider 30y) about the specific information of the clothes by photographing the clothes. However, the image information inputted by the service user 20x or the service provider 30y may have problems such as lack of resolution, chromatic aberration, distortion, shake, and dimness, etc. The problems may cause difficulty to the other in acquiring valuable information. The processing module 130 may recognize the image information obtained by the laundry-fetcher personnel and extract the featured information.

The general service order may include multiple pieces of address information for a transportation service, such as the current location of the passenger, the current location of the driver, the destination of the passenger, etc. However, the means of expression or comprehension of the service provider 30y and the service user 20x for the same location may be different. For example, the driver may be more familiar with malls, road names, and iconic landmarks. The passenger may prefer precise and accurate expression, such as the name of a small residential area, the name of a mansion, the name of a merchant, etc. This may lead to the fact that the driver has difficulty in understanding the location provided by the passenger and is unwilling to snatch the order. Thus, the snatching willingness of the driver is directly negatively affected.

The service distribution system 100 may adapt or convert a piece of address information (also referred to as a "geographic point of interest" or a "point of interest" (POI)) that is inputted by the service user 20x (e.g., a person in request for transportation service) into a POI that satisfies the comprehension preferences of the service provider 30y (e.g., a driver). As such, information broadcasted to the service provider may be shortened. Unknown places (e.g., unknown small residential areas) may be made clearer. A concise and straightforward description of a location may also be provided.

The processing module 130 may pre-process the inputted address information. The pre-processing may include converting the text of a single POI into two items of text, the exhibition name, and the specific address. Thus, the converted information may be used as inputted information of the address adaptation module.

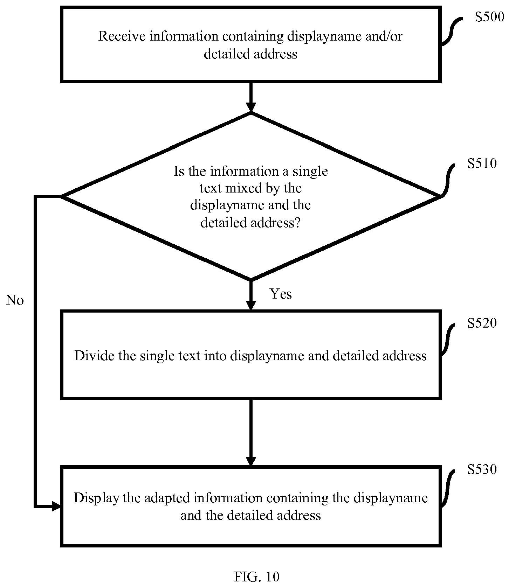

FIG. 10 is a flow chart illustrating an example of a process for pre-processing address information according to some embodiments of the present disclosure.

In step S500, information containing display name and/or specific address may be received.

In step S510, whether the information is a single text including both the display name and the specific address may be determined. In some embodiments, in response to determining that the information is a single text including both the display name and the specific address, step S520 may be performed. Alternatively, in response to determining that the information is not a single text including both the display name and the specific address, step S530 may be performed and the information containing the display name and the specific address may be presented.

In step S520, the information may be divided into a display name and a specific address.

In step S530, the information containing the display name and the detailed address may be displayed.

Herein, whether the information is a single text including both the display name and the specific address may be further determined by the pre-processing module in step S510. In some embodiments, the POI may be determined to be a single text including both the display name and the specific address in response to determining that the display name and the specific address of a POI are the same. Alternatively, the POI may be determined to be a single text including both the display name and the specific address in response to determining that the display name of the POI is not blank and the specific address of the POI is absent.

Preferably, the pre-processing module may divide the display name or the detailed address of the POI into two terms of records according to the Chinese character "区.." The records may include the display name and the detailed address.;

In some embodiments, if the Chinese character before the character "区" is found to be "小", "一", "二", "三", "四", "五", "六", "七", "八", "九", "十", "东", "南", "西" or "北" after dividing the POI according to the Chinese character "区", the division process may be end.

After the POI is divided, if the character length of the display name of the POI is less than three Chinese characters, the division process may end.

Preferably, the processing module may adapt an inputted POI containing display name and specific address into a POI that satisfies the comprehension preference of order receivers.

The processing module may adapt the address information in the service user information from the service user.

The processing module may adapt the address information contained in the service request information from a service user.

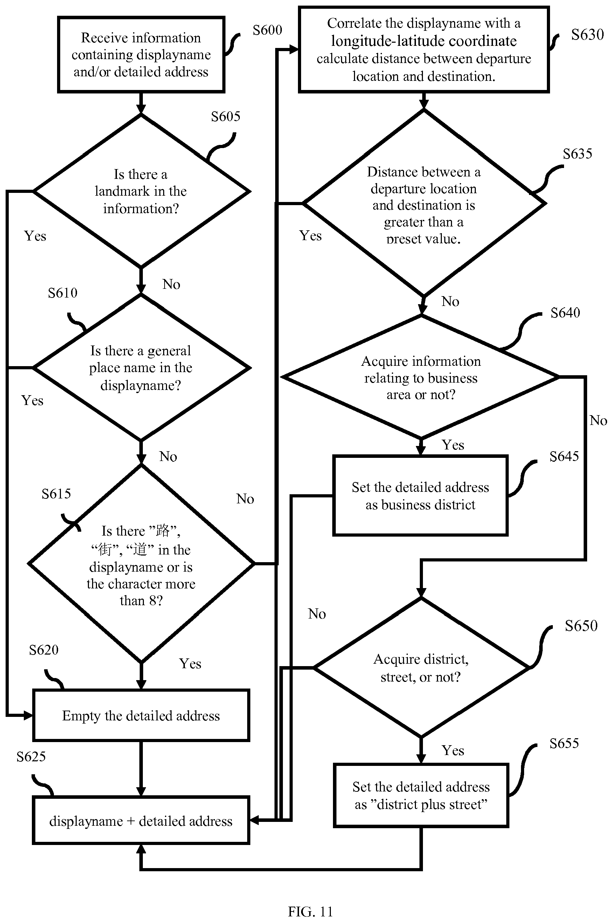

FIG. 11 is a flow chart illustrating an example of a process for adapting the address information of a POI according to some embodiments of the present disclosure.

In step S600, a POI containing display name and/or detailed address may be received.

In step S605, whether the POI contains a landmark building may be determined. In some embodiments, in response to determining that the POI contains a landmark building, the address may be emptied, and step S620 may be performed. Alternatively, in response to determining that the POI does not contain a landmark building, step S610 may be performed.

In step S610, whether the display name in the POI contains such keywords of generic place name as "station," "village," "bridge," "subway," "overpass," "airport," etc., may be determined. In some embodiments, in response to determining that the display name of the POI contains such keywords of generic place name as "station," "village," "bridge," "subway," "overpass," "airport," etc., the address may be emptied, and step S620 may be performed. Alternatively, in response to determining that the POI does not contain such keywords of general place name as "station", "village", "bridge", "subway", "overpass", "airport", etc., step S615 may be performed.

In step S615, whether the display name in the POI contains such keywords as "路", "街" or "道", or whether the length of the display name is more than eight Chinese characters may be determined. In some embodiments, in response to determining that the display name in the POI contains such keywords as "avenue", "street" or "drive", or that the length of the display name is longer than eight Chinese characters, step S620 may be performed. Alternatively, in response to determining that the display name in the POI does not contain such keywords as "avenue," "street," or "drive," or that the length of the display name is no longer than eight Chinese characters, step S630 may be performed.

Herein, if the display name contains Chinese characters such as "路", "街" or "道", it may indicate that the display name clearly expresses its location, e.g., display name: No.11, Zhongguancun Street. If the display name is too long, it may indicate that the display name clearly expresses its location, e.g., display name: Zhongguancun, World e, Building C, across the Sinosteel International;

In step S620, the specific address in the POI may be emptied, and step S625 may be further performed.

In step S630, longitude-latitude may be inversely analyzed. In some embodiments in which there is no longitude-latitude in the POI, for example, a passenger may manually input "zhongguancun" without longitude-latitude, corresponding longitude-latitude of the POI may be inversely analyzed through the display name or the specific address of the POI from the longitude-latitude set of addresses. Alternatively, in some embodiments in which there is longitude-latitude in the POI, the process to reversely analyze the POI may be omitted. A distance from the departure location to the destination may then be calculated based on the longitude-latitude in the POI.

In step S635, whether the distance between the longitude-latitude of the POI of the departure location and the longitude-latitude of the POI of the destination is more than a preset distance (e.g., 50000-60000 meters). In some embodiments, in response to determining that the distance between the longitude-latitude of the POI of the departure location and the longitude-latitude of the POIof the destination is more than a preset distance, the POI may not be processed and step S625 may be performed. Alternatively, in response to determining that the distance between the longitude-latitude of the POI of the departure location and the longitude-latitude of the POI of the destination is no more than a preset distance, step S640 may be performed. Step 635 may be implemented for the purpose of preventing longitude-latitude errors. If the longitude-latitude is accurate, step 635 may be omitted.

In step 640, business district information or address information may be analyzed. Corresponding business district information or address information of district and street of the POI may be analyzed by the longitude-latitude of the POI from the longitude-latitude set of business districts. In step 640, whether or not to acquire information relating to the business district may be determined. In some embodiments, in response to determining that the information relating to the business district is to be acquired, the address may be set as the business district (or referred to as "address=the business district") and step S645 may be performed. Alternatively, in response to determining that the information relating to the business district is not to be acquired, step S650 may be performed.

In step S645, the specific address may be set as business district and step S625 may be performed, outputting the display name and the specific address.

In step S650, whether or not to acquire information relating to the district and the street may be determined. In some embodiments, in response to determining that the information relating to the district and the street is to be acquired, the address may be set as the form of "district plus street," e.g., "Chaoyang District, Middle Yanjingli Road," and step S655 may be performed. Alternatively, in response to determining that the information relating to the district and the street is not to be acquired, step S625 may be performed, and the display name and the detailed address may be outputted;

Step S625 may be performed after step S655.

In step S625, the POI containing display name and detailed address may be outputted.

The specific method to determine in step S605 whether a landmark building is included in the POI is illustrated in the following.

An information set of landmark buildings may be set. Records in the information set of landmark buildings may include: serial number, address information, or hits. The information set may be used to collect hits by passengers on each piece of address information.

A threshold hits Tclick may be set. The threshold may vary with practical situations of each city.

Hits on the POI may be searched through the display name or the specific address of the POI from the information set of landmark buildings. In some embodiments in which the hits is more than Tclick, the POI may be determined to be a landmark building.

Records in the longitude-latitude set of addresses may include: a serial number, address information, or longitude-latitude.

Records in the longitude-latitude set of business districts may include: a serial number, a name of business district and/or district/road information, or longitude- latitude.

Preferably, the processing module may be configured to further shorten the "address" in a POI. Prefix and suffix may be omitted without affecting the comprehension of order receivers. For example, the prefix of a city name, the suffix of a street number, or the like may be deleted.

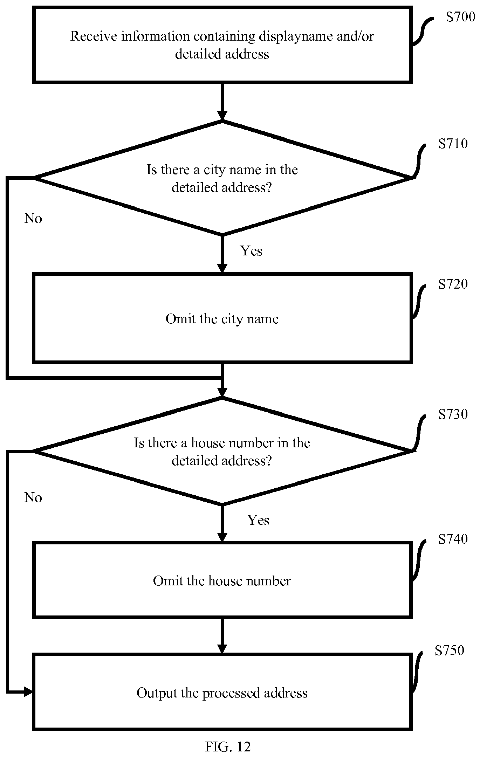

FIG. 12 is a flow chart illustrating an example of a process for abbreviating address information according to some embodiments of the present disclosure.

In step S700, a POI containing a display name and a detailed address may be inputted.

In step S710, whether the prefix of the detailed address in the POI is a city may be determined. In some embodiments, in response to determining that the prefix of the specific address in the POI is a city, step S720 may be performed. Alternatively, in response to determining that the prefix of the specific address in the POI is not a city, step S730 may be performed.

In step S720, the prefix of the specific address, such as Beijing, "Zhangzhou, Fujian Province," may be omitted. Since the distribution of present orders may be limited to a single city, the information about the city in the prefix of the specific address may be redundant.

In step S730, whether the suffix of the specific address in the POI is a house number. In some embodiments, in response to determining that the suffix of the specific address in the POI is a house number, step S740 may be performed. Alternatively, in response to determining that the suffix of the specific address in the POI is not a house number, step S750 may be performed.

In step S740, the house number at the end of the specific address(or at the start of the detailed address in the corresponding English expression) may be omitted. For example, "the No. 11, Zhongguancun Street" may be changed into "Zhongguancun Street." Since order receivers may determine whether or not to accept an order or not based on the approximate location of the destination, the specific address can be provided later.

In step S750, a POI containing both the display name and the specific address may be outputted.

Application Scenarios

For example, the Address of a POI is "the 1st floor underground, Xinzhongguan Shopping Center, No. 15, Zhongguancun Street, Haidian District, Beijing", and the display name of the POI is "Jyb International Studios." Obviously, the POI is so long that it may take about 10 seconds to broadcast. This may not only waste the driver's time, but also the redundant information may be useless for the driver.

After a determination by an address modifying module and an address abbreviating module, the POI may be determined to be modified and abbreviated. The address modifying module may extract the most useful information about business district from the POI, "Zhongguancun." The address abbreviating module may recognize some useless information such as "Beijing," "No. 15" and "the 1st floor underground". The POI of the destination may then be adapted into "Address=Zhongguancun" and "displayname=Jyb International Studios."

Application Scenarios

For example, there is no content in the Address of the POI, and the display name of the POI of the destination is "Golden Field Building." The POI of the destination is very short with no address information, and there is only a name of a building that is not a landmark and is known by few drivers. This makes drivers unable to determine the direction of the destination, exerting a negative influence on their willingness to obtain the order.

After a determination by the address modifying module, the specific address of the POI may be determined to be modified. The address modifying module may search out that the building is located near the Anning Road, Haidian District. Thus, the POI of the destination may be adapted into "Address=Anning Road" and "displayname=Golden Field Building."

The pre-processing and calculation of an order by the processing module based on historical data and information inputted by service users/service providers before the order is assigned is described above. According to the historical data, information such as preferences, service coverage, resident place, business hours, busy period, of the like of the service users/service providers may be obtained. The order distribution system 100 may combine the information with specific criteria and assign different service providers for different service orders, achieving high efficient and high-targeted service distribution.

Auction of service orders

There are two problems of the present service systems. 1. At present, the service providers obtain orders by snatching orders. The service provider with a smart device in the condition of a better network and with a faster snatching speed may obtain the order preferentially. However, the service provider that snatched the order may be far from the service user or provide poor service, while a service provider with higher service quality cannot obtain the order merely due to slower snatching speed. This may cause that the service user cannot be served by the service provider with higher service quality. For example, in a home medical service scenario in which a patient initiates an order, the order may be snatched by some medical institutions or individuals with medical treatment of poor quality or bad reviews. 2. Under the mode of order snatching, some cheating tools regarding the speed of network access, hardware performance, etc., may breed, undermining the fairness of competition on the platform.

The embodiment may be considered as a service distribution system configured to obtain service providers with higher service quality based on an auction mode. The operation of the system may include two steps, ranking step and auction step.

Said ranking step may be configured to filter a service provider set and rank the service providers in the set according to factors such as characteristic indexes of an order, information relating to service providers, etc.

Said auction step may be configured to auction the order among the service providers in the set that is filtered and ranked by the determining module.

Preferably, after the order is calculated according to the characteristic index of the order, information relating to n service providers D1, D2, ...Dn, or the like by the processing module, a rank of the service providers may be determined, D1>D2...>Dn (Dx is one of the service providers).

The processing module may designate a threshold auction time T for the order. Moreover, the processing module may designate an auction time tx for each service provider Dx that may vary with the service provider Dx.

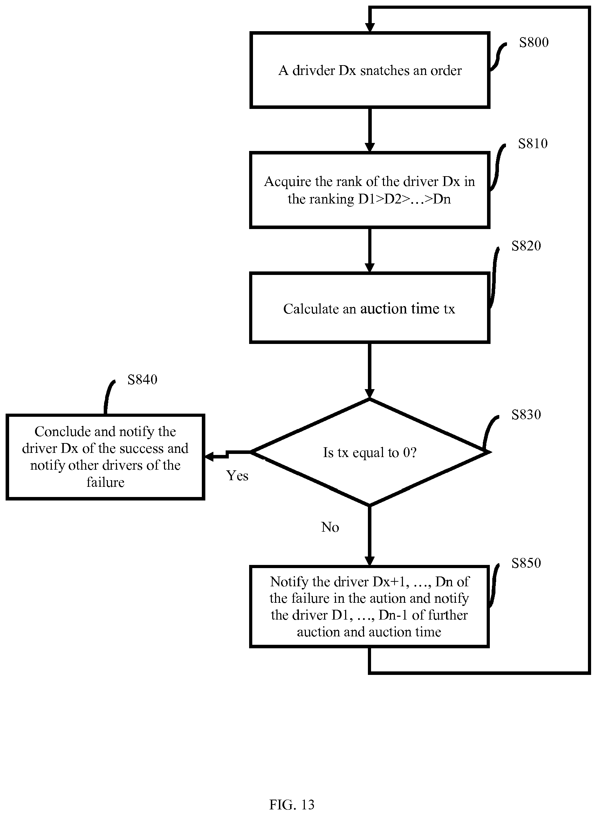

As illustrated in FIG. 13, obtaining an order by auction may include the following steps.

In step S800, a driver Dx may initiate an order snatching.

In step S810, the rank of the driver Dx in the whole sequence D1>D2···>Dn may be obtained;

In step S820, the auction time tx may be calculated according to the following equation.

$$T_x = (x - 1) * \frac{T}{n}$$

In Step S830, whether Tx is equal to 0 may be determined. In some embodiments, in response to determining that Tx is equal to 0, step S840 may be performed and the auction may conclude after the driver Dx is informed of having succeeded in snatching the order and the other drivers are informed of having failed the auction. Alternatively, in response to determining that Tx is not equal to 0, step S850 may be performed.

In step S850, drivers Dx+1~Dn with lower rankings than that of the driver Dx may be informed of the failure of the auction and corresponding reasons of the failure. In the meanwhile, drivers D1~Dx-1 with higher rankings than that of the driver Dx may be informed to continue joining the auction and that the auction time is Tx. If one or more drivers with higher rankings than that of the driver Dx join the auction of the order, S800 may be re-performed and the whole process may be performed iteratively.

The above technical solution may achieve the following technical results:

1. The mode of snatching orders relying on the speed of the driver's hands is upgraded into a mode of obtaining an optimal result by a further auction of the order. As such, the order may be assigned to a driver with the highest service quality. This mode may shorten the wait time of a passenger and provide the passenger with the best service.
2. This mode may make competition among drivers fairer. And this mode may motivate drivers endeavor to satisfy more demands of the platform and boost the activity of the drivers in snatching orders. As such, the service quality of the whole platform may be improved.

Application Scenarios

A passenger in Beijing reserves a taxi from Xizhimen to Sanlitun using a car-hailing app in rush hours. The obtained information relating to the passenger is shown in the following table:

| Passenger | Time of Calling an Order | Current Location | Destination |
|---|---|---|---|
| Mr./Mrs. Li | 2014/2/20 18:00 | Xizhimen | Sanlitun |

The collected information relating to multiple drivers is shown in the following table:

| Serial Number of Driver | Quality of Service (100 = full marks) | Current Location of the driver | Grade of the Driver | Other Information |
|---|---|---|---|---|
| 1 | 60 | the Grand Bell Temple | B | ... |
| 2 | 50 | Xizhimen | B | ... |
| 3 | 40 | Zhichun Road | D | ... |
| 4 | 80 | Zhichunli | C | ... |
| 5 | 70 | North Tucheng | A | ... |
| 6 | 80 | North Tucheng | B | ... |
| 7 | 70 | Anzhen Bridge | C | ... |
| 8 | 80 | Huangzhuang of Haidian | A | ... |
| 9 | 40 | the Zoo | D | ... |
| 10 | 65 | South Luogu Lane | C | ... |

Distances between the drivers and the passenger are calculated. The above table is transformed into the following table:

| Serial Number of Driver | Quality of Service (100 = full marks) | Current Location of the driver | Grade of the Driver | Other Information |
|---|---|---|---|---|
| 1 | 60 | 1.3km | B | ... |
| 2 | 50 | 500m | B | ... |
| 3 | 40 | 2km | D | ... |
| 4 | 80 | 2.5km | C | ... |
| 5 | 70 | 3km | A | ... |
| 6 | 80 | 2.5km | B | ... |

(continued)

| Serial Number of Driver | Quality of Service (100 = full marks) | Current Location of the driver | Grade of the Driver | Other Information |
|---|---|---|---|---|
| 7 | 70 | 3.3km | C | ... |
| 8 | 80 | 3km | A | ... |
| 9 | 40 | 3km | D | ... |
| 10 | 65 | 2.5km | C | ... |

The drivers may be ranked with one of the three options, the distance between a driver and the passenger, the service quality of the driver and the grade of the driver, as a weight, and the other two as candidate weights.

Weight is a relative feature and is allocated to each index. The weight of an index refers to the importance of the index in an overall evaluation.

In some embodiments in which the weight coefficient of the distance between the driver and the passenger is 1, the weight coefficient of the service quality of the driver and the grade of the driver may be 0. In some embodiments in which the weight coefficient of the service quality of the driver is 1, the weight coefficient of the distance between the driver and the passenger and the grade of the driver may be 0. In some embodiments in which if the weight coefficient of the grade of the driver is 1, the weight coefficient of the distance between the driver and the passenger and the service quality of the driver may be 0.

The service quality of the driver may be directly obtained from the historical reviews of passengers (A passenger may give the driver a score after each service).

The grade of a driver is assessed by the number of the driver's accepted orders. For example, if the number of the driver's accepted orders is less than 100, the grade of the driver may be assessed as D. If the number of the driver's accepted orders is equal to or more than 100 but less than 200, the grade of the driver may be assessed as C. If the number of the driver's accepted orders is equal to or more than 200 but less than 300, the grade of the driver may be assessed as B. If the number of the driver's accepted orders is equal to or more than 300, the grade of the driver may be assessed as A.

In one embodiment, the drivers are ranked according to such a sequence that the distance between the driver and the passenger is considered as the priority option, the service quality of the driver is considered as the second option and the grade of the driver is considered as the third option. The corresponding rank is shown in the following table:

| Number of a Driver | Distance between the Driver and the Passenger | Quality of Service (100 as full marks) | Grade of the Driver |
|---|---|---|---|
| 2 | 700m | 60 | B |
| 1 | 1.3km | 50 | B |
| 3 | 2km | 40 | D |
| 4 | 2.5km | 80 | C |
| 10 | 2.5km | 65 | C |
| 8 | 3km | 80 | A |
| 5 | 3km | 70 | A |
| 9 | 3km | 40 | D |
| 7 | 3.3km | 70 | C |
| 6 | 3.5km | 80 | B |

In one embodiment, the drivers are ranked according to such a sequence that the distance between the driver and the passenger is considered as the priority option, the grade of the driver is considered as the second option and the service quality of the driver is considered as the third option. The corresponding rank is shown in the following table:

| Number of a Driver | Distance between the Driver and the Passenger | Grade of the Driver | Quality of Service (100 as full marks) |
| --- | --- | --- | --- |
| 2 | 700m | B | 60 |
| 1 | 1.3km | B | 50 |
| 3 | 2km | D | 40 |
| 4 | 2.5km | C | 80 |
| 10 | 2.5km | C | 65 |
| 8 | 3km | A | 80 |
| 5 | 3km | A | 70 |
| 9 | 3km | D | 40 |
| 7 | 3.3km | C | 70 |
| 6 | 3.5km | B | 80 |

In one embodiment, the drivers are ranked according to such a sequence that the service quality of the driver is considered as the priority option, the distance between the driver and the passenger is considered as the second option and the grade of the driver is considered as the third option. The corresponding rank is shown in the following table:

| Number of a Driver | Quality of Service (100 as full marks) | Distance between the Driver and the Passenger | Grade of the Driver |
| --- | --- | --- | --- |
| 4 | 80 | 2.5km | C |
| 8 | 80 | 3km | A |
| 6 | 80 | 3.5km | B |
| 5 | 70 | 3km | A |
| 7 | 70 | 3.3km | C |
| 10 | 65 | 2.5km | C |
| 1 | 60 | 1.3km | B |
| 2 | 50 | 700m | B |
| 3 | 40 | 2km | D |
| 9 | 40 | 3km | D |

In one embodiment, the drivers are ranked according to such a sequence that the service quality of the driver is considered as the priority option, the grade of the driver is considered as the second option and the distance between the driver and the passenger is considered as the third option. The corresponding rank is shown in the following table:

| Number of a Driver | Quality of Service (100 as full marks) | Grade of the Driver | Distance between the Driver and the Passenger |
| --- | --- | --- | --- |
| 8 | 80 | A | 3km |
| 6 | 80 | B | 3.5km |
| 4 | 80 | C | 2.5km |
| 5 | 70 | A | 3km |
| 7 | 70 | C | 3.3km |
| 10 | 65 | C | 2.5km |
| 1 | 60 | B | 1.3km |

(continued)

| Number of a Driver | Quality of Service (100 as full marks) | Grade of the Driver | Distance between the Driver and the Passenger |
| --- | --- | --- | --- |
| 2 | 50 | B | 700m |
| 3 | 40 | D | 2km |
| 9 | 40 | D | 3km |

In some embodiments, the grade of the driver may be considered as the priority option, one of the service quality of the driver and the distance between the driver and the passenger may be considered as the second option, and the other may be considered as the third option. Herein, the specific method of ranking will not be described.

From the view of a passenger, a driver closer to the passenger may be considered to be with higher service quality. For example, a driver 100 meters away from the passenger is usually superior to a driver 1 kilometer away from the passenger to accept the order.

The grade of a driver may also be taken into consideration. A driver with higher service quality in historical services may be more attractive to the passenger. Similarly, a driver with better credit may make the transaction easier.

Additionally, the road condition along the driving routes may be taken into consideration. For example, a driver from a congested area and a driver from an unimpeded area may be different in superiority for the passenger.

There is a negative correlation between the auction time and the rank of the drivers. In some embodiments in which the rank of the drivers is D1>D2>···>Dn, in response to determining that the driver Dn is snatching the order, the auction time may be increased and the drivers with higher rank than that of the driver Dn may snatch the order in the remaining time. Alternatively, in response to determining that the driver D1 is snatching the order, the auction time may be reduced, and the drivers waiting for the present auction may be released to attend the next auction of an order after the present auction is concluded.

For example, the order may be distributed to 10 drivers for the auction. In some embodiments in which the auction time ranges from 0s to 7s, [0, 7], the auction time may be divided into 10 segments. The auction time may be 0 after the top1 driver snatched the order. The auction time may be 0.7s after the top2 driver snatched the order. As such, the auction time may be 6.3s after the top10 driver snatched the order.

| The Driver | $D_1$ | $D_2$ | $D_3$ | $D_4$ | $D_5$ | $D_6$ | $D_7$ | $D_8$ | $D_9$ | $D_{10}$ |
| --- | --- | --- | --- | --- | --- | --- | --- | --- | --- | --- |
| the Auction Time | 0 | 0.7 | 1.4 | 2.1 | 2.8 | 3.5 | 4.2 | 4.9 | 5.6 | 6.3 |

Application Scenarios

For example, drivers to which orders have been pushed may be recorded during an order distribution. Scores the passenger and the driver give to each other may be recorded in a scoring module. In some embodiments in which an order is pushed to 10 drivers and the drivers are ranked according to their superiority as driver D1, driver D2, ···, driver D10, the process of the auction may be described in the following.

1) Assuming that the driver D1 snatches the order first

Since the driver is the optimal driver, the auction may be concluded directly. In the meanwhile, other drivers may be informed that the auction has been concluded and that the order is obtained by the driver D1 with a highest matching degree. Moreover, the passenger may also receive a report that the driver D1 has successfully snatched the order.

2) Assuming that the driver D5 snatches the order first

A. For the drivers D6~D10, the auction of the order may be considered to have concluded since they cannot beat the driver D5 and obtain the order. As such, the order may be obtained by the driver D5, and the passenger may receive a report that the order has been snatched. However, the driver that may finally obtain the order is still in pending.

B. For the drivers D1~D4, there may be an opportunity to snatch the order within a time period since they may win the order if they snatch the order.

C. In some embodiments in which the driver D2 snatches the order within the time period, the order may be considered to have concluded for the drivers D3-D5. As such, the order may be obtained by the driver D2. However, the driver D1 may continue to snatch the order.

D. In some embodiments in which the driver D1 do not snatch the order after the driver D2 snatched the order, the auction of the order may be concluded, and the passenger may receive a report that the driver D2 has successfully snatched the order.

E. In some embodiments in which the driver D1 snatches the order within the time period, the auction of the order may be concluded directly, and the passenger may receive a report that the driver D1 has successfully snatched the order.

The Assignment of Scores of a Service Order

The processing module 130 may assign a suitable score for a service order based on a determination of the value of the order. The processing module 130 may bring the score into the auction of the order, which may influence the success rate of the service provider in an order snatching and boost the service provider to undertake or perform some service orders not popular with drivers in some circumstances. The general principle is: if a service request has difficulty in being accepted by multiple service providers, the service request may be assigned a relatively high score; if a service request is accepted by multiple service providers, the service request may be assigned a relatively low score.

In order to achieve the above purpose, the technical solution in some embodiments of the present disclosure is using a service order scoring system that may boost transaction of orders based on a determination of the value of the order. The operation of the system may include two steps: assigning a score for an order and handling unusual events. Herein, the step of assigning a score for an order may refer to determining the value of the order according to historical data and assigning a corresponding score for the order. The step of handling unusual events may refer to evaluating the assigned score based on the behaviors and coordinate trajectories of the service provider and the service user after the order is snatched by the service provider.

The historical data may be obtained from an order set. The order set may include the time an order initiated and the distance between the service provider and the service user.

Assigning a score for an order may include the following steps for a transportation service.

Step one: A time period T may be preset. Multiple time points, T1, T2, ···, Tn, may be set in the time period T, dividing the time period into multiple time intervals, 0~T1, T1~T2, ···, Tn-1~Tn.

Step two: Multiple order snatching probabilities may be assigned for each time interval.

Step three: Different orders may be assigned corresponding values of score according to different order snatching probabilities in each time interval. The order snatching probability may be obtained from a pre-calculated probability set.

Step four: A time period T=180s may be preset. Five time points, 30s, 60s, 90s, 120s and 150s, may be set in the time period, dividing the time period into six time intervals, 0~30s, 30s~60s, 60s~90s, 90s~120s, 120s~150s and 150s~180s.

Step five: Multiple order snatching probabilities may be assigned for each time interval.

Step six: Different orders may be assigned corresponding values of score according to different order snatching probabilities in each time interval.

It should be noticed that the above description is merely illustrative and is not intended to limit the scope of the present disclosure. It may be understood that details such as the length of the time period, the length of the time interval and the number of the time intervals may vary with transportation service conditions.

Preferably, the time interval may further refer to a particular time period in the lifecycle of an order.

Preferably, the score assigning module may further refer to assign a negative score for an order with high value and a positive score for an order with a low value. Herein, the value of the order may be determined by the processing module 130.

Preferably, the order set may be obtained from an information set of a car-calling passenger. Moreover, the information set of a car-calling passenger may include at least the time an order initiated, the driving distance of the order and the location of the passenger.

Handling unusual events may include the following steps.

Step one: Trajectories of the geographic locations of the driver and the passenger may be collected after the driver successfully obtained the order.

Step two: In some embodiments in which the driver confirms that the passenger has been picked up using a service app, whether the service provider has picked up the passenger may be determined according to the current geographic locations of the driver and the passenger. In response to determining that the service provider has picked up the passenger, the trajectories of the geographic locations of the driver and the passenger may be further recorded.

Step three: In some embodiments in which the passenger confirms to have arrived at the destination or have finished the payment using a service app, whether the driver has sent the passenger to the destination may be determined according to the current geographic location of the passenger. In some embodiments, in response to determining that the coordinates of the passenger are located at the destination, a score may be assigned to the driver. Alternatively, in response to determining that the coordinates of the passenger are not located at the destination, the order may be considered as a cheating order, and the score of the driver may be deducted.

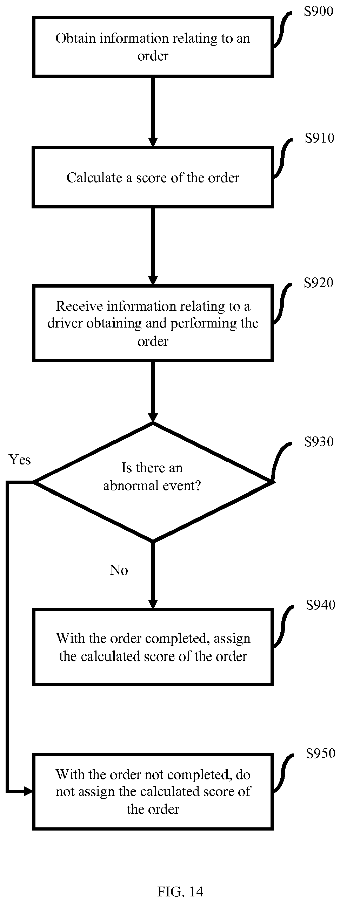

FIG. 14 is a flow chart illustrating an example of a process of scoring in a transportation service according to some embodiments of the present disclosure.

In step S900, information relating to the order may be obtained. The information relating to the order may include departure location information, destination information and time the transportation service request initiated. The information may further include requirements for the driver (the service provider), e.g., vehicle types (including vehicle models such as a car, SUV, or Jeep; engine types such as electric engine or internal combustion engine; fuel consumption; horsepower; brand, etc.). The information may also include tip information or reasons for initiating the transportation service request, such as heading to the airport for a plane or going to a hospital, etc.

In step S910, a score of the order may be calculated, which may refer to calculating a corresponding score of the order according to the information relating to the order. A score may be affected by various parameters, such as the departure location and the destination of an order, the path length and/or distance between the departure location and the destination, the vehicle type, the amount of tip, urgency degree or reasons of the requested transportation service.

In step S920, information relating to the driver that has obtained and performed the service content of the order may be received. After the service content is confirmed to have been performed, the driver's information such as age, gender, criminal records, credit records, working years, or the like may be obtained by the system. The system may retrieve the information from the records on the cloud.

In step S930, whether an abnormal event has happened may be determined. In some embodiments, in response to determining that there is not an unusual event, step S940 may be performed, and the calculated score of the order may be assigned due to the completion of the order. Alternatively, in response to determining that there is an unusual event, step S950 may be performed, and the calculated score of the order may not be assigned to the driver due to that the order has not been completed. Herein, the unusual event may refer to that the transportation service is not completed due to various reasons. For example, a driver may maliciously induce a passenger to confirm that the order has been completed, or a driver may collude a passenger to cheat, or the like. The unusual event may be determined through the locations of the vehicle and the passenger. The locations may be provided by the positioning device installed on the vehicle and the positioning module in the smart device of the passenger.

While the transportation service has been taken as an example in some embodiments to illustrate the operations of scoring, this is merely illustrative. It may be understood that other types of service, such as food delivery service, laundry service, and goods delivery service, may follow similar operations of scoring to assign scores to a service. More particularly, for example, a score may be assigned to a service provider after the service provider has performed and completed the content of the requested service, or a score may be deducted after some unusual events of the service provider are found.

The determining process will be illustrated by combining some embodiments with different determination standards and corresponding criteria in the following.

Determination of Hitchhiking Order

The present order distribution system used in distributing transportation service orders generally pushes a transportation service order to all taxis and the drivers of the taxis need to snatch the order. This system does not take individualized demands of each taxi driver into consideration. For example, a driver may prefer to receive an order that is in accordance with the drive-in or drive-out time and that locates near his/her home when the driver drives in or drives out. However, the current order distribution system used in transportation service does not take the association between the pickup time or the departure of an order and the drive-in or drive-out time or location of a driver into consideration. Orders at such time and location are treated as ordinary orders and distributed together. As such, a driver may not be assigned or snatch an order that is along the same route as the route on which the driver is going to return home.

Hitchhiking may generally be referred to as thumbing a lift. If the direction of a transportation service requested by a passenger is the same as or similar to the driving direction of a driver at the very moment or in a time period, the requested transportation service may be referred to as a hitchhiking order. A resident place may refer to places where the service provider frequently stays or reaches in a particular time period. For example, the resident place may include home address, working place of the driver or his/or spouse, frequently visited dining place, schools his/her children attending, frequently visited gas station, frequently visited gymnasium/sports hall/swimming pool, or the like.

In some embodiments of the present disclosure, hitchhiking orders may be recognized based on resident place information of a driver. According to the rules of hitchhiking, orders that are more suitable in time and distance may be pushed to the driver when the driver drives out, drives in, or drives towards or leaves the resident place, or the like. As such, the pertinence of the order distribution system in assigning orders and the efficiency as well as the accuracy of the driver in accepting orders may be improved.

In some embodiments of the present disclosure, the hitchhiking orders may be determined based on the home address information of the driver. Whether an order is a hitchhiking order of a driver may be determined by analyzing information from the driver and information relating to the transportation service requested by a passenger. Herein, the information from the driver may include information relating to the current location and home address of the driver. The information may further include the driver's serial number, drive-out location, drive-in location, drive-out time or drive time. The current location of the driver may be obtained by the positioning module of the smart device in the driver's vehicle and sent to the system. The information relating to the transportation service requested by the passenger may include a serial number, departure, destination and pickup time of an order.

In some embodiments of the present disclosure, the system may determine whether an order is a hitchhiking order of a driver by analyzing information from the driver and information relating to the transportation service requested by a passenger. Herein, the information from the driver may include information relating to the current location and resident places of the driver, or the like. The current location of the driver may be obtained by the positioning module of the smart device in the driver's vehicle and sent to the system. The resident place information of the driver may be obtained from historical data about the current location and motion trajectory of the driver.

Determination of Hitchhiking

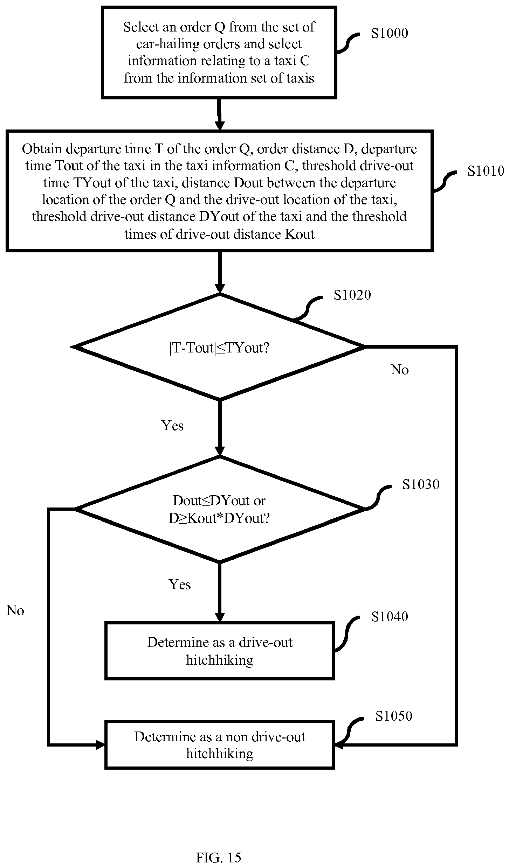

FIG. 15 is a flow chart illustrating an example of a process for determining a drive-out hitchhiking by the processing module according to some embodiments of the present disclosure.

In some embodiments, the processing module 130 may be configured to determine whether the current transportation service requested by a passenger constitutes a hitchhiking order of a particular driver.

The processing module 130 may be configured to determine whether the requested transportation service from a passenger belongs to the hitchhiking order of the particular driver according to information obtained from the receiving module 110 in combination with information relating to the historical location and trajectory of the driver or information relating to the resident places. More particularly, for example, the information from the receiving module 110 may include request information relating to the transportation service from the passenger and service information relating to the transportation service from the driver. The information relating to the historical location and trajectory of the driver may be stored in the system. The information relating to the resident places may be inputted by the driver or calculated by the system.

The information relating to each of the transportation service orders may include a serial number, departure information (e.g., longitude-latitude of the departure location), destination information (e.g., longitude-latitude of the destination), and pickup time of an order. The information relating to the order described above are not intended to be limiting. Other information relating to the order may also be included, such as reasons to request a transportation service and preferences or requirements for a transportation service provider, or the like. The preferences or requirements may include the service provider's age, gender, driving experience, the types and performance of the vehicle, or the like.

The information relating to each of the taxis may include a serial number, current location (e.g., the current longitude-latitude), drive-out location (e.g., longitude-latitude of the drive-out location), drive-in location (e.g., longitude-latitude of drive-in location), drive-out time or drive-in time of the driver. The information relating to the order described above are not intended to be limiting. Other information relating to the order may also be included, e.g., the preferences or requirements of a transportation service user, etc. The preferences or requirements may include requirements or limitations of the carried luggage, or the like.

The methods of calculating a drive-out hitchhiking order based on the determination rules of drive-out hitchhiking may include the following steps.

The information relating to the taxi may include a serial number, current location, drive-out location and drive-out time of the driver.

In step S1000, an order Q may be selected from the set of car-hailing orders and information relating to a taxi C may be selected from the information set of taxis.

In step S1010, the pickup time T of the order Q, an order distance D (a distance between the current location of the driver and the departure location of the order), a pickup time Tout of the taxi in the taxi information C, a threshold drive-out time TYout of the taxi, distance (Dout) between the departure location of the order Q and the drive-out location of the taxi, a threshold drive-out distance DYout of the taxi, and the threshold times of drive-out distance Kout.

In step S1020, the absolute value of T minus Tout and the value of TYout may be compared. In some embodiments, in response to determining that the absolute value of T minus Tout is less than or equal to Tout ($|T-Tout|<=TYout$), the order Q may be considered to satisfy condition (1) and step S1030 may be performed. Alternatively, in response to determining that the absolute value of T minus Tout is greater than Tout ($|T-Tout|>TYout$), the order Q may be considered as not satisfying condition (1), and step S1050 may be performed and determine that the order is not the drive-out hitchhiking order of the driver.

In step S1030, the value of Dout and the value of DYout or the value of order distance D and the value of Kout times DYout may be compared. In some embodiments, in response to determining that Dout is less than or equal to DYout (Dout<=DYout), or that the order distance D is more than or equal to the value of Kout times DYout (D>=Kout*DYout), the order Q may be considered as satisfying condition (2) and step S1040 may be performed and determine that the order is the drive-out hitchhiking order of the driver. Alternatively, in response to determining that Dout is more than DYout (Dout>DYout), or that the order distance D is less than the value of Kout times DYout (D<Kout*DYout), step S1050 may be performed and determine that the order is not the drive-out hitchhiking order of the driver.

The threshold drive-out time TYout of a taxi is [0.5, 1.5] hours, namely, ranging from 0.5 hour to 1.5 hours. In some embodiments, there may be few or no selected matching orders in response to determining that the value of TYout is low. Alternatively, in response to determining that the value of TYout is high, the drive-out time for the driver may be advanced or delayed severely.

The threshold drive-out distance may be [3000, 5000] meters, namely, ranging from 3000 meters to 5000 meters. In some embodiments, there may be few or no selected matching orders in response to determining that the value of DYout is low. Alternatively, in response to determining that the value of DYout is high, the idle driving distance may be relatively long for the driver.

The threshold times of drive-out distance may be [2, 30] times, namely, ranging from 2 times to 30 times. In some embodiments in which the value of DYout is fixed, there may be multiple selected matching orders in response to determining that the value of Kout is low. Alternatively, in response to determining that the value of Kout is high, there may be few or no selected matching orders.

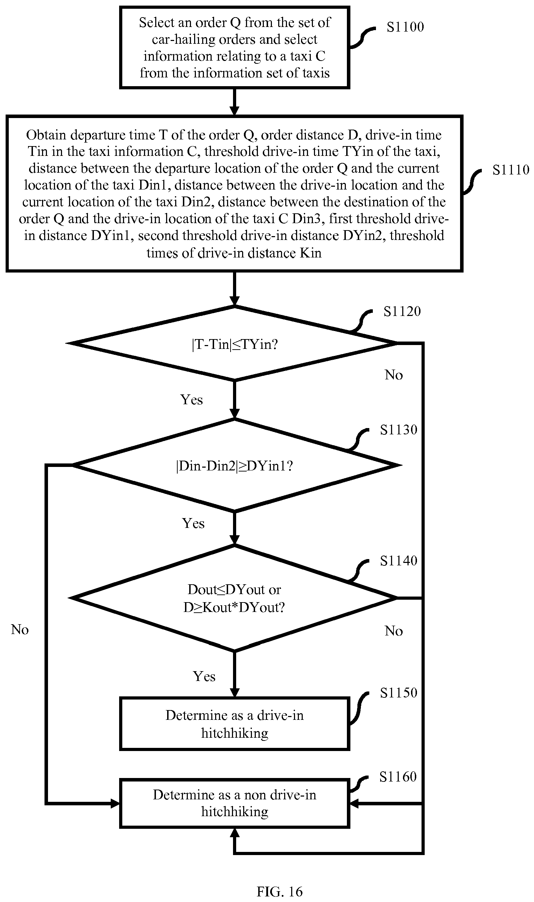

FIG. 16 is a flow chart illustrating an example of a process for determining a drive-in hitchhiking by the processing module 130 according to some embodiments of the present disclosure. In this flow chart, an order may be determined whether or not to constitute a drive-in hitchhiking. The taxi information may include the serial number, the current location, the drive-in location (where the driver sets off to work in a day), and the drive-in time (when the driver sets off to work in a day), of a driver.

In step S1100, a car-hailing order Q may be randomly selected from the car-hailing order set and a piece of taxi information C may be randomly selected from the taxi information set.

In step S1110, a pickup time T of the order Q, an order distance D, a drive-in time Tin of the taxi information C, a threshold drive-in time TYin of the taxi may be acquired. A distance between the departure of the order Q and the current location of the taxi may be designated as Din1. A distance between the drive-in location and the current location of the taxi may be designated as Din2. A distance between the destination of the order Q and the drive-in location of the taxi C may be designated as Din3. The distance of the order Q may be designated as D. The first threshold drive-in distance may be designated as DYin1. The second threshold drive-in distance may be designated as DYin2. The threshold of times of drive-in distance may be designated as Kin.

In step S1120, the absolute value of T minus Tin may be compared with the value of TYin. In some embodiments, in response to determining that the absolute value of T minus Tin is no more than TYin (i.e., |T-Tin|<TYin), the order Q may be considered to satisfy condition (1) and step S1130 may be performed. Alternatively, in response to determining that the absolute value of T minus Tin is more than TYin (i.e.|T-Tin|>TYin), step S1160 may be performed to determine that the order is not the drive-in hitchhiking order of the driver.

In step S1130, the value of Din1 minus Din2 may be compared with the value of DYin1. In some embodiments, in response to determining that the value of Din1 minus Din2 is not less than DYin1 (i.e., Din1-Din2>DYin1), the order Q may be considered to satisfy condition (2) and step S1140 may be performed. Alternatively, in response to determining that the value of Din1 minus Din2 is less than DYin1 (i.e.,.Din1-Din2<DYin1), step S1160 may be performed and determine that the order is not the drive-in hitchhiking order of the driver.

In step S1140, the value of Din3 may be compared with the value of DYin2 or the order distance D and the value of Kin multiplied by Din3. In some embodiments, in response to determining that Din3 is no more than DYin2 (i.e., Din3 ≤DYin2), or the distance of the order D is no less than the value of Kin multiplied by Din3 (i.e., D≥Kin*Din3), the order Q may be considered to satisfy condition (3) and step S1150 may be performed and determine that the order is the drive-in hitchhiking order of the driver. Alternatively, in response to determining that Din3 is more than DYin2 (i.e., Din3>DYin2), or that the distance of the order D is less than the value of Kin multiplied by Din3 (i.e., D<Kin*Din3), step S1160 may be performed to determine that the order is not the drive-in hitchhiking order of the driver.

It should be noted that the sequence of step S1120, S1130 and S1140 may be interchangeable. Meanwhile, not all of the three steps are necessary, and one or two determination procedures may be omitted according to practical requirements without affecting the determination of whether an order is the drive-in hitchhiking order of the driver in further processing. For example, the order may be determined whether or not to be the drive-in hitchhiking order of the driver merely by whether the condition of step S1120 is satisfied, rather than further proceeding to determination procedures of S1130 and/or S1140.

The threshold drive-in time TYin of the driver may be designated as [0.5, 1.5] hours, namely, ranging from 0.5 to 1.5 hours. If the value of TYin is low, there may be no or few number of orders that can be combined and matched. Alternatively, if the value of TYin is high, the drive-in time may be advanced or postponed for too long.

The first threshold drive-in distance DYin1 may be in a variety of ranges. For example, DYin1 may be designated as [1000, 5000] meters, namely, ranging from 1000 to 5000 meters. When the value of DYin1 is low, there may be a large number of orders that can be combined and matched. Alternatively, when the value of DYin1 is high, the idle driving distance may be relatively long.

The second threshold drive-in distance DYin2 may be in a variety of ranges. For example, DYin2 may be designated as [3000, 5000] meters, namely, ranging from 3000 to 5000 meters. When the value of DYin2 is low, there may be few number of orders that can be combined and matched. Alternatively, when the value of DYin2 is high, the idle driving distance may be relatively long.

The threshold of the times of drive-in distance Kin may be designated as [2, 10] times, namely, ranging from 2 to 10 times. When the value of Kin is low, there may be a large number of orders that can be combined and matched. Alternatively, when the value of Kin is high, there may be no or few number of orders that can be combined and matched.

The above descriptions of the threshold drive-in time, the threshold drive-in distance, the threshold of the times of drive-out distance, the threshold drive-in time, the first threshold drive-in distance, the second threshold drive-in distance, and the threshold of the times of drive-in distance are provided for the purposes of illustration, and not intended to limit the scope of the present disclosure.. For persons having ordinary skills in the art, any suitable ranges of the threshold may be implemented under the teaching of the present disclosure and on the condition that the all of above functions are realized. However, those ranges may not depart the spirit and scope of this disclosure.

After calculating and determining the hitchhiking order for a particular driver, the processing module 130 may transfer the result of the hitchhiking determination to the output module 140. As such, the output module 140 may push the determination result to the specific driver. Alternatively, the processing module 130 may provide a third party with the determination result. As such, the specific driver can search or acquire the determination result.

Application Scenarios

Taking Beijing as an example, the drive-out time of a driver is 6:00 am and the home address of the driver is No. 10, Zhongguancun Street.

The server terminal of a car-hailing app or a calling center may store multiple car-hailing orders collected from passengers. For example, the format of the car-hailing orders collected from the passengers is shown as follows:

| Serial Number of Order | Phone Number of Passenger | Departure Location | Departure Time | longitude- Latitude of the Departure Location |
|---|---|---|---|---|
| 140002 | 13300000001 | No. 10 Zhongguancun Street | 2014/2/2 06:00 | XXXXXX |
| 140012 | 13300000002 | No. 20 Zhongguancun Street | 2014/2/2 18:00 | XXXXXX |

Normally, when a passenger transmits a request for vehicle service, the information relating to the order may be sent to the server in a format as illustrated above.

During the traveling process, a taxi may report the longitude-latitude of its current location to the server at intervals (e.g., 10 seconds) via a smart device of the driver. The format of the information is shown as follows:

| Serial Number of Driver | Report Time | Current Location | Longitude-latitude Information |
|---|---|---|---|
| 12345 | 2014/2/2 06:00 | No. 10 Zhongguancun Street | XXXXXX |

The server may match the order with the driver based on the current order information and the driver's information. According to the rule of drive-out hitchhiking, the order 140002 belongs to a drive-out hitchhiking of the driver 12345. As such, the corresponding push notification may be set as "hitchhiking order" to remind the driver when broadcasting the order.

Application Scenarios

Taking Beijing as an example, the drive-in time of a driver is 6:00 pm and the home address of the driver is No. 10, Shangdisan Street.

The format of real-time car-hailing orders collected from passengers is shown as follows:

| Serial Number of Order | Phone Number of Passenger | Departure Location | Departure Time | Destination |
|---|---|---|---|---|
| 140002 | 13300000001 | 10 Zhongguancun Street | 2014/2/2 06:00 | No. 29 Zhichun Road |
| 140012 | 13300000002 | 20 Zhongguancun Street | 2014/2/2 18:00 | No. 10 Shangdisan Road |

During the traveling process, a taxi may report the longitude-latitude of its current location to the server in an interval of 10 seconds via a smart device of the driver. The format of driver's information is shown as follows:

| Serial Number of Driver | Report Time | Current Location | Longitude-latitude Information |
|---|---|---|---|
| 12345 | 2014/2/2 06:00 | 10 Zhongguancun Street | XXXXXX |

The server may match the order with the driver based on the current order information and the driver's information.

According to the rule of drive-in hitchhiking, the order 140012 belongs to a drive-in hitchhiking of the driver 12345. As such, the corresponding push identification may be set as "hitchhiking order" to remind the driver when broadcasting the order.

Application Scenarios

Taking driver Wang in Beijing as an example, the home address of driver Wang is Xibeiwang in Beijing. Driver Wang's drive-out time is 9:00 am and drive-in time is 8:00 pm. Driver Wang may habitually turn on the app when driving out every day to start the work of a day. Correspondingly, the trace of driver Wang in a day is "home -location 1- location 2... location n-home".

A smart device of a driver may acquire information relating to the driver such as identity information, the real-time location, or the like. The smart device of the driver may send out the information regularly or irregularly. For example, the format of an information set of eight pieces of information collected from the driver within a time period is shown as follows:

| Serial Number | Phone Number of Driver | Time | Longitude | Latitude |
|---|---|---|---|---|
| 29912132 | 13300000001 | 2014-07-20 11:28:12 | 116.236723 | 39.543692 |
| 29912132 | 13300000001 | 2014-07-20 17:28:12 | 130.236723 | 55.543692 |
| 29912132 | 13300000001 | 2014-07-21 8:28:12 | 100.236723 | 39.543692 |
| 29912132 | 13300000001 | 2014-07-21 20:50:12 | 135.236723 | 66.543692 |
| 29912132 | 13300000001 | 2014-07-22 5:30:12 | 114.236723 | 39.543692 |
| 29912132 | 13300000001 | 2014-07-22 18:28:12 | 133.236723 | 58.543692 |

(continued)

| Serial Number | Phone Number of Driver | Time | Longitude | Latitude |
|---|---|---|---|---|
| 29912132 | 13300000001 | 2014-07-22 10:10:12 | 114.236723 | 39.543692 |

In some embodiments, the trace of the driver may be sent to a remote server at intervals in a format of the information as shown above.

The server may figure out the possible resident places of a driver according to a Dbscan clustering algorithm after acquiring the trace of the driver. For example, the following table shows that the driver may come back to a place with the following longitude-latitude at about 8:00 pm every night:

| Serial Number | Phone Number of Driver | Time | Longitude | Latitude |
|---|---|---|---|---|
| P9912132 | 113300000001 | 20:00:00 | 116.236723 | 39.543692 |

The place may be the home address of the driver or the work address of the driver.

It should be noted that algorithms applied to calculate the resident place of a service provider are not limited to a Dbscan algorithm. Algorithms applied to calculate the resident place of a service provider may include partitioning methods such as K-means, K-medoids, CLARA (Clustering LARge Application), CLARANS (Clustering Large Application based upon RANdomized Search), FCM, etc. Algorithms applied to calculate the resident place of a service provider may include hierarchical methods such as BIRCH (Balanced Iterative Reducing and Clustering using Hierarchies), binary-positive method, and RCOSD (rough clustering of Sequential data). Algorithms applied to calculate the resident place of a service provider may include density-based methods such as OPTICS (Ordering Points To Identify the Clustering Structure), network-based methods such as STING (Statistical Information Grid), CLIQUE (Clustering in QUEst) and Wave-Cluster. Algorithms applied to calculate the resident place of a service provider may also include model-based methods such as Cobweb, CLASSIT, etc.

Then, when the driver works until around 19:00, an order to a place of the longitude-latitude is (116.236723, 39.543692) or in the direction of multiple kilometers away from the longitude-altitude (116.236723, 39.543692) may be recommended to the driver. The driver may be more willing to snatch such kinds of orders than any other order.

After choosing a suitable order for the driver, the order may be further labeled as "hitchhiking order" when broadcasted. As such, the driver may be reminded that the order is in the direction of the place for work transition.

Application Scenarios

Taking driver Wang in Beijing as an example, driver Wang's drive-out time is 9:00 am and drive-in time is 8:00 pm every day. Driver Wang may habitually turn on the positioning function of his smart phone to start the work of a day. Thus, the trace of driver Wang is "home - location 1- location 2... location n-home" every day.

The server of a car-hailing app or a call center may store plenty of reported trace information relating to a driver. In this scenario, the format of an information set collected from the driver within a time period is shown as follows:

| Serial Number | Phone Number of Driver | Time | Longitude | Latitude | Dwell Time |
|---|---|---|---|---|---|
| 29912132 | 13300000001 | 2014-07-20 11:28:12 | 116.236723 | 39.543692 | 5 min |
| 29912132 | 13300000001 | 2014-07-20 17:28:12 | 130.236723 | 55.543692 | 30 min |
| 29912132 | 13300000001 | 2014-07-21 8:28:12 | 100.236723 | 39.543692 | 2 min |
| 29912132 | 13300000001 | 2014-07-21 20:50:12 | 135.236723 | 66.543692 | 26 min |
| 29912132 | 13300000001 | 2014-07-22 5:30:12 | 114.236723 | 39.543692 | 10 min |

(continued)

| Serial Number | Phone Number of Driver | Time | Longitude | Latitude | Dwell Time |
|---|---|---|---|---|---|
| 29912132 | 13300000001 | 2014-07-22 18:28:12 | 133.236723 | 58.543692 | 6 min |
| 29912132 | 13300000001 | 2014-07-22 10:10:12 | 114.236723 | 39.543692 | 3 min |
| 29912132 | 13300000001 | 2014-07-22 18:18:12 | 133.236723 | 58.543692 | 40 min |

The server may figure out the possible resident places of a driver according to Dbscan clustering algorithm after acquiring the trace of the driver. The longitude-latitude of a place may be reserved if the dwell time is longer than 25 minutes. According to calculations by the geometric average method, the place of the driver having lunch may be in surrounding areas of the following longitude-latitude:

| Serial Number | Phone Number of Driver | Time | Longitude | Latitude |
|---|---|---|---|---|
| 29912132 | 13300000001 | 12:28:12 | 130.236723 | 55.543692 |

Then, when the driver works until around 12:00 pm, an order in the direction of the longitude-altitude (130.236723, 55.543692) may be recommended to the driver. The driver may be more willing to snatch such kinds of orders than any other order.

After choosing a suitable order for the driver, the order may be further labeled as "hitchhiking order" when broadcasted. As such, the driver may be reminded that the order is in the direction of the place for work transition.

Determination of the Driver Activity

The user experience of using a car-hailing software may be different between a driver and a passenger. The user experience of the driver may include the number of orders, whether or not to obtain an order or the number of orders that received. The driver with bad user experience may usually snatch no order online, and may think that there is no actual income. Thus, bad user experience may result in losing some drivers. Therefore, it is necessary to improve the capacity of the system by retaining these drivers with the bad user experience. The drivers with bad user experience may be retained by determining online activities of the drivers and operating targeted strategy to the inactive drivers.

An implementation method of this embodiment may include finding out a losing driver by filtering the operating drivers, and recalling the losing driver by high-quality orders. In order to solve the technical problem described above, a technical solution adopted in this embodiment is to determine whether a driver is inactive according to the driver's online situations and/or situations of snatching orders during a time period.

In this embodiment, particular functions of the processing module 130 is configured for a particular driver. Whether the driver is inactive may be determined by the driver's online situations and/or situations of snatching orders during a time period. Preferably, the situation of snatching orders may be received from an information receiving module 110, a historical information set of car-hailing orders. Herein, order information in historical information set of car-hailing orders may include a serial number of the order, the departure, the destination, the pickup time, and a serial number of a driver receiving the order.

The online situations may obtain from a taxi information set. The taxi information in the taxi information set may include the serial number of a driver, the broadcasting time, and the taxi location.

The inactive driver information in the inactive driver set may include at least the serial number of a driver.

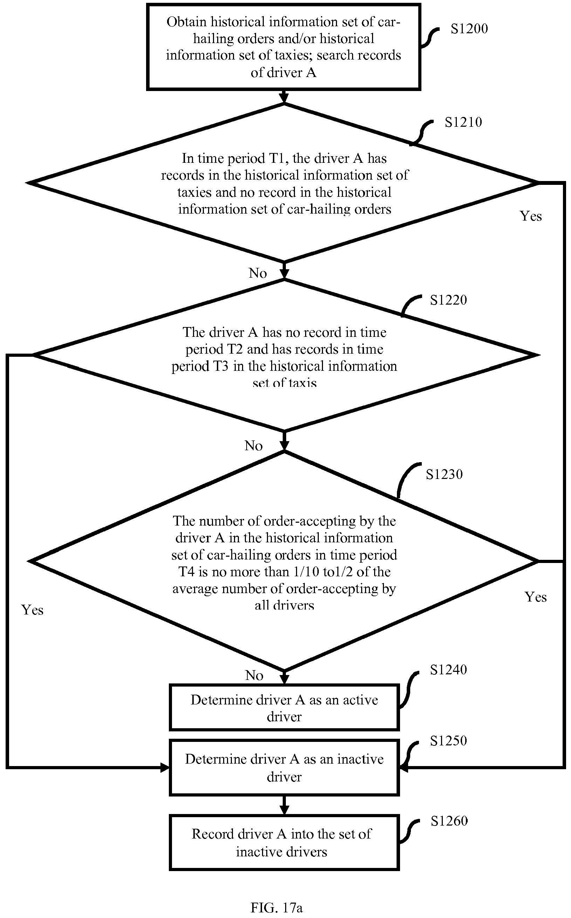

FIG. 17a is a flow chart illustrating an example of a process for determining the activity of a driver by the processing module 130 according to some embodiments of the present disclosure.

Preferably, the process of determining an inactive driver by the processing module130 may include the following steps, as shown in FIG. 17a.

In step S1200, whether there are any records of a certain driver A may be determined by traversing the historical information set of car-hailing orders and/or the information set of taxies.

In step S1210, whether the driver is inactive may be determined. In some embodiments, in response to determining that driver A has records in the information set of taxies in the latest time period T1 and has no record in the historical information set of car-hailing orders in the latest time period T1, the driver A may be determined as an inactive driver and step S1250 may be performed, recording the driver A into a set of inactive drivers. Alternatively, in response to determining that the driver A has records both in the information set of taxies and in the historical information set of car-hailing orders in the latest time period T1, step S1220 may be performed.

The time period T1 may be designated as different values such as 5 days, 7 days, 10 days, 15 days, 30 days, 90 days, etc., that can be longer or shorter. The longer the time period is designated, the less influence random factors have on the determination of the driver A's activity, while the amount of information will increase accordingly.

In step S1220, whether the driver is inactive may be determined. In some embodiments, in response to determining that the driver A has no record in the information set of taxies in the latest time period T2 and has records in the information set of taxies in the latest time period T3, the driver A may be determined as an inactive driver and step S1250 may be performed. In step S1250, the driver A may be recorded into a set of inactive drivers. Alternatively, in response to determining that the driver A has records in the information set of taxies in the latest time period T2 and has records in the information set of taxies in the latest time period T3, step S1230 may be performed.

In some embodiments, the time period T2 may be designated as 1 to 5 days and the time period T3 may be designated as 15 to 45 days. It can be understood that T2 and T3 may also be designated as other different values (e.g., 5 days, 7 days, 10 days, 15 days, 30 days, 90 days, etc.) that can be longer or shorter. Similarly to T1, the longer the time period is designated, the less influence random factors have on the determination of the driver A's activity, while the amount of information may increase accordingly.

In step S1230, whether the number of orders accepted by driver A within a latest time period T4 is no more than 1/10 to 1/2 of the average number of orders accepted by all drivers in the historical information set of car-hailing orders may be determined. In some embodiments, in response to determining that the number of orders accepted by driver A within the latest time period T4 is no more than 1/10 to 1/2 of the average number of orders accepted by all drivers in the historical information set of car-hailing orders, step S1250 may be performed to determine that driver A is an inactive driver. Alternatively, in response to determining that the number of orders accepted by driver A within the latest time period T4 is more than 1/10 to 1/2 of the average number of orders accepted by all drivers in the historical information set of car-hailing orders, step S1240 may be performed to determine that driver A is an active driver. The time period T4 may be 1 to 5 days;

In step S1260, driver A may be recorded into the set of inactive drivers.

Preferably, the information relating to car-hailing orders may be obtained from a real-time information set of car-hailing orders. Information relating to each of the orders in the real-time information set of car-hailing orders may include at least the serial number of the order, the departure location, the destination, and the pickup time.

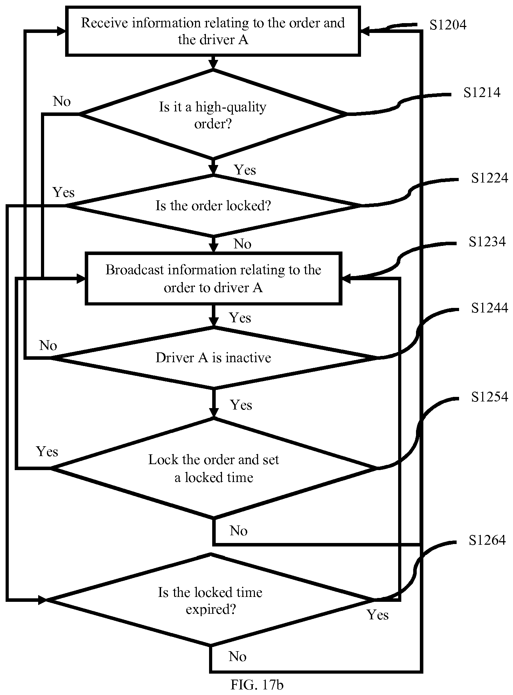

FIG. 17b is a flow chart illustrating a process for distributing orders that combined with a determination of inactive drivers according to some embodiments of the present disclosure.

Preferably, the operation strategy implementing module may traverse each information relating to car-hailing orders in the information set of real-time car-hailing orders, and may implement the following steps:

In step S1204, a car-hailing order in the information set of the real-time car-hailing order and information relating to an online driver A may be acquired.

In step S1214, whether the car-hailing order is a high-quality order may be determined. In some embodiments, in response to determining that the car-hailing order is not a high-quality order, step S1234 may be performed. In step S1234 the information relating to the car-hailing order to the driver may be broadcasted. Then step S1204 may be iteratively performed and the information relating to the next online driver may be acquired. Alternatively, in response to determining that the car-hailing order is a high-quality order, step S1224 may be performed.

In step S1224, whether the car-hailing order is locked may be determined. In some embodiments, in response to determining that the car-hailing order is locked, step S1264 may be performed. Alternatively, in response to determining that the car-hailing order is not locked, step S1234 may be performed, broadcasting the information relating to the car-hailing order to the driver.

In step S1264, whether the locked time is expired may be determined. In some embodiments, in response to determining that the locked time is expired, step S1234 may be iteratively performed, broadcasting the information relating to the car-hailing order to the driver. Alternatively, in response to determining that the locked time is not expired, step S1204 may be iteratively performed, acquiring the information relating to the next online driver.

In step S1234, the order information may be broadcasted to the driver A, and step S1244 may be performed.

In step S1244, whether the driver A is inactive may be determined. In some embodiments, in response to determining that driver A is inactive, step S1204 may be iteratively performed, acquiring the information relating to the next online driver. Alternatively, in response to determining that driver A is active, the order may be locked with designating a lock time, and step S1204 may be iteratively performed, acquiring the information relating to the next online driver.

Preferably, the high-quality car-hailing order may be filtered out based on information relating to departure location, destination, and/or pickup time of each order in the information set of real-time car-hailing orders.

Preferably, steps of filtering high-quality car-hailing orders are showed as follows:

If the destination is determined as airport or railway station based on the destination of an order, the order may belong to the high-quality orders;

In some embodiments, the order distance may be calculated based on the departure location and destination of the order, and whether the order belongs to the high-quality orders may be determined. In some embodiments, with respect to determining that the order distance is greater than X kilometers, the order may belong to the high-quality orders. The value of X may be from 3 to 10 kilometers, or other values such as 20 kilometers, 40 kilometers, 50 kilometers, etc.

In some embodiments, the probability of an order being snatched may be calculated based on information relating to the departure location, destination, and/or pickup time of the order in the information set of the real-time car-hailing orders. A threshold order snatching probability may be preset. If the probability of an order being snatched is greater than the threshold order snatching probability, the order may be a high-quality order.

The technical solution of the present disclosure described above may implement the filtering of inactive drivers and the push of high-quality orders to the inactive drivers. As such, the following technical effects may be achieved:

1. Broadcasting high-quality orders to inactive drivers may be ensured to improve the user experience of the inactive drivers using the car-hailing app. As such, the retention rate of the car-hailing app used by the drivers may be promoted.

2. By broadcasting orders to inactive drivers, the inactive drivers may be promoted to participate in order distribution actively, and individual and total transport capacities of taxies may be enhanced.

Application scenarios

Selecting a driver (e.g., driver A) randomly, driver A may traverse the historical information set of historical car-hailing orders and the information set of taxies to determine whether there is a record of the driver A.

If there are some records of driver A in the information set of taxies in the latest time period T1, and there is no record of the driver A in the historical information set of car-hailing orders in the latest time period T1, driver A may be determined to be inactive.

The information relating to the driver A may be recorded into the set of the inactive drivers.

Merely by way of example, the time period T1 may be 1 to 5 days. For example, if T1 is 3 days (i.e., T1 = 3 days), the driver A may be online and do not snatch orders in recent 3 days. It indicates that the driver A is always online, and does not snatch orders actively, which belongs to a situation of inactive drivers.

The inactive driver determining module may be implemented by another method described as follows:

Selecting a driver A randomly, driver A may traverse the historical information set of car-hailing orders and the information set of taxies to determine whether there is a record of the driver A.

If there is no record of driver A in the information set taxies in the latest time period T2, and there are records of the driver A in the information set of taxies in the latest time period T3, driver A may be determined to be inactive.

The information relating to the driver A may be recorded into the set of the inactive drivers.

If driver A is not online in recent 3 days and is online in recent 30 days, it may indicate that driver A is not online actively, which also belongs to a situation of inactive drivers.

Merely by way of example, the time period T2 may be 1 to 5 days, and the time period T3 may be 15 to 45 days. For example, if T2 is 3 days (i.e., T2 = 3 days) and T3 is 30 days (i.e., T3 = 30 days), driver A may be online over the last 3 days and not online over the last 30 days. It may indicate that driver A may not be active online, which may correspond to a situation of inactive drivers.

The inactive driver determining module may be implemented by one more methods described as follows:

Select a driver A randomly. Driver A may traverse the historical information set of car-hailing orders and the information set of taxies to determine whether there is a record of driver A.

The average number of orders accepted by drivers in the latest time period T4 may be designated as DX in the information set of historical car-hailing orders. The number of records in the latest time period T4 may be designated as D in the set of car-hailing orders. If D is no more than a tenth to half (i.e., 1/10~1/2) of DX, the driver A may be determined to be inactive.

The information relating to driver A may be recorded into the set of the inactive drivers.

Merely by way of example, the period T2 is 1 to 5 days. For example, T4 is 3 days (i.e., T4 = 3 days), and the average number of orders accepted by all drivers in recent 3 days is designated as 100 in the information set of historical car-hailing orders. As such, if the number of orders accepted by driver A is 10 in recent 3 days, the number of orders accepted by the driver A is a tenth of the average number of orders accepted by all drivers. It indicates that the willingness of the driver to accept the order is weaker than the average willingness of the drivers, which belongs to a situation of inactive drivers.

Determination of a Road Obstacle

Real-time road condition is always complex. For example, long-term or short-term obstacles (e.g., rivers, lakes and seas, collapsed roads, roads under construction, etc.) may make it difficult to offer a transportation service. At present, common transportation services may not have taken the complexity described above into consideration, which brings some problems. For some cities in southern China, such as Wuhan, Shanghai, and Hangzhou, a driver may need to cross over the river to accept an order. Taking Wuhan as an example, the downtown of Wuhan is divided into two parts by the Yangtze River, and existing car-hailing apps can only calculate the straight-line distance between the driver and the order. In some embodiments, a departure location of a certain order A and a current location of a first driver (e.g., drive 1) may be located in different sides of the Yangtze River, and the straight-line distance may be 0.5 kilometers. However, driver 1 at the current location may need to drive a longer way of crossing a bridge and driving back a certain distance to arrive at the passenger location of the order A. The actual distance of travel may be up to 5 kilometers. Therefore, driver 1 may not be a driver around the departure of the order A, and the order may not be broadcasted to driver 1.

An embodiment herein may overcome the defect of the method that acquires the driver around an order only by straight-line distance during the process for distributing or pushing the order. As such, the orders that need the driver crossing obstacles such as rivers, lakes or flyovers may not be pushed to the driver.

Determination of Crossing an Obstacle

In some embodiments, a particular function of the processing module 130 may be to determine whether an online taxi needs to cross an obstacle to fulfill a particular order.

Preferably, the processing module 130 may include following steps:

In step 1, at least two points of an obstacle may be collected to form one or more road sections(e.g., streets) with obstacles, and one of the road section with obstacles may be designated as $P_1P_2$;

In step 2, the departure location of an order Q in the set of car-hailing orders may be designated as P3. There may be one or more taxies that satisfy a condition that the current location of the taxi is around the departure location of the car-hailing order Q, to form an information set of taxies.

In step 3, the current location of a taxi C in the information set of taxies may be designated as P4 to form the road section $P_3P_4$.of the driver's order.

In step 4, whether $P_1P_2$ and $P_3P_4$ intersect may be determined. In some embodiments, in response to determining that $P_1P_2$ and $P_3P_4$ intersect, the taxi C may need to cross an obstacle during fulfillment of the order Q, and step 6 may be performed. Alternatively, in response to determining that $P_1P_2$ and $P_3P_4$ do not intersect, step 5 may be performed.

In step 5, whether each road section with obstacles has been traversed may be determined. In some embodiments, in response to determining that not all of the road sections with obstacles have been traversed, step 4 may be iteratively performed and whether the next road section with obstacles intersects with the route $P_3P_4$ of the driver's order may be determined. Alternatively, in response to determining that each road section with obstacles has been traversed, the taxi C may not need to cross an obstacle during fulfillment of the order Q, and the step 6 may be performed;

In step 6, whether the information set of taxies has been traversed may be determined. In some embodiments, in response to determining that the information set of taxies has not been traversed, step 4 may be iteratively performed. For example, the next taxi may be acquired in the information set of taxies. Alternatively, in response to determining that the information set of taxies has been traversed, step 7 may be performed;

In step 7, whether the set of car-hailing orders has been traversed may be determined. In some embodiments, in response to determining that the set of car-hailing orders has not been traversed, step 2 may be iteratively performed. For example, the next car-hailing order in the set of car-hailing orders may be acquired. Alternatively, in response to determining that the set of car-hailing orders has been traversed, the process may be concluded.

Further, the step of determining whether $P_1P_2$ intersects with $P_3P_4$ may include:

Given condition (1): $\overrightarrow{p_3p_1} \times \overrightarrow{p_3p_4} < 0$, $\overrightarrow{p_3p_2} \times \overrightarrow{p_3p_4} > 0$; or $\overrightarrow{p_3p_1} \times \overrightarrow{p_3p_4} > 0$, $\overrightarrow{p_3p_2} \times \overrightarrow{p_3p_4} < 0$;

Given condition (2): $\overrightarrow{p_1p_3} \times \overrightarrow{p_1p_2} < 0$, $\overrightarrow{p_1p_4} \times \overrightarrow{p_1p_2} > 0$; or $\overrightarrow{p_1p_3} \times \overrightarrow{p_1p_2} > 0$, $\overrightarrow{p_1p_4} \times \overrightarrow{p_1p_2} < 0$;

If both of condition (1) and condition (2) are satisfied, $P_1P_2$ may intersect with $P_3P_4$.

Further, condition (1) is satisfied, but condition (2) is not satisfied, while $\overrightarrow{p_1p_3}$ multiplied by $\overrightarrow{p_1p_2}$ is equal to zero (i.e., $\overrightarrow{p_1p_3} \times \overrightarrow{p_1p_2} = 0$). In this case, if the departure location $P_3$ of the order Q is on the road section $P_1P_2$, then $P_1P_2$ and $P_3P_4$ may intersect. Alternatively, if the departure location $P_3$ of the car-hailing order Q is on the extension line of the road section $P_1P_2$, $P_1P_2$ may not intersect with $P_3P_4$.

For example, the obstacle may be a river, a lake, wetland, or an overpass.

The technical solution described above of the present disclosure is based on the determination of whether drivers around an order need to cross obstacles to achieve following technical results:

1. Compared with traditional methods based on calculation of road distance, the algorithm described above has advantages of good performance and low complexity without taking real-time road conditions into consideration, greatly slowing the server's computing performance;
2. The algorithm described above also avoids pushing orders to those drivers that need to cross obstacles, improving the efficiency and accuracy of pushing orders.

Application Scenarios

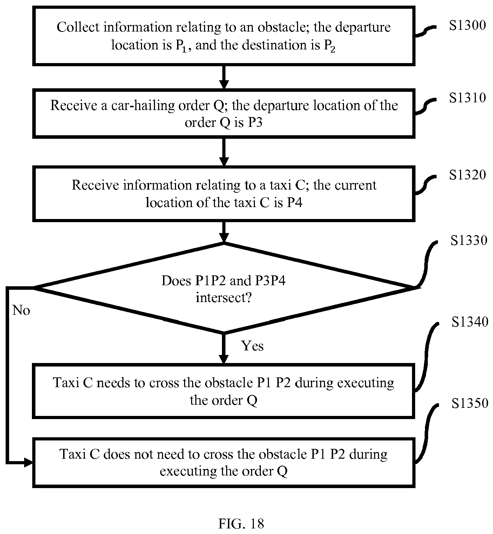

FIG. 18 is a flow chart illustrating an example of a process for determining a road obstacle by the processing module130 according to some embodiments of the present disclosure.

The determination process of the processing module130 may include following steps:

In step S1300, at least two points of an obstacle may be collected to form one or more road sections with obstacles, wherein one of the road section with obstacles is $P_1P_2$ (the departure location is $P_1$, and the destination is $P_2$).

In step S1310, the departure location of an order Q in the set of car-hailing orders may be designated as $P_3$. If one or more taxies satisfy a condition that the current location of the taxi is around the departure location $P_3$ of the order Q, an information set of taxies may be formed;

In step S1320: the current location of a taxi C in the information set of taxies may be designated as $P_4$ to form the road section $P_3P_4$.of the driver's order.

In step S1330: whether $P_1P_2$ and $P_3P_4$ intersect may be determined. In some embodiments, in response to determining that $P_1P_2$ and $P_3P_4$ intersect, step S1340 may be performed and determine that the taxi C needs to cross the obstacle $P_1P_2$ during fulfillment of the order Q. Alternatively, in response to determining that $P_1P_2$ and $P_3P_4$ do no intersect, step S1350 may be performed and determine that the taxi C does not need to cross the obstacle $P_1P_2$ during fulfillment of the order Q. Herein, the vector-based cross product may be used to determine whether two road sections intersect or not may be determined by a method of cross product based on vectors or any other method.

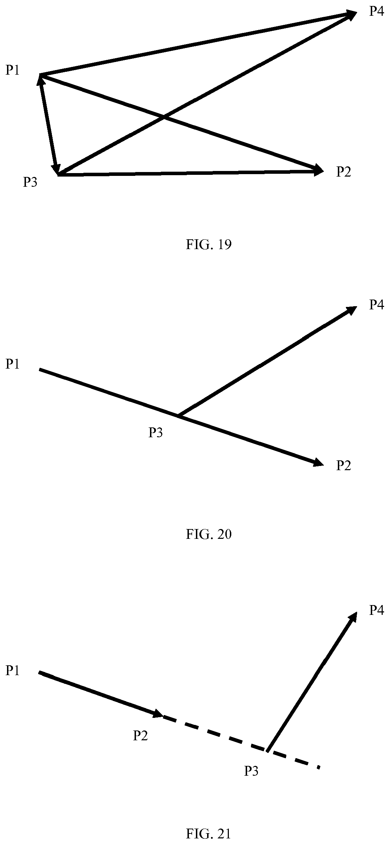

FIG. 19 is a schematic diagram illustrating an example of a process for determining whether two road sections have intersections according to some embodiments of the present disclosure.

The principle of using a method of the cross product of vectors to determine whether two road sections (corresponding to vector $\overrightarrow{p_1p_2}$ and vector $\overrightarrow{p_3p_4}$) are intersecting is described as follows. As shown in FIG. 16, there are two road sections $P_1P_2$ and $P_3P_4$. When the cross product of vector $\overrightarrow{p_3p_1}$ and vector $\overrightarrow{p_3p_4}$ (i-e., $\overrightarrow{p_3p_1} \times \overrightarrow{p_3p_4}$) is positive, vector $\overrightarrow{p_3p_1}$ may be along the clockwise direction of vector $\overrightarrow{p_3p_4}$. When the cross product of vector $\overrightarrow{p_3p_1}$ and vector $\overrightarrow{p_3p_4}$ (i.e., $\overrightarrow{p_3p_1} \times \overrightarrow{p_3p_4}$) is negative, vector $\overrightarrow{p_3p_1}$ may be along the anticlockwise direction of vector $\overrightarrow{p_3p_4}$. When the cross product of vector $\overrightarrow{p_3p_1}$ and vector $\overrightarrow{p_3p_4}$ (i.e., $\overrightarrow{p_3p_1} \times \overrightarrow{p_3p_4}$) is zero, vector $\overrightarrow{p_3p_1}$ and vector $\overrightarrow{p_3p_4}$ may be collinear vectors (along the same or reverse direction). Vector $\overrightarrow{p_1p_1}$ may intersect with vector $\overrightarrow{p_3p_4}$ when the following two conditions are satisfied:

vector $\overrightarrow{p_3p_1}$ and vector $\overrightarrow{p_3p_2}$ are on both sides of vector $\overrightarrow{p_3p_4}$ (i.e., $\overrightarrow{p_3p_1} \times \overrightarrow{p_3p_4} < 0$, and $\overrightarrow{p_3p_2} \times \overrightarrow{p_3p_4} > 0$; or $\overrightarrow{p_3p_1} \times \overrightarrow{p_3p_4} > 0$, and $\overrightarrow{p_3p_2} \times \overrightarrow{p_3p_4} < 0$);

vector $\overrightarrow{p_1p_3}$ and vector $\overrightarrow{p_1p_4}$ is on both sides of vector $\overrightarrow{p_1p_2}$ (i.e., $\overrightarrow{p_1p_3} \times \overrightarrow{p_1p_2} < 0$, and $\overrightarrow{p_1p_4} \times \overrightarrow{p_1p_2} > 0$; or $\overrightarrow{p_1p_3} \times \overrightarrow{p_1p_2} < 0$, and $\overrightarrow{p_1p_4} \times \overrightarrow{p_1p_2} < 0$).

FIGS. 20 and 21 are schematic diagrams of determining whether two road sections have intersections under two particular embodiments according to some embodiments of the present disclosure.

FIG. 20 or FIG. 21 illustrates a particular case that satisfies the condition (1) but does not satisfy the condition (2). Because $\overrightarrow{p_1p_3}$ and $\overrightarrow{p_1p_2}$ are coincident, $\overrightarrow{p_1p_3} \times \overrightarrow{p_1p_2}$ is equal to zero. If $\overrightarrow{p_1p_3} \times \overrightarrow{p_1p_2}$ is equal to zero, different embodiments should be discussed respectively. If P3 is on the road section P1P2, the two road sections (P1P2, P3P4) have intersections. If P3 is on extension line of the road section P1P2, the two road sections (P1P2, P3P4) have no intersection.

According to the method described above to determine whether two road sections have intersections based on vector-based cross product, steps to determine whether P1P2 intersect with P3P4 are as follows.

The condition (1) is designated as $\overrightarrow{p_3p_1} \times \overrightarrow{p_3p_4} 0$, and $\overrightarrow{p_3p_2} \times \overrightarrow{p_1p_4} > 0$, or $\overrightarrow{p_3p_1} \times \overrightarrow{p_3p_4} > 0$, and $\overrightarrow{p_3p_2} \times \overrightarrow{p_3p_4} < 0$.

The condition (2) is designated as $\overrightarrow{p_1p_3} \times \overrightarrow{p_1p_2} < 0$, and $\overrightarrow{p_1p_4} \times \overrightarrow{p_1p_2} > 0$ or $\overrightarrow{p_1p_3} \times \overrightarrow{p_1p_2} < 0$, and $\overrightarrow{p_1p_4} \times \overrightarrow{p_1p_2} > 0$;

If both of the condition (1) and the condition (2) are satisfied simultaneously, P1P2 may intersect with P3P4.

Further, the condition (1) is satisfied but the condition (2) is not satisfied, with that $\overrightarrow{p_1p_3}$ multiplied by $\overrightarrow{p_1p_2}$ is equal to zero (i.e., $\overrightarrow{p_1p_3} \times \overrightarrow{p_1p_2} = 0$) In this case, if the departure location P3 of an order Q is on the road section P1P2, P1P2 may intersect with P3P4. Alternatively, if the departure location P3 of the order Q is on the extension line of the road section P1P2, P1P2 may not intersect with P3P4.

Application Scenarios

Taking Wuhan as an example, the Yangtze River in Wuhan is approximately regarded as a straight line. Two endpoints of the Yangtze River in Wuhan may be obtained manually. The two endpoints are (114.377997, 30.666914) and (114.157229, 30.380211), respectively.

A driver may locate in No. 1125, Zhongshan Road, Riverbank District, Wuhan, Hubei Province. The driver's longitude and latitude may be (114.31108, 30.604891). A passenger may send an order at the crossroad of Peace Road and Qingyuan Road. The longitude and latitude of the order are (114.338137, 30.59485). The straight distance between the driver and the passenger is within 2km. However, an actual distance may be approximately 8km because communication between the driver and the passenger is across the Yangtze River, so that the driver needs to cross a bridge to pick up the passenger.

The two points, (114.377997, 30.666914) and (114.157229, 30.380211), may be regarded as a road section P1P2. The line between the driver (114.31108, 30.604891) and the order (114.338137, 30.59485) may be regarded as a road section OD. According to the method described above to determine whether two road sections intersect with each other based on a vector-based cross method, the road section P1P2 may be determined to intersect with the road section OD. As such, the order may be determined to be a river-crossing broadcasting for the driver, and then the order may be isolated from the driver, i.e., the order may not be broadcasted to the driver.

Application Scenarios

The Huangpu River in Shanghai is relatively complex because the river's trend in Shanghai is not a straight line. The Huangpu River within Shanghai may be described as a polygonal line by collecting multiple key points, followed by segments P1P2, P2P3, P3P4, P5P6, and P7P8. Determining whether or not to send a river-crossing broadcasting may be only based on determining whether the road section OD intersects with any one of the above segments.

The embodiments and scenarios described above are provided for purposes of fully describing the present disclosure, and not intended to limit the protection scope of the present disclosure. Equivalent substitutions or variations of the present disclosure conducted by persons having ordinary skills in the art are within the protection scope of the present disclosure. The scope of the protection of the present disclosure is based on claims.

Determination of Similar Route Orders

Whether the driving direction of a driver and the driving direction related to an order are similar is an important factor that may influence user experience of a driver and a passenger. In a real environment, a driver may obtain orders within a certain range around the driver. However, the driver's driving direction may often not in accordance with an order direction. For example, the driver may currently travel to the east, and the order broadcasted to the driver may be in the west of the driver. If the drive accepts the order, the driver may have to turn around to pick up the passenger. In a real environment of a city road, the process of turning around may take a long time (considering U-turns, traffic lights, viaducts, etc.), which seriously influences user experience of the driver and the passenger.

The embodiment may achieve that taking the angle between the driver's driving direction and the order direction as a factor. The factor may influence a rank of the order distribution during the ranking process of order distribution, and orders in front of the driver's driving direction (i.e., orders with similar route of the driver) may preferably be sent to the driver.

The present embodiment discloses a method of processing orders by a processing module, including: obtaining data related to an order; obtaining driving direction of a service provider; determining that whether an angle between the service provider's driving direction and a direction from the service provider's location to the order location is less than a preset angle; and sending the data related to the order to the service provider.

Optionally, in the method, the preset angle is 90°.

Optionally, the method may also include: determining that a level of congestion from a location of a carrier to the order location is less than a predetermined level of congestion before sending the data related to the order.

Optionally, the method may also include: determining that an actual driving distance from the location of the carrier to the order location is less than a preset driving distance before sending the data related to the order.

Optionally, the method may also include: determining that an angle between a direction from the location of the carrier to a preset location and a direction from the location of the carrier to the order location is less than a second preset angle before sending the data related to the order.

Optionally, in the method, the second preset angle is 90°.

Optionally, the method may also include: rising a rank of the order in the list of orders before sending the data related to the order.

According to a principle of the embodiment, the present disclosure also discloses a method of processing an order by a carrier. The method may include: sending the driving direction of a carrier; and receiving data related to an order when determining that an angle between the driving direction of the carrier and the direction from the location of the carrier to the order location is less than a preset angle.

Optionally, in the method, the preset angle is 90°.

According to a principle of the embodiment, the present disclosure also discloses a method of presenting an order to a carrier. The method may include: receiving data related to an order; determining that an angle between the driving direction of the carrier and the direction from the location of the carrier to the order location is less than a preset angle; and presenting the data related to the order.

Optionally, in the method, the preset angle is 90°.

Optionally, the method may also include: determining that a congestion level from the location of the carrier to the order location is less than the preset congestion level before presenting the data related to the order.

Optionally, the method may also include: determining that an actual driving distance from the location of the carrier to the order location is less than the preset driving distance before presenting the data related to the order.

Optionally, the method may also include: determining that an angle between the direction from the location of the carrier to a preset location and the direction from the location of the carrier to the order location is less than a second preset angle before presenting the data related to the order.

Optionally, in the method, the second preset angle is 90°.

Optionally, the method may also include: raising the rank of the order in the list of orders before presenting the data related to the order.

This embodiment has an advantage of effectively reducing the idle driving distance of a driver and wait time of a passenger. As such, the user experience may be improved.

Application Scenarios

The following is an example of calling a taxi to describe a method of an order and a device to process the order in detail.

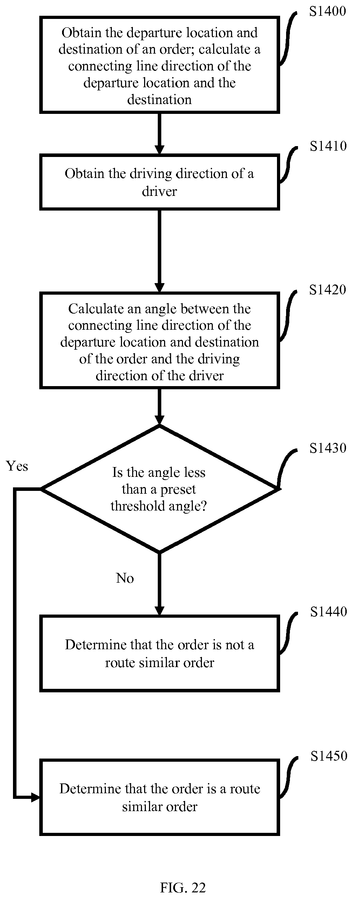

FIG. 22 is a flow chart illustrating an example of a process for determining a similar route order according to some embodiments of the present disclosure.

As shown in FIG. 22, a server may receive data related to an order in step S1400. Departure location and destination of the order may be obtained. A connecting line direction of the order departure location and the order destination may be calculated.

According to various exemplary embodiments of the present disclosure, the present disclosure may be implemented according to a client-server framework or implemented on a single device. When the present disclosure is implemented according to the client-server framework, the server may be used to obtain an order. The method of obtaining the order may include: directly obtaining the order from the service user by the receiving module 110 or obtaining the order transmitted by any other medium (e.g., a website, etc.). The data related to the order may be obtained when the order is obtained. The data related to the order may include but is not limited to the location of a passenger waiting for a taxi (order location for short), the destination, an extra tip accepted, wait time accepted, the number of passengers, whether passengers carry a heavy luggage, or the like. It should be understood that the passenger waiting for a taxi described above may be a software user calling the taxi by a taxi-hailing app, or another person taking the taxi called by a software user through the taxi-hailing app. The order location may be represented by one or more pairs of longitude-latitude coordinates. The order location may also be represented by any other information that can represent a definite location in an appropriate circumstance. The information that can represent a particular location may include but is not limited to a bus station, a subway station, a crossroad, a particular building, or the like. When the order location is represented by any other information except a Global Positioning System coordinate, the other information may be converted into a Global Positioning System coordinate by a receiver (e.g., a server) of the order or a third party (e.g., an address analyzing organization of a professional web site) for further processing.

Refer to FIG. 22, a driving direction of the carrier (driver) may be obtained in step S1410.

According to various exemplary embodiments of the present disclosure, a driving direction of a carrier may be provided by the carrier, for example, by the Global Positioning System. When the present disclosure is implemented according to a client-server framework, the driving direction of the carrier may be obtained directly from the carrier or may be obtained by any other medium (e.g., an institution of providing global positioning system information) by the server. It should be understood that the driving direction of the carrier described above is generally not a separate direction information. The obtained driving direction of the carrier may include other information such as a location of the carrier (e.g., a location represented by the Global Positioning System coordinate), a carrier driving speed, or the like. Thus, when other information such as the location of the carrier or the carrier driving speed is required in other steps, the information may be obtained directly from the carrier or other intermediaries described above.

Refer to FIG. 22, the server may determine that an angle between the driving direction of the carrier and the direction from the location of the carrier to the order location (order direction for short) is less than a preset angle in step S1420.

According to various exemplary embodiments of the present disclosure, the order direction may firstly be determined in step S1420. Since the order location is obtained in step S1400 and the location of the carrier is obtained in step S1410, the order direction may be calculated based on the pair of longitude-latitude coordinates of the order location and the location of the carrier that represented by the Global Positioning System coordinate.

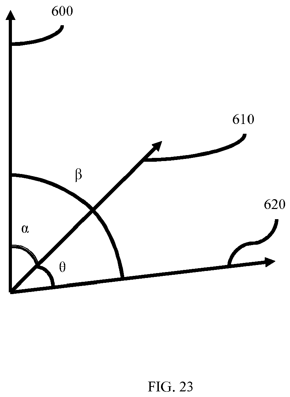

After calculating the order direction, the angle between the driving direction of the carrier and the order direction may be further calculated. FIG. 23 illustrates detailed steps of the process.

FIG. 23 is a schematic diagram illustrating a driving direction of a driver and a direction of an order according to some embodiments of the present disclosure.

Referring to FIG. 23, a direction 600 marked as North (N) may be used as a reference direction.

Firstly, angle $\alpha$ between the driving direction 610 of the driver (carrier) and N may be calculated. Then, angle $\beta$ between the order direction 620 and N may be calculated. Finally, angle $\theta$ between the driving direction 610 of the carrier and the order direction 620 may be calculated based on $\alpha$ and $\beta$, wherein $\theta$ may be calculated according to the following formula:

$$\theta = \begin{cases} |\beta - \alpha|, & |\beta - \alpha| < \pi \\ 2\pi - |\beta - \alpha|, & |\beta - \alpha| \geq \pi \end{cases}$$

Since $0 < \alpha$, $\beta < 2\pi$ and $0 \leq \theta \leq \pi$, the above conversion may be needed when calculating $\theta$. The value of $\theta$ may range from 0 to $\pi$, i.e., 0° to 180°.

After calculating the angle $\theta$ between the driving direction 610 of the carrier and the order direction 620, the server may determine that whether the angle $\theta$ is less than a preset angle. Herein, when $\theta$ is 0°, the order location may be precisely in the driving direction 610 of the driver (carrier). At this moment, without considering actual road conditions, a carrier is on the way to an order location. Therefore, the order direction may be the best order direction for the carrier. When $\theta$ is between 0° and 90°, the order direction and the driving direction 610 of the carrier may be approximately the same direction. At this moment, without considering actual road condition, the carrier may be in the same direction approximately to the order location. When $\theta$ is 90°, the order direction and the driving direction 610 of the driver may be perpendicular. At this moment, without considering actual road conditions, a carrier may not be on the way or may take a detour to the order location. When $\theta$ is greater than 90°, the order direction and the driving direction 610 of the driver may be approximately reversed. At this moment, without considering actual road conditions, the carrier may take a detour to an order location. A carrier may be on the way or approximately in the same direction to an order location only when $\theta$ is less than 90°, so the preset angle may be set to 90°. It should be understood that according to other embodiments of the present disclosure, when the carrier has a higher standard of similar routes, the preset angle may be set as a smaller angle such as 45° or smaller.

According to some embodiments of the present disclosure, when the server determines that the angle between the driving direction 610 of the driver and the order direction 620 is no less than a preset angle, the server may conclude the process of the order that is aimed at the carrier.

According to various exemplary embodiments of the present disclosure, a preset driving distance may be a particular distance (e.g., 4 km) or a distance referring to a straight-line distance between the location of the carrier and the order location (e.g., 1.5 times of the straight-line distance).

Refer to FIG. 22, the processing module 130 may determine whether an angle between the direction of the line along the departure location and the destination of the order and the driving direction of the driver is less than a threshold angle in step S1430. In some embodiments, in response to determining that the angle between the direction of the line along the departure location and the destination of the order and the driving direction of the driver is less than the threshold angle, the order may be determined to be a similar route order S1450 of the driver. Alternatively, in response to determining that the angle between the direction of the line along the departure location and the destination of the order and the driving direction of the driver is no less than the threshold angle, the order may be determined to be a dissimilar route order S1440 of the driver.

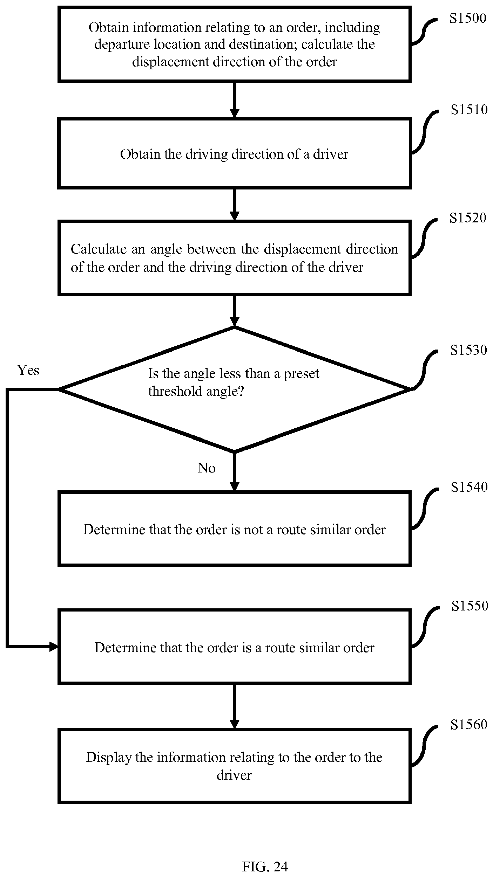

FIG. 24 is a flow chart illustrating an example of a process for determining and displaying a similar route order by the processing module 130 according to some embodiments of the present disclosure.

In step S1500, the processing module 130 may obtain information related to the order such as the departure location and the destination. The processing module 130 may calculate a displacement direction of the order;

In step S1510, the processing module 130 may obtain a driving direction of the driver;

In step S1520, the processing module 130 may calculate an angle between the displacement direction of the order and the driving direction of the driver;

In step S1530, the processing module 130 may determine whether the angle is less than the threshold angle. In some embodiments, in response to determining that the angle is less than the threshold angle, the order may be determined to be a route similar order of the driver. Alternatively, in response to determining that the angle is no less than the threshold angle, the order may be determined to be a dis similar route order S1540 of the driver.

Determination of Order Snatching Probability

With the number of drivers and passengers using car-hailing apps increasing gradually, how to achieve prompt and best matching between a large amount of online orders and drivers has become an extremely challenging problem for algorithm and architecture. The best matching may refer to presenting (e.g., through speech broadcasting or image display) current suitable orders to each driver, and each order having been displayed for enough times after taking a variety of factors into consideration. The variety of factors may include features of orders, features of drivers, the number of surrounding drivers, time, road conditions, etc.

However, merely by way of example, considering that the number of online drivers and online time of the drivers is certain, the number of orders broadcasted to the driver may be certain. If orders are broadcasted to drivers without accuracy, it may not only be a waste of precious order broadcasting channels, causing the orders that the drivers are willing to choose (willing to snatch) not to be fully broadcasted, but also disturb the drivers. For example, orders may be broadcasted to drivers without distinctions.

In some embodiment, the storage module 120 may store daily order presentation logs and order snatching logs of a driver in a process of long-term operation. Order snatching probability of the driver for each presented order may be predicted precisely using models that can be trained by methods of machine learning and data mining based on a large number of logs. The predicted order snatching probability may be applied to assign orders.

According to some embodiments, a method of processing orders may be provided, including: acquiring at least one feature of historical orders and service providers' responses related to the historical orders; assigning weight to the feature based on the service providers' responses related to the historical orders; acquiring the feature of a current order; and selecting the order that may be presented to the service provider from current orders based on the weight corresponding to the feature of the current orders.

Optionally, in some embodiments, the method of acquiring at least one feature of historical orders and service providers' responses related to the historical orders may include acquiring the response of whether or not the service provider chooses a historical order.

Optionally, in some embodiments, the method of assigning weight to the feature based on service providers' responses related to the historical orders may include taking advantage of the machine learning model to assign weight to the feature based on at least one feature of the historical order and the response of whether or not the service provider chooses a historical order.

Optionally, in some embodiments, the method of selecting the order that may be presented to the service provider from the current orders based on the weight corresponding to the feature of the current orders may include taking advantage of the machine learning model to determine the probability of the service provider selecting the current order based on the feature of the current order and the weight corresponding to the feature of the current orders.

Optionally, in some embodiments, the method of selecting the order which may be presented to the service provider from the current orders based on the weight corresponding to the feature of the current orders may also include choosing an order that is most probable to be selected by the service provider from the current orders, as the current order that is about to be presented to the service provider.

Optionally, in some embodiments, the machine learning model may include a logistic regression model or a support vector machine model.

Optionally, in some embodiments, the method may also include taking advantage of the feature of the order that is about to be presented to the service provider and the service providers' responses related to current orders, and update the weight corresponding to the feature of the current orders.

Optionally, in some embodiments, the feature may include at least one of the following items such as a distance between the service provider and the location of the order being broadcasted, a destination of the order, types of destination of the order, road conditions in the surrounding areas of the destination of the order, and presentation times of the order.

Optionally, in some embodiments, the historical orders, the current order and the service provider may relate to the same geographic area.

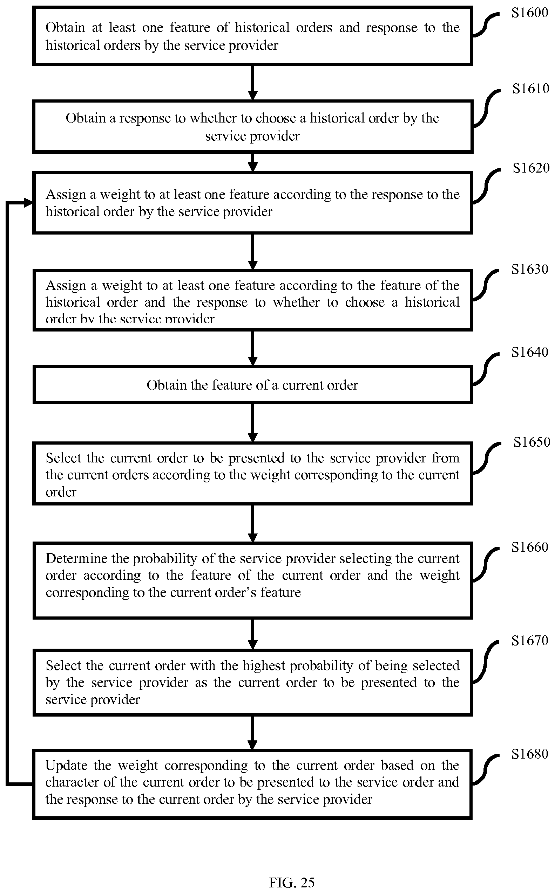

FIG. 25 is a flow chart illustrating a method of processing an order by the processing module 130 according to some embodiments of the present disclosure.

According to some embodiments of the present disclosure, step S1600 or S1610 may be implemented before or during the training phase of a machine learning process. Step S1600 or S1610 may be implemented by an online server or a big data platform server. More particularly, for example, the logs may be obtained by the online server and be stored as a total sample in the form of identification pairs of a historical order matching a service provider. Preferably, the logs may be obtained in another server such as the big data platform server and be stored as a total sample in the form of identification pairs of a historical order matching a service provider historical order.

In step S1600, at least one feature of historical orders and a response to the historical orders by the service provider may be obtained. The feature of the historical order may include an order's fee, an extra tip accepted, a distance between the location of an order being sent and the location of a service provider, the number of passengers, or a distance between the location of a personnel waiting for a taxi and the location of the service provider, a destination of the order, types of the destination (e.g., airports, train stations, hospitals or schools), road conditions around the destination of the order, or presentation times of the order. The feature of the historical order may also include a time duration accepted, whether a heavy luggage is carried, matters of the order, etc.

In step S1610, a response of whether to choose a historical order by the service provider may be obtained. The response may include an action of snatching the order and a result of the action. For example, whether to snatch the order, success or failure of snatching the order, a time duration between sending a command to snatch the order and receiving the order (i.e., representing the speed of snatching the order and the intention of accepting the order), etc.

Step S1610 is not necessary, and may be omitted from the whole process.

Step S1620 may be performed after step S1600 and step S1610. According to the response to the historical orders by the service provider, a weight may be assigned to the feature.

Particularly, step S1630 may be performed after step S1620. Herein, the feature may be assigned a weight by utilizing a machine learning model according to the feature of the historical order and the response of whether to choose the historical order by the service provider. Step S1630 is also not necessary, and the feature may be directly assigned the weight.

In some embodiments, the machine learning model may be a Logistic Regression model that is widely used in binary classification problems. In some embodiments, the machine learning model may be a support vector machine model. In some embodiments, one or more other machine learning models may be used based on test results.

In some embodiments, using the Logistic Regression model may be considered. If the feature of the historical order or a predictive variation X is equal to x (i.e., X=x), then Boolean expression of the response of whether to choose the historical order by the service provider, i.e., the probability of a target variation (i.e. Y=1) is given as the following formula:

$$P(Y = 1 | X = \mathrm{x}) = \frac{1}{1 + e^{-x\beta}}$$

β is a weight allocated to the feature, or is referred to as a model parameter.

In a training sample, if the service provider chooses a historical order, Y is equal to 1 (i.e., Y=1). Alternatively, if the service provider does not choose the historical order, Y is equal to 0 (i.e., Y=0). Based on a determined predictive variation X and a target variation Y, the predictive variation and the target variation Y may be substituted into the formula.

The predictive variation X may include information relating to multiple identification pairs of a historical order matching a service provider of the training data. The weight β assigned to the feature may be determined. The weight β may be a vector corresponding to a vector of the predictive variation X. In other words, each feature may correspond to a weight. For example, the feature of a location may correspond to a weight of 0.5. The feature of road conditions may correspond to a weight of 0.3. The feature of the order's presentation times may correspond to a weight of 0.1.

In some embodiments, after allocating the weight to the feature, the weight assigned to the feature may be stored in a data file. When training is in the big data platform server, the data file may be transmitted to the online server. As such, the online server may load the data file to obtain the weights in an application phase.

After step S1630, step S1640 may be performed to obtain a feature of a current order.

The current order may refer to an order that is to be presented or is presenting to the service provider. For example, the current order may be an order that has not been presented to the service provider, or an order that only presents to some service providers and has not been presented to any other service provider. The current order may be obtained in the online server. Methods of obtaining the order may include directly receiving the order from a personnel waiting to take a taxi, or any other medium (e.g., a website, etc.).

After obtaining the current order, one or more service providers related to the current order may be selected from multiple service providers. The service providers selected may be candidate service providers that the current order is about to present. For example, a service provider located at a location around a certain range of the location of the current order may be designated as the candidate service provider. Additionally or alternatively, the selected service providers may be further filtered.

It should be noted that after obtaining multiple current orders, there may be some current orders relating to a single service provider. For example, the service provider may be located at a location around particular ranges of locations of multiple current orders. Therefore, a preferred order chosen from the multiple current orders may be presented to the service provider.

The feature of the current order may be the feature corresponding to the weight in the training phase. Therefore, the feature of the current order may also include a distance between the location of an order and the location of a service provider, a distance between the location of a personnel waiting for a taxi and the location of service user, the destination of an order, types of the destination (e.g., airports, train stations, hospitals, schools, etc.), road conditions around the destination of the order, or presentation times of the order. Features of the current order and the service provider may also include an extra tip accepted, a time duration accepted, whether a heavy luggage is carried, etc. Besides, based on descriptions of the historical order, the feature of the current order may be directly determined from determined content of the current order. The feature of the current order may be indirectly determined by further processing the determined content by the server. The weight corresponding to the feature of the current order may be used to determine the feature of the current order. The weight may be a weight that is assigned to a feature corresponding to the feature of the current order during the training phase.

In step S1650, according to the weight corresponding to the current order, the current order to be presented to the service provider may be selected from the current orders.

In step S1660, according to the feature of the current order and the weight corresponding to the current order's feature, the probability of the service provider selecting the current order may be determined. Step S1660 may also be not necessary.

In the embodiment, after obtaining the feature of the current order, the feature information of pairs of the current order matching the service provider may constitute vectors as predictive variations. The pairs of the current order matching the service provider may be constituted by current orders and service providers related to the current order. The predictive variation and the weight corresponding to the feature of the predictive variation expressed by vectors may be substituted into the machine learning model for the application. By utilizing the machine learning model, the probability of the service provider selecting the current order may be determined based on the predictive variation and the weight corresponding to the predictive variation. In some embodiments, the machine learning models used in the application phase and the training phase may be the same, e.g., the Logistic Regression model. In some embodiments, the machine learning mode may be the support vector machine model. In some embodiments, one or more other machine learning models may be used based on the test results. Considering a situation of utilizing the Logistic Regression model, the feature of the current order, or the predictive variation (X=x) and the corresponding weight β may be substituted into the formula shown in the training phase. As such, the probability of the service provider selecting the current order may be obtained. The probability may also be referred to as the target variation Y, wherein Y is a real number from 0 to 1.

Preferably, if the probability of the service provider selecting the order is greater than a preset threshold, the current order may be added to a list of orders for ranking. In some embodiments, the online server may constitute a list of multiple orders that aimed at one service provider and received by the server at a different time, for ranking. The probability of the service provider selecting the current order may be compared with the preset threshold. In some embodiments, in respect to determining that the probability is greater than the preset threshold, the current order may be added to the list of the orders. Alternatively, with respect to determining that the probability is smaller than the preset threshold, the current order may not be added to the list of the orders. By this step, orders that the service provider is apparently not willing to select may be filtered. According to some embodiments of the present disclosure, the preset threshold may be stored in a configuration file of an application corresponding to the online server. The threshold may be regularly or dynamically adjusted as required based on factors such as a response of the service provider, an overall matching state of the order at a particular time, etc. In some embodiments, the candidate service provider related to the current order may not be selected as described above. The service provider related to the current order may be directly filtered based on the probability.

After step S1660, step S1670 may be performed.

In step S1670, the current order with the highest probability of being selected by the service provider may be selected as the current order to be presented to the service provider. According to some embodiments of the present disclosure, the online server may rank the current orders based on the probabilities of multiple orders selected by the service provider. As such, the current order with the highest probability of being selected by the service provider may be selected as the current order to be presented to the service provider.

According to some embodiments of the present disclosure, the current order may be transmitted to a terminal of the service provider for presenting the order, after the current order to be presented to the service provider is selected. For example, the order may be presented in a service provider's device installed with a terminal (e.g., a mobile device) by methods of voice broadcasting or image display via a user interface (e.g., a touch-sensitive display, etc.). Depending on whether the service provider is interested in the current order, the service provider may response by selecting the current order via a user interface. Optionally, in some embodiments, the online server may transmit multiple current orders and the probability of the service provider selecting the current order, to the service provider. The multiple current orders may be ranked by the service provider's device with installing a terminal. As described above, the order with a higher probability of being selected by the service provider may be presented. As such, the order that the service provider is more willing to select may be prior to presentation.

In some embodiments, after the service provider selects the current order, or after the order is presented after scheduled time as the service provider dose not select the current order, step S1640 may be returned to, obtaining new current orders for selection. Alternatively, step S1650 or S1660 may be returned to, reselecting orders to be presented to the service provider based on the characters of partial updates. It should be noted that the same current order within its effective period may be presented to the same service provider multiple times due to a higher probability of being selected. In this embodiment, the number of times of the same current order presented to the same service order may be recorded as a character of the current order.

In step S1680, the weight corresponding to the current order may be updated based on the character of the current order to be presented to the service order and the response of the service provider related to the current order. After step S1680, step S1620 may be returned to, assigning weight to at least one character according to the response of the service provider related to the current order.

Determination of an Order Snatching Probability Based on the Order Length

In some embodiments, particularly, an order snatching probability may be estimated based on the length of the order. The method may include: obtaining a distance between the departure location and the destination of the current order; obtaining the order snatching probability of a historical order of a service provider, wherein the distance between the departure location and the destination of the historical order may relate to the distance between the departure location and the destination of the current order; and sending the current order to the service provider based on the order snatching probability.

In the method, orders with low order snatching probability of the service provider may be reduced to being sent, i.e., reducing sending of valueless or low valuable orders for the service provider. As such, high valuable orders for the service provider may be ensured to be sent quickly and accurately.

As described above in detail, in addition to including conventional drivers of cars, boats, and aircraft, the service provider may also include unmanned vehicles that are used to carry passengers or goods.

In some embodiments, the departure location of a current order and the location of a service provider may firstly be obtained, respectively. Then, a distance between the departure location of the current order and the location of the service provider may be calculated. Herein, the departure location of the current order may be obtained from the order information described above. The location of the service provider may be determined by positioning information in a smart device of the service provider. More particularly, the distance between the departure location of the current order and the location of the service provider may be their linear distance. The distance between the departure location of the current order and the location of the service provider may be a real driving distance calculated by referring to route information, information relating to traffic conditions, and road information in navigation system. Subsequently, the order snatching probability of the historical order of the service provider may be obtained. Herein, the distance between the departure location of the historical order and the location of the service provider may relate to the distance between the departure location of the current order and the location of the service provider. For example, there may be a large number of historical orders that satisfies the condition that the distance between the departure location of each historical order and the location of the service provider is related to the distance between the departure location of the current order and the location of the service provider. In the situation described above, an order snatching probability of each historical order of the service provider may be obtained respectively, or an overall order snatching probability of historical orders of the service providers may be obtained.

In some embodiments, a relevance of the distance between the departure location of the historical order and the location of the service provider and the distance between the departure location of the current order and the location of the service provider may be defined as follows:

(1) The distance between the departure location of the historical order and the location of the service provider may be equal to the distance between the departure location of the current order and the location of the service provider. In some embodiments, since the distance between the departure location of the historical order and the location of the service provider is equal to the distance between the departure location of the current order and the location of the service provider, the order snatching probability of the historical order of the service provider may largely be equal to the order snatching probability of the current order of the service provider. That is, if the service provider has low order snatching probability of the historical order, the service provider may largely have low order snatching probability of the current order. In this way, the current order may be valueless or low valuable for the service provider, so that sending the current order may influence sending high valuable orders to the service provider. As such, high valuable orders may be ensured to be sent to the service provider quickly and accurately, by reducing the sending of low order snatching probability of the current order for the service provider.

(2) The distance between the departure location of the historical order and the location of the service provider and the distance between the departure location of the current order and the location of the service provider may belong to the same distance interval. Herein, the distance interval may be pre-assigned according to the distance between the departure location of each historical order and the location of the service provider. For example, 0 to 100 meters may be the first distance interval that is designated as P1. 100 to 200 meters may be the second interval that is designated as P2. 200 to 300 meters may be the second interval that is designated as P3; and so on.

In some embodiments, since the distance between the departure location of the historical order and the location of the service provider and the distance between the departure location of the current order and the location of the service provider may belong to the same distance interval, the order snatching probability of the historical order of the service provider may largely be approximately equal to the order snatching probability of the current order of the service provider. That is, if the service provider has low order snatching probability of the historical order, the service provider may largely have low order snatching probability of the current order. In this way, the current order may be valueless or low valuable for the service provider, and sending the current order may affect sending high valuable orders to the service provider. In this embodiment, high valuable orders may be ensured to be sent to the service provider quickly and accurately by reducing sending current orders with low order snatching probability to the service provider.

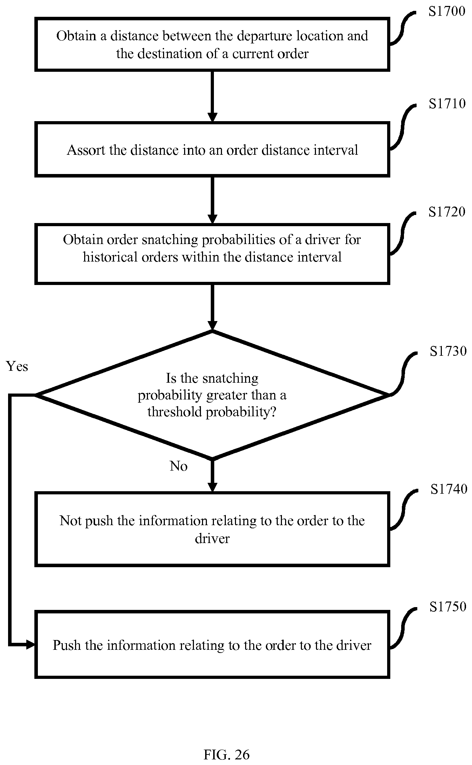

FIG. 26 is a flow chart illustrating a method of processing orders according to some embodiments of the present disclosure. In the embodiment, the distance between the departure location and the destination of the current order may be obtained in step S1700. In step S1710, the distance between the departure location of the current order and the location of the service provider may be determined. The distance may be assorted into a distance interval that a distance interval of an order belongs to. In step S1720, a driver's order snatching probabilities of historical orders within the distance interval may be obtained. The snatching probability may be obtained by calculating based on the historical orders pushed to the driver and the records of the response to the historical orders by the driver.

In step S1730, whether the order snatching probability is more than a threshold probability may be determined. In some embodiments, in response to determining that the order snatching probability is no more than a threshold probability, the process may proceed to step S1740, and the order information may not be pushed to the driver. Alternatively, in response to determining that the order snatching probability is more than a threshold probability, the process may proceed to step S1750, and the order information may be pushed to the driver.

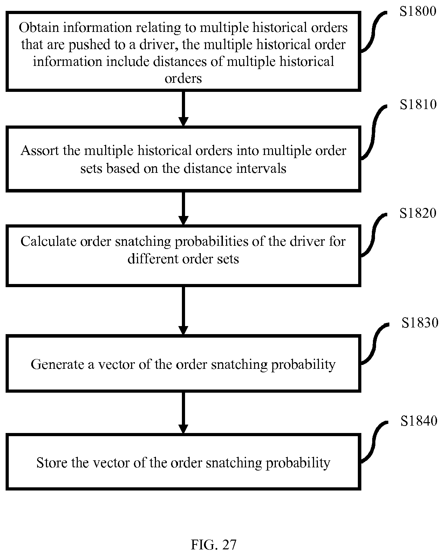

FIG. 27 is a flow chart illustrating an example of a process for generating a vector representative of an order snatching probability according to some embodiments of the present disclosure. The process may include the following step S1800 through step 1840.

Order information relating to each of the service providers may be processed in step S1800. Information relating to order broadcasting distances and order snatching probabilities of historical orders received in a certain time period may be obtained by each of the service providers. The certain time period may be a past month. The order broadcasting distance may refer to a distance between the departure location of an order and the location of a service provider.

In step S1810, multiple historical orders may be assorted into multiple order sets based on the distance intervals of the orders.

In step S1820, the order snatching probabilities for different order broadcasting distances may be calculated. For example, the order snatching probabilities for the order broadcasting distance of 0-100 meters, 100-200 meters, and 200-300 meters may be calculated, respectively. For example, the order snatching probabilities for the order broadcasting distance of 0-100 meters may be equal to the percentage of order snatching times of historical orders with order broadcasting distances of 0-100 meters received in a past month and order acceptance times of historical orders with order broadcasting distance of 0-100 meters received in a past month.

In step S1830, a vector representative of the order snatching probability may be generated. For example, a distance interval includes A, B, C, D, E and F distance intervals. The distance interval A is 0-10 kilometers. The distance interval B is 10-20 kilometers. The distance interval C is 20-30 kilometers. The distance interval D is 30-40 kilometers. The distance interval E is 40-50 kilometers. The distance interval F is 50-60 kilometers. A vector representative of the order snatching probability may be (0.1, 0.15, 0.2, 0.4, 0.3, 0.2). This indicates that the driver is most interested in orders with the distance interval of 30-50 kilometers.

In step S1840, the vector representative of the order snatching probability may be stored.

Some order decision-making models and methods that can be implemented by the processing module 130 are described above. In some embodiments, methods and decision-making modes may include any other method and decision-making mode. The above examples are merely for illustration purposes, and not intended to limit the protection scope of the invention.

Embodiments of Food Ordering Service

In a present distribution system for food orders, a user needs to determine a particular restaurant firstly and then enter the food ordering interface of the restaurant to operate. Therefore, the user may be required to be familiar with the restaurant and have clear ideas about his/her food demand. However, in some embodiments, it is common that the user may be unfamiliar with surrounding environment of the restaurant, operating conditions of the restaurant, price level of the restaurant, types of cuisines of the restaurant, etc.

In the embodiment, a system is provided for selecting a target restaurant and sending a food order to the restaurant based on analysis of information relating to the food order and restaurant. The information relating to the food order may include but is not limited to the name of a user, a telephone number of the user, a food delivery address, delivery time, a type of cuisine, acceptable price levels, preferred flavors of the user, etc. The information relating to the restaurant may include the opening time, the address, the telephone number, the food types, the general consumption level, etc. of the restaurant.

The types of cuisine in the submitted orders may include but are not limited to Sichuan cuisine, Cantonese cuisine, Shandong cuisine, Fujian cuisine, Jiangsu cuisine, Huaiyang cuisine, Zhejiang cuisine, Hunan cuisine, Anhui cuisine, French cuisine, Italy cuisine, Turkey cuisine, Mexican cuisine, Japanese cuisine, Korean cuisine, etc. The user may select a particular dish or simply provide a food type that he/she wants to eat. The system may select a target restaurant according to the records of historical food orders and preferred flavors of the user. The target restaurant may provide one or more particular food types or an outline of a type of cuisine. The system may be configured to recommend particular types of food to the user according to historical food orders and preferences of the user, etc. The system may also select a target restaurant combining other information relating to the order and send the order.

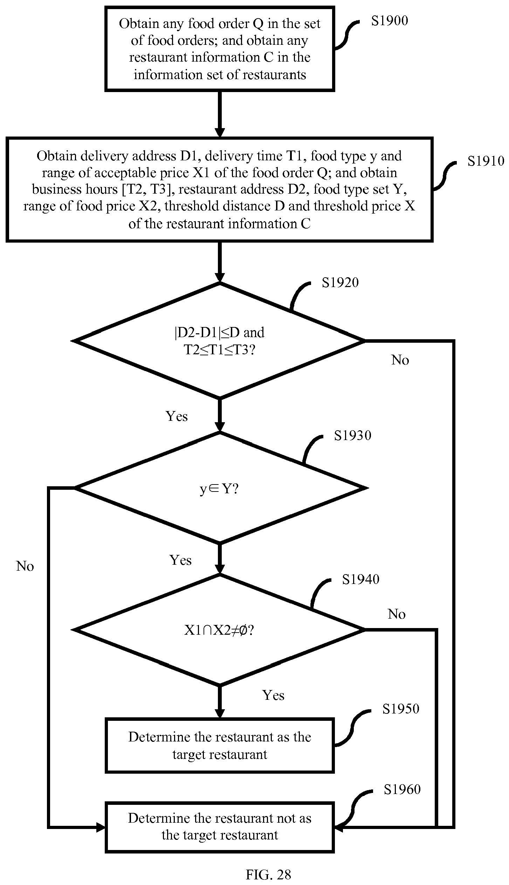

FIG. 28 is a flow chart illustrating an example of a process for determining a target restaurant according to some embodiments of the present disclosure.

In some embodiments, in step S1900, a food order Q in the set of food orders and a restaurant information C in the information set of restaurants may be obtained.

In step S1910, a delivery address D1, delivery time T1, food types y, and acceptable price levels X1 of the food order Q may be obtained by the receiving module 110. Business hours [T2, T3], the restaurant address D2, a set of food types Y, food price levels X2 and a threshold order distance D of the restaurant information C may also be obtained by the information module 110.

In step S1920, the processing module 130 may receive information sent by the receiving module 110. The information may further be determined by the processing module 130. The first determination criterion is that the distance from the address of the restaurant D2 to the delivery address D1 is less than or equal to the threshold distance D ($|D2 - D1| \leq D$). The second determination criterion is that the delivery time T1 requested by the customer is within the scope of business hours ($T2 \leq T1 \leq T3$) of the restaurant. In some embodiments, in response to determining that both the determination criteria are satisfied, the process may proceed to step S1930. Alternatively, in response to determining that one or more of the two determination criteria are not satisfied, the determining process may proceed to step S1960 and determine that the restaurant is not the target restaurant.

In step S1930, whether the food type y requested by the user belongs to the food type set Y provided by the restaurant ($y \in Y$) may be determined. In some embodiments, in response to determining that the food type y requested by the user belongs to the food type set Y, the determining process may proceed to step S1940. Alternatively, in response to determining that the food type y requested by the user does not belong to the food type set Y, the determining process may proceed to step S1960 and determine that the restaurant is not the target restaurant.

In step S1940, whether there is an intersection between the range of acceptable price X1 of the food order and the range of food price X2 of the restaurant may be determined. In some embodiments, in response to determining that there is an intersection between the range of acceptable price X1 of the food order and the range of food price X2 of the restaurant, the determining process may proceed to step S1950 and determine that the restaurant is the target restaurant. Alternatively, in response to determining that there is not an intersection between the range of acceptable price X1 of the food order and the range of food price X2 of the restaurant (X1 $\cap$ X2 = $\varnothing$), the determining process may proceed to step S1960 and determine that the restaurant is not the target restaurant.

It should be noted that sequence of step S1920, step S1930, and step S1940 may be interchangeable. It is not necessary to implement all of the steps. For example, one or two of the three steps may be omitted according to practical requirements. Moreover, the determining of a target restaurant for a food order in the further determining steps may not be affected. For example, whether the restaurant C is the target restaurant of the food order Q may be determined simply by the criteria in S1920 and without further determining the criteria in the S1930 and/or S1940.

In step S1950, after the restaurant is determined as the target restaurant, the system may further send the information relating to the food order to the target restaurant.

Application Scenarios

Firstly, a user may input request information for a food order through his/her mobile phone terminal. The input methods may include handwriting input, voice input, keyboard input, etc. The request information for a food order may include: customers (user A), delivery time (11:30 a.m.), a delivery address (Room 501, 5th Floor, Hailong electronic mall, Zhongguancun, Haidian District, Beijing), a reference price level (15-25 yuan), food types (fast food), and preferences (mild chilies). An order containing the above information may be generated by the server of a food ordering software.

| Serial Number of Order | User | Tel. | Delivery Time | Address | Types of Food | Portion | Price per capita /rmb |
|---|---|---|---|---|---|---|---|
| 12001 | user A | 123...45 | 11:30 | Room 501, 5th Floor, Hailong electronic mall | wonton | 1 | 15-25 |

There is various restaurant information stored in the server of the food ordering software. Two pieces of the restaurant information are shown in the following.

| Serial Number of Restaurant | Business Hours | Address | Types of Food | Price per capita /rmb |
|---|---|---|---|---|
| 0012 | 9:00-16:00 | 10th Zhongguancun Street | Chinese food | 15-30 |
| 0013 | 13:00-21:00 | 10th Zhongguancun Street | French cuisine | 100-150 |

The server may match the order and restaurants based on current information relating to the order and the restaurants. The restaurant (0012) is a target restaurant for the order (12001) according to the rules of determining a target restaurant. Thus, the server may push the order (12001) to the restaurant (0012).

Embodiments of Delivery Service

A system for assigning delivery orders may be provided according to the present embodiment. In the system, information relating to a delivery order and some couriers may be analyzed. A target courier may be selected, and the delivery order may be sent to the target courier according to the analysis results. The information relating to a delivery order may include departure location of an order, delivery time, destination, threshold arrival time of customers, or the like. The information relating to a courier may include a current location, preferred delivery distance intervals of the courier, an estimated arrival time of the courier at the departure location, a threshold order distance, or the like.

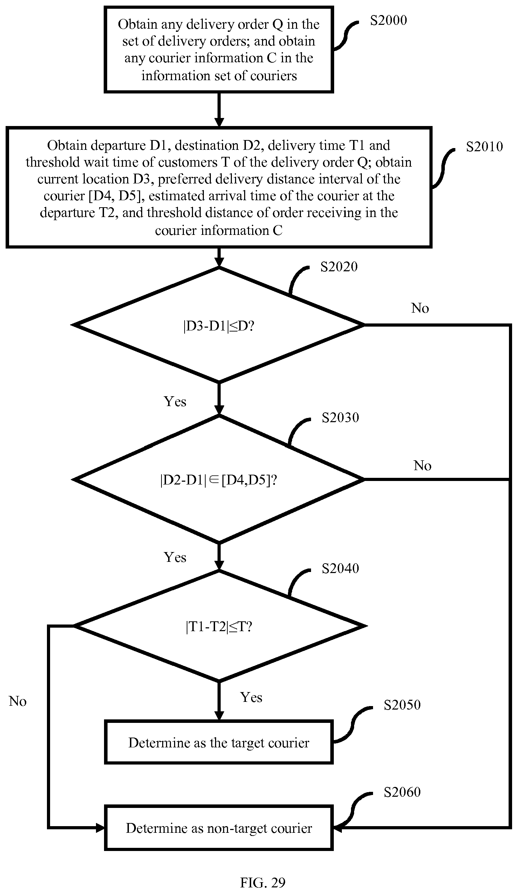

FIG. 29 is a flow chart illustrating an example of a process for determining a target courier according to some embodiments of the present disclosure.

In step S2000, a delivery order Q in the set of delivery orders and a courier information C in the information set of couriers received by the receiving module110 may be obtained.

In step S2010, a departure location D1, a destination D2, delivery time T1, and threshold wait time of a user T of the delivery order Q may be obtained. A current location D3, preferred delivery distance intervals of the courier [D4, D5], estimated arrival time of the courier at the departure location T2, and a threshold order distance D of the courier information C may be obtained.

In step S2020, information from the receiving module 110 may be received by the processing module 130. The information may further be determined by the processing module 130. Whether the distance between the current location of the courier D3 and the departure location D1 of the delivery order (denoted as |D3-D1|) is less than or equal to the threshold distance of order receiving D ($|D3-D1| \leq D$) may be determined. In response to determining that the distance between the current location of the courier D3 and the departure location D1 of the delivery order is less than or equal to the threshold distance of order receiving D, the determining process may proceed to step S2030. Alternatively, in response to determining that the distance between the current location of the courier D3 and the departure location D1 of the delivery order is greater than the threshold distance of order receiving D, the determining process may proceed to step S2060 and determine that the courier is not the target courier.

In step S2030, whether the delivery distance of the order (|D2-D1|) is within the preferred delivery distance interval of the courier ($|D2-D1| \in [D4, D5]$) may be determined. In response to determining that the delivery distance of the order (|D2-D1|) is within the courier the preferred delivery distance interval of the courier ([D4, D5]), the determining process may proceed to step S2040. Alternatively, in response to determining that the delivery distance of the order (|D2-D1|) is not within the preferred delivery distance interval of the courier ([D4, D5]), the determining process may proceed to step S2060 and determine that the courier is the target courier. The process may then conclude.

Herein, the departure location of the order may be the current location of a sender or a geographic location of a distribution center.

In step S2040, whether the difference between the estimated time T2 of the courier traveling from the current location to the departure location and the delivery time T1 is less than or equal to the threshold time of the customer waiting for T ($|T1-T2| \leq T$) may be determined. In response to determining that the difference between the estimated time T2 for the courier to travel from the current location to the departure location and that the delivery time T1 is less than or equal to the threshold time of the customer waiting T, the determining process may proceed to step S2050 and may determine that the courier is the target courier and ending the process. Alternatively, In response to determining that the difference between the estimated time T2 of the courier travelling from the current location to the departure location and the delivery time T1 is greater than the threshold time of the customer waiting for T, the determining process may proceed to step S2060 and determine that the courier is not the target courier.

It should be noted that sequence of steps S2020, S2030 and S2040 may be interchangeable. It is not necessary to implement all of the steps. For example, one or two of the three steps may be omitted according to practical requirements. The determination of a target courier for a delivery order in the further determination steps may not be affected. For example, whether a courier is the target courier for a delivery order Q may be determined simply by the criteria in S2020 and without further determining the criteria in the S2030 and/or S2040.

In step S2050, after the courier is determined as the target courier, the system may further send the information relating to the food order to the target courier.

Application Scenarios

The sender may firstly access to the application interface through his/her smart device, and then input his/her request information for delivery. The input methods may include handwriting input, voice input, keyboard input, etc. The request information for a delivery order may include: a sending time (09:30 a.m.), a sending address (Room 501, 5th floor, Dragon Electronic Mall, Zhongguancun, Haidian District, Beijing), the name of a sender (User A), a telephone number (123...45), and a recipient address (20th Xueyuan Road, Haidian District, Beijing). An order containing the above information may be generated by the server of a delivery service software.

| Order Number | Sender | Tel. | Sending Time | Sending Address | Recipient Address |
|---|---|---|---|---|---|
| 12001 | User A | 123...45 | 09:30 | Room 501, 5th floor, Dragon Electronic Mall | 20th Xueyuan Road, Haidian District, Beijing |

There may be various courier information stored in the server of delivery service. Two pieces of the courier information are shown in the following.

| Serial Number of Courier | Current Location | Preference Distance Interval | Estimated Arrival Time of Courier at Departure Location |
|---|---|---|---|
| 0012 | 10th Zhongguancun street | [0,3] | 20 |
| 0013 | 38th Zhongguancun street | [4,5] | 40 |

The server may match the order and the couriers according to the current information relating to the order and the courier. The courier (0012) is a target courier for the order (12001) according to the rules of determining a target courier. Thus, the server may assign the order (12001) to the courier (00121).

Some specific applications of the service distribution system in transportation service, food service and delivery service are described in the above embodiments. It should be noted that the examples or instances described above are not intended to limit the application fields or scenarios of the service distribution system. Under the teaching of the present disclosure, those skilled in the art may apply the technical ideas of the present disclosure to some other service fields, e.g., housekeeping service, or the like.

The above features and other variations and/or combinations of the above features may be utilized without departing the system and method defined in the claims. Thus, the descriptions of the exemplary embodiments are merely illustrative and not intended to limit the topic defined in the claims. It should also be understood that the embodiments (as well as clauses expressed as "such as," "for example," "including," etc.) are provided not to limit the topic defined in the claims to a particular embodiment. Instead, the embodiments are merely intended to illustrate some of the multiple possible aspects. Each feature of a given embodiment, alternative embodiment, or exemplary embodiment may be used in some other embodiments, alternative embodiments, or exemplary embodiments, unless it is clearly indicated to be to the contrary.

As used in this specification and the following claims, the singular forms "a," "an," and "the" may be intended to include the plural forms as well, unless the context clearly indicates otherwise. It will be further understood that the terms "comprises," "comprising," "includes," and/or "including" when used in this specification, specify the presence of steps and/or elements in the methods or devices, but do not preclude the presence or addition of one or more steps and/or elements thereof. In addition, as used in this specification and the following claims, the terms "within" includes: "in," and "on," unless the context clearly indicates otherwise.

It should be noted that the exemplary embodiments may be described as embodied in a flow chart, a data flow diagram, a structure diagram, or a block diagram. Although a flowchart may describe an operation as a sequential process, a number of operations may be performed concurrently, concomitantly, or simultaneously. In addition, the sequence of the operations may be rearranged. The process may be concluded when the operation of the process is completed, but the process may also have additional steps which are not included in the diagram. The process may correspond to a method, a function, a program, a subroutine, a subprogram, or the like. When the process corresponds to a function, the termination of the process may correspond to the return of an invoking function or main function.

Although in some embodiments of the corresponding drawings, the processor and memory are functionally illustrated as being within the same corresponding block. It will be understood for those skilled in the art that each of the devices, units or steps described above may be implemented by means of a universal computing device. Each of the devices, units or steps may be centralized in a single computing device (e.g., a service distributing device), or not. For example, receiving module, storage module and processing module may actually include multiple specific devices that are not in the same physical enclosure, such as a wireless transceiver, a memory, a processor, a microprocessor, or the like. Each module in the system according to the present disclosure may be distributed over a network of multiple computing devices. The network may have wired or wireless connections in an area, or be connected in different areas via a distributed network. Electively, each of the devices, units or steps may be implemented with program code executable by computing devices so that they may be stored in memory devices and executed by the computing devices. Each of the devices, units or steps may also be implemented with integrated circuit module respectively, or a single integrated circuit module including multiple modules or steps of them. Thus, the present disclosure is not limited to any particular combination of hardware and software.

The descriptions above are merely some alternative embodiments of the present disclosure and are merely intended to illustrate the technical ideas of the present disclosure. The purposes of the embodiments are to enable any person skilled in the art to understand and implement the present disclosure and are not intended to be limiting. Those skilled in the art may implement various modifications of the disclosed embodiments. All alterations, improvements, and modifications implemented under the teaching of the present disclosure are within the spirit and scope of the present disclosure.

**Claims**

1. A system for distributing orders, comprising:

    a receiving module configured to receive information relating to service provision from a service provider and information relating to service request from a service user;
    a storage module configured to store the information relating to service provision and the information relating to service request received by the receiving module; and
    a processing module configured to process the information relating to service provision and the information relating to service request stored in the storage module in order to obtain a feature result;

        i) in response to determining that the feature result satisfies at least one criterion, determine that the information relating to service request is to be sent to the service provider; and
        ii) in response to determining that the feature result does not satisfy any criterion, determine that the information relating to service request is not to be sent to the service provider;

    wherein the information relating to service request comprises at least two geographic locations.

2. The system of claim 1, wherein the system further comprises an output module configured to provide the service provider with the information relating to service request when the information relating to service request is determined to be sent to the service provider.

3. The system of claim 1, wherein the processing module comprises a criteria storage unit configured to store the at least one criterion.

4. The system of claim 1, wherein the information relating to service provision comprises current information relating to the service provider.

5. The system of claim 4, wherein the current information relating to the service provider comprises positioning and motion information relating to the service provider.

6. The system of claim 5, wherein the positioning and motion information relating to the service provider comprises location information relating to the service provider.

7. The system of claim 5, wherein the positioning and motion information relating to the service provider comprises speed information relating to the service provider.

8. The system of claim 7, wherein the speed information relating to the service provider comprises the direction of motion of the service provider.

9. The system of claim 1, wherein the receiving module is further configured to receive information from an information source.

10. The system of claim 1, wherein the at least one criterion is selected from at least one of:

    parameter indicating a response to the service request by the service provider;
    parameter indicating an activity of the service provider;
    distances from a location of resident place of the service provider to the geographic locations; or
    angles between a direction of motion of the service provider and a vector representative of a line between the geographic locations.

11. A service distribution method, comprising:

    receiving information relating to service provision from a service provider and information relating to service request from a service user by a receiving module;

storing the information relating to service provision and the information relating to service request received by the receiving module in a storage module;

processing, by a processing module, the information relating to service provision and the information relating to service request stored in the storage module in order to obtain a feature result, i) in response to determining that the feature result satisfies at least one criterion, determine that the information relating to service request is to be sent to the service provider; and ii) in response to determining that the feature result does not satisfy any criterion, determine that the information relating to service request is not to be sent to the service provider;

wherein the information relating to service request comprises at least two geographic locations.

12. The method of claim 11, further comprising:

providing, by an output module, the service provider with the information relating to service request, when the information relating to service request is determined to be sent to the service provider.

13. The method of claim 11, wherein the information relating to service provision comprises current information relating to the service provider.

14. The method of claim 13, wherein the current information relating to the service provider comprises positioning and motion information relating to the service provider.

15. The method of claim 14, wherein the positioning and motion information relating to the service provider comprises location information relating to the service provider.

16. The method of claim 14, wherein the positioning and motion information relating to the service provider comprises speed information relating to the service provider.

17. The method of claim 16, wherein the speed information relating to the service provider comprises a direction of motion of the service provider.

18. The method of claim 11, further comprising:

receiving information from an information source by the receiving module.

19. The method of claim 11, wherein the at least one criterion may be selected from at least one of:

parameters indicating a response to the service request by the service provider;
parameters indicating an activity of the service provider;
distances from the location of resident place of the service provider to the two geographic locations; or
an angle between a direction of motion of the service provider and a vector representative of a line between the geographic locations.

20. The method of claim 11, further comprising:

assigning a score to the information relating to service request by the processing module.

21. The method of claim 20, further comprising:

sending the score to the service provider after the service provider completes the service request.

FIG. 1

FIG. 2

110

Receiving module

120

Storage module

130

131

Processor

132

Controller

133

Criteria storage unit

FIG. 3

133

| Service coverage criteria | 1331 |

| Service provider's activity criteria | 1332 |

| Order snatching probability criteria | 1333 |

| Road obstacle criteria | 1334 |

| Route similarity criteria | 1335 |

| Other criterion | 1336 |

FIG. 4

Acquire current information of an order — S100

Acquire current information relating to service providers — S110

Calculate the current information of the order and the current information relating to the service providers to obtain a featured result — S120

Does the featured result satisfy at least one criterion? — S130

No

Yes

Push the order to the service providers — S140

Not push the order to the service providers — S150

FIG. 5a

```
┌─────────────────────────────┐
│  Acquire current information │  ⌐ S105
│        of an order          │
└─────────────────────────────┘
              │
              ▼
┌─────────────────────────────┐
│  Acquire current information │  ⌐ S115
│  relating to service         │
│  providers                   │
└─────────────────────────────┘
              │
              ▼
┌─────────────────────────────┐
│  Acquire external information│  ⌐ S125
└─────────────────────────────┘
              │
              ▼
┌─────────────────────────────┐
│  Calculate the current       │
│  information of the order,    │  ⌐ S135
│  the current information      │
│  relating to the service      │
│  providers and the external   │
│  information to obtain a      │
│  featured result              │
└─────────────────────────────┘
              │
              ▼
         ◇ Does the featured result        ⌐ S145
           satisfy at least one
              criterion? ◇
         │                │
     No  │                │  Yes
         │                ▼
         │      ┌─────────────────────────────┐
         │      │  Push the order to the      │  ⌐ S155
         │      │  service providers          │
         │      └─────────────────────────────┘
         │
         ▼
┌─────────────────────────────┐
│  Not push the order to the  │  ⌐ S165
│  service providers          │
└─────────────────────────────┘
```

FIG. 5b

Acquire trace information relating to a service
provider within a preset period and form an
information set of the service provider

S200

Calculate the resident place of the service
provider within the preset period according to
the information set of the service provider

S210

FIG. 6

```
┌─────────────────────────────────────────┐
│ Acquire n longitude-latitude coordinates │   S300
│ expressed by A1, A2,…, An within a       │
│ preset time period and form an           │
│ information set and designate A1, A2,…,   │
│ An as candidate resident places          │
└─────────────────────────────────────────┘
                    │
                    ▼
┌─────────────────────────────────────────┐
│ Calculate a total distance Di between Ai │   S310
│ and all other resident places and omit   │
│ a place with a maximum Di                │
└─────────────────────────────────────────┘
                    │
      No            ▼
      ◄────────◇ The number                  S320
               of remaining candidate resident
               places less than 0.5n
                    │
                    │ Yes
                    ▼
               ◇ Is there a                   S330
               distance between any two
               of the candidate resident places
               greater than a preset
      Yes       threshold value ?
      ◄────────◇
                    │ No
                    ▼
┌─────────────────────────────────────────┐
│ Calculate an average of remaining        │   S340
│ candidate resident places in order to    │
│ acquire a resident place                 │
└─────────────────────────────────────────┘

┌─────────────────────────────────────────┐
│                                          │   S350
│ No resident place of the driver          │
└─────────────────────────────────────────┘
```

FIG. 7

501

502

504

503

506

505

507

508

510

509

511

512

FIG. 8

Acquire N terms of service information relating to a service provider within a preset time period T and form a service information set — S400

Divide the time period T into m sub-periods, recorded as $t_1$, $t_2$, ..., $t_m$ — S410

Calculate service times within each sub-period, recorded as $n_1$, $n_2$, ..., $n_m$ — S420

Determine the maximum $n_k$ among $n_i$ ($1 \leq i \leq m$) and calculate the corresponding $t_k$ — S430

Tk is considered as a busy period of the service provider — S440

FIG. 9

Receive information containing displayname and/or detailed address — S500

Is the information a single text mixed by the displayname and the detailed address? — S510

No

Yes

Divide the single text into displayname and detailed address — S520

Display the adapted information containing the displayname and the detailed address — S530

FIG. 10

Receive information containing displayname and/or detailed address — S600

S605 — Is there a landmark in the information?

Yes

No — S610 — Is there a general place name in the displayname?

Yes

No — S615 — Is there "路", "街", "道" in the displayname or is the character more than 8?

S620

Yes — Empty the detailed address

S625 — displayname + detailed address

No

Correlate the displayname with a longitude-latitude coordinate calculate distance between departure location and destination. — S630

S635 — Distance between a departure location and destination is greater than a preset value.

Yes

No — S640 — Acquire information relating to business area or not?

No

Yes — Set the detailed address as business district — S645

No — S650 — Acquire district, street, or not?

Yes — Set the detailed address as "district plus street" — S655

FIG. 11

66

Receive information containing displayname and/or detailed address — S700

Is there a city name in the detailed address? — S710

No

Yes

Omit the city name — S720

Is there a house number in the detailed address? — S730

No

Yes

Omit the house number — S740

Output the processed address — S750

FIG. 12

A drivder Dx snatches an order — S800

Acquire the rank of the driver Dx in the ranking D1>D2>...>Dn — S810

Calculate an auction time tx — S820

S840

Conclude and notify the driver Dx of the success and notify other drivers of the failure

Yes

Is tx equal to 0? — S830

No

Notify the driver Dx+1, ..., Dn of the failure in the aution and notify the driver D1, ..., Dn-1 of further auction and auction time — S850

FIG. 13

S900

Obtain information relating to an
order

S910

Calculate a score of the order

S920

Receive information relating to a
driver obtaining and performing the
order

S930

Yes

Is there an
abnormal event?

No

S940

With the order completed, assign
the calculated score of the order

S950

With the order not completed, do
not assign the calculated score of
the order

FIG. 14

Select an order Q from the set of
car-hailing orders and select
information relating to a taxi C
from the information set of taxis
S1000

Obtain departure time T of the order Q, order distance D, departure
time Tout of the taxi in the taxi information C, threshold drive-out
time TYout of the taxi, distance Dout between the departure
location of the order Q and the drive-out location of the taxi,
threshold drive-out distance DYout of the taxi and the threshold
times of drive-out distance Kout
S1010

S1020

$|T-Tout| \leq TYout$?

No

Yes

S1030

Dout≤DYout or
D≥Kout*DYout?

No

Yes

S1040

Determine as a drive-out
hitchhiking

S1050

Determine as a non drive-out
hitchhiking

FIG. 15

FIG. 16

Obtain historical information set of car-hailing orders and/or historical information set of taxies; search records of driver A — S1200

— S1210

In time period T1, the driver A has records in the historical information set of taxies and no record in the historical information set of car-hailing orders

Yes

No

The driver A has no record in time period T2 and has records in time period T3 in the historical information set of taxis — S1220

No

The number of order-accepting by the driver A in the historical information set of car-hailing orders in time period T4 is no more than 1/10 to1/2 of the average number of order-accepting by all drivers — S1230

Yes

Yes

No

Determine driver A as an active driver — S1240

Determine driver A as an inactive driver — S1250

Record driver A into the set of inactive drivers — S1260

FIG. 17a

Receive information relating to the order and the driver A — S1204

Is it a high-quality order? — S1214
No
Yes

Is the order locked? — S1224
Yes
No

Broadcast information relating to the order to driver A — S1234
Yes

Driver A is inactive — S1244
No
Yes

Lock the order and set a locked time — S1254
Yes
No

Is the locked time expired? — S1264
Yes
No

FIG. 17b

Collect information relating to an obstacle; the departure location is $P_1$, and the destination is $P_2$ — S1300

Receive a car-hailing order Q; the departure location of the order Q is P3 — S1310

Receive information relating to a taxi C; the current location of the taxi C is P4 — S1320

Does P1P2 and P3P4 intersect? — S1330

No

Yes

Taxi C needs to cross the obstacle P1 P2 during executing the order Q — S1340

Taxi C does not need to cross the obstacle P1 P2 during executing the order Q — S1350

FIG. 18

P4

P1

P3                                                                    P2

FIG. 19

P4

P1

P3

P2

FIG. 20

P4

P1

P2

P3

FIG. 21

S1400

Obtain the departure location and destination of an order; calculate a connecting line direction of the departure location and the destination

S1410

Obtain the driving direction of a driver

S1420

Calculate an angle between the connecting line direction of the departure location and destination of the order and the driving direction of the driver

S1430

Yes

Is the angle less than a preset threshold angle?

No

S1440

Determine that the order is not a route similar order

S1450

Determine that the order is a route similar order

FIG. 22

FIG. 23

```
┌─────────────────────────────────────────┐
│  Obtain information relating to an order,  │ ⌇ S1500
│  including departure location and          │
│  destination; calculate the               │
│  displacement direction of the order       │
└─────────────────────────────────────────┘
                    │
                    ▼
┌─────────────────────────────────────────┐
│                                           │ ⌇ S1510
│    Obtain the driving direction of a driver │
│                                           │
└─────────────────────────────────────────┘
                    │
                    ▼
┌─────────────────────────────────────────┐
│  Calculate an angle between the            │ ⌇ S1520
│  displacement direction of the order and   │
│  the driving direction of the driver       │
└─────────────────────────────────────────┘
                    │
                    ▼
           ◇─────────────────◇
Yes       ╱  Is the angle less   ╲            ⌇ S1530
◄────────╱   than a preset       ╲
          ╲  threshold angle?    ╱
           ◇─────────────────◇
                    │ No
                    ▼
┌─────────────────────────────────────────┐
│                                           │ ⌇ S1540
│  Determine that the order is not a route   │
│  similar order                            │
└─────────────────────────────────────────┘

┌─────────────────────────────────────────┐
│                                           │ ⌇ S1550
│  Determine that the order is a route       │
│  similar order                            │
└─────────────────────────────────────────┘
                    │
                    ▼
┌─────────────────────────────────────────┐
│  Display the information relating to the   │ ⌇ S1560
│  order to the driver                      │
└─────────────────────────────────────────┘
```

FIG. 24

Obtain at least one feature of historical orders and response to the historical orders by the service provider — S1600

Obtain a response to whether to choose a historical order by the service provider — S1610

Assign a weight to at least one feature according to the response to the historical order by the service provider — S1620

Assign a weight to at least one feature according to the feature of the historical order and the response to whether to choose a historical order by the service provider — S1630

Obtain the feature of a current order — S1640

Select the current order to be presented to the service provider from the current orders according to the weight corresponding to the current order — S1650

Determine the probability of the service provider selecting the current order according to the feature of the current order and the weight corresponding to the current order's feature — S1660

Select the current order with the highest probability of being selected by the service provider as the current order to be presented to the service provider — S1670

Update the weight corresponding to the current order based on the character of the current order to be presented to the service order and the response to the current order by the service provider — S1680

FIG. 25

S1700

Obtain a distance between the departure location and
the destination of a current order

S1710

Assort the distance into an order distance interval

S1720

Obtain order snatching probabilities of a driver for
historical orders within the distance interval

S1730

Yes

Is the snatching
probability greater than a
threshold probability?

No

S1740

Not push the information relating to the order to the
driver

S1750

Push the information relating to the order to the driver

FIG. 26

Obtain information relating to multiple historical orders
that are pushed to a driver, the multiple historical order
information include distances of multiple historical
orders

S1800

Assort the multiple historical orders into multiple order
sets based on the distance intervals

S1810

Calculate order snatching probabilities of the driver for
different order sets

S1820

Generate a vector of the order snatching probability

S1830

Store the vector of the order snatching probability

S1840

FIG. 27

Obtain any food order Q in the set
of food orders; and obtain any
restaurant information C in the
information set of restaurants

S1900

Obtain delivery address D1, delivery time T1, food type y and
range of acceptable price X1 of the food order Q; and obtain
business hours [T2, T3], restaurant address D2, food type set Y,
range of food price X2, threshold distance D and threshold price X
of the restaurant information C

S1910

S1920

$|D2-D1| \leq D$ and
$T2 \leq T1 \leq T3$?

No

Yes

S1930

$y \in Y$?

No

Yes

S1940

$X1 \cap X2 \neq \emptyset$?

No

Yes

Determine the restaurant as the
target restaurant

S1950

Determine the restaurant not as
the target restaurant

S1960

FIG. 28

Obtain any delivery order Q in the set of delivery orders; and obtain any courier information C in the information set of couriers — S2000

Obtain departure D1, destination D2, delivery time T1 and threshold wait time of customers T of the delivery order Q; obtain current location D3, preferred delivery distance interval of the courier [D4, D5], estimated arrival time of the courier at the departure T2, and threshold distance of order receiving in the courier information C — S2010

S2020

$|D3\text{-}D1|{\leq}D?$

No

Yes

S2030

$|D2\text{-}D1|{\in}[D4,D5]?$

No

Yes

S2040

$|T1\text{-}T2|{\leq}T?$

No

Yes

Determine as the target courier — S2050

Determine as non-target courier — S2060

FIG. 29

<table>
<tr><td colspan="2"><strong>INTERNATIONAL SEARCH REPORT</strong></td><td>International application No.<br><strong>PCT/CN2015/086075</strong></td></tr>
</table>

**A. CLASSIFICATION OF SUBJECT MATTER**

G06Q 10/06 (2012.01) i; G06Q 50/30 (2012.01) i; G08G 1/00 (2006.01) i

According to International Patent Classification (IPC) or to both national classification and IPC

**B. FIELDS SEARCHED**

Minimum documentation searched (classification system followed by classification symbols)

G06Q 10; G06Q 50; G08G 1

Documentation searched other than minimum documentation to the extent that such documents are included in the fields searched

Electronic data base consulted during the international search (name of data base and, where practicable, search terms used)

CNABS, CNTXT, VEN, CJFD, CNKI: service, send orders, distribute, send down, push, call taxi, book a car, take a taxi, GPS, integral, taxi, vechile, car, transportation, dispatch+, allocat+, call+, booking, reserv+, destination, termini, loacat+, position, mov+, velocity, speed, direction, orientation, activ+, vital+

**C. DOCUMENTS CONSIDERED TO BE RELEVANT**

| Category* | Citation of document, with indication, where appropriate, of the relevant passages | Relevant to claim No. |
|---|---|---|
| X | CN 103218769 A (WANG, Xingjian), 24 July 2013 (24.07.2013), description, paragraphs [0030]-[0044] and [0058]-[0059], and figures 1-9B | 1-6, 11-15 |
| Y | CN 103218769 A (WANG, Xingjian), 24 July 2013 (24.07.2013), description, paragraphs [0030]-[0044] and [0058]-[0059], and figures 1-9B | 7-10, 16-21 |
| PY | CN 104574947 A (BEIJING DIDI INFINITY TECHNOLOGY AND DEVELOPMENT CO., LTD.), 29 April 2015 (29.04.2015), claim 1, and description, paragraph 0057 | 7, 8, 10, 16, 17, 19 |
| PY | CN 104715426 A (BEIJING DIDI INFINITY TECHNOLOGY AND DEVELOPMENT CO., LTD.), 17 June 2015 (17.06.2015), claim 1 | 9, 10, 18, 19 |
| PY | CN 104157133 A (BEIJING DIDI INFINITY TECHNOLOGY AND DEVELOPMENT CO., LTD.), 19 November 2014 (19.11.2014), claim 1 | 10, 19 |

☒ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 November 2015 (04.11.2015) | **17 November 2015 (17.11.2015)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LIU, Nan**<br><br>Telephone No.: (86-10) **010-62085796** |

Form PCT/ISA/210 (second sheet) (July 2009)

## INTERNATIONAL SEARCH REPORT

| International application No. |
| --- |
| **PCT/CN2015/086075** |

**C (Continuation).**     **DOCUMENTS CONSIDERED TO BE RELEVANT**

| Category* | Citation of document, with indication, where appropriate, of the relevant passages | Relevant to claim No. |
| --- | --- | --- |
| PY | CN 104156868 A (BEIJING DIDI INFINITY TECHNOLOGY AND DEVELOPMENT CO., LTD.), 19 November 2014 (19.11.2014), claim 1 | 20, 21 |
| A | CN 102737501 A (CHINA UNITED NETWORK COMMUNICATIONS CORPORATION LIMITED), 17 October 2012 (17.10.2012), the whole document | 1-21 |
| A | JP 2013076643 A (HITACHI SOLUTIONS LTD.), 25 April 2013 (25.04.2013), the whole document | 1-21 |

Form PCT/ISA/210 (continuation of second sheet) (July 2009)

**INTERNATIONAL SEARCH REPORT**
Information on patent family members

International application No.

**PCT/CN2015/086075**

| Patent Documents referred in the Report | Publication Date | Patent Family | Publication Date |
|---|---|---|---|
| CN 103218769 A | 24 July 2013 | None | |
| CN 104574947 A | 17 June 2015 | None | |
| CN 104715426 A | 17 June 2015 | None | |
| CN 104157133 A | 19 November 2014 | None | |
| CN 104156868 A | 19 November 2014 | None | |
| CN 102737501 A | 17 October 2012 | CN 102737501 B | 04 February 2015 |
| JP 2013076643 A | 25 April 2013 | None | |

Form PCT/ISA/210 (patent family annex) (July 2009)

**REFERENCES CITED IN THE DESCRIPTION**

**Patent documents cited in the description**

- CN 201410379713
- CN 201410397679
- CN 201410409108
- CN 201410413040
- CN 201410418423
- CN 201410421805
- CN 201410437102 X
- CN 201410705608
- CN 201510020526
- CN 201510163063